Europäisches Patentamt

European Patent Office

Office européen des brevets

(19)

(11) **EP 1 482 243 A1**

(12) **EUROPEAN PATENT APPLICATION**
published in accordance with Art. 158(3) EPC

| | |
|---|---|
| (43) Date of publication:<br>**01.12.2004 Bulletin 2004/49** | (51) Int Cl.⁷: **F23G 7/04**, F23G 5/02,<br>**F23G 5/50**, C02F 1/02 |
| (21) Application number: **03703260.4** | (86) International application number:<br>**PCT/JP2003/001321** |
| (22) Date of filing: **07.02.2003** | (87) International publication number:<br>**WO 2003/067151 (14.08.2003 Gazette 2003/33)** |

| | |
|---|---|
| (84) Designated Contracting States:<br>**AT BE BG CH CY CZ DE DK EE ES FI FR GB GR HU IE IT LI LU MC NL PT SE SI SK TR**<br><br>(30) Priority: **08.02.2002 JP 2002032822**<br><br>(71) Applicant: **Sekiguchi Co., Ltd.**<br>**Maebashi-shi, Gunma 371-0034 (JP)**<br><br>(72) Inventors:<br>• **SEKIGUCHI, Shinichi**<br>**Bunkyo-ku, Tokyo 112-0011 (JP)** | • **SATAKE, Kazuhiko**<br>**Chiyoda-ku, Tokyo 100-8321 (JP)**<br>• **KOIDE, Kiemon**<br>**Sodegaura-shi, Chiba 299-0205 (JP)**<br>• **ISEYA, Akira**<br>**Sodegaura-shi, Chiba 299-0205 (JP)**<br><br>(74) Representative: **Appelt, Christian W. et al**<br>**FORRESTER & BOEHMERT**<br>**Anwaltssozietät**<br>**Pettenkoferstrasse 20-22**<br>**80336 München (DE)** |

(54) **METHOD OF INCINERATING WASTE LIQUID UTILIZING INDUSTRIAL COMBUSTION EQUIPMENT, AND MIXED LIQUID**

(57)     By examining a pre-application inspection item 171, a pre-application prerequisite item 172, and an application examination item 173, and then performing a post-application operation item 174 and a check item 175, a dioxin producing environment can be eliminated, so that dioxin can be prevented from occurring in the incinerating treatment of waste liquid utilizing the industrial combustion equipment.

FIG.3

EP 1 482 243 A1

## Description

## Technical Field

The present invention relates to method of incinerating waste liquid utilizing industrial combustion equipment, and mixed liquid.

## Background Art

Conventionally, waste liquid etc. as a by-product of a generating thing is generated from the place like a factory etc in which industrial activity is performed. Although it is common that incineration disposal is mainly carried out with waste incineration equipment etc. as for waste liquid, its definition, the processing method, processing equipment, etc will be explained. Furthermore, in addition to these, various equipment, technology, etc. used for the industrial combustion equipment utilized when combustion disposal of the waste liquid is carried out by the present invention, its composition, and each correspondence against dioxin or a pollution ingredient are mentioned below.

[Waste Liquid]

First, waste liquid is a side product created with industrial activity of production facilities, such as a factory, a medical treatment, a research organization, etc., and it is the substance which the counter value of the contained thermal energy-value converted into fuel cannot be sold as a value more than equivalent to fuel, and specifically refers the form of liquid among substances that their most rational processing method is by disposing with effective means such as incineration, reclamation, and wastewater treatment in generally performing waste processing.

Then, the waste liquid is further classified into the inorganic waste liquid including the inorganic acid, the base, salts, and the organic waste liquid including organic acid, a base, organic compound, etc. Here, since inorganic waste liquid is purified comparatively easily by processing of neutralization precipitation etc., it is difficult to become a serious obstacle to the environment.

However, although in the case of organic waste liquid it may be able to purify by the biological processing method when its concentration is low, the processing is difficult when containing waste liquid with high concentration or the ingredient unsuitable for biological processing.

Further, organic waste liquid is broadly classified into three kinds, the one which is spontaneously mixed with the hydrophilic water, the one which is spontaneously mixed with the lipophilic nature oil, and the one that the emulsion type water and oil have changed into the emulsification state, and the hydrophilic one is particularly called waste liquid, and the lipophilic one is called waste liquids.

Next, an outline about the processing method of the conventional waste liquid will be explained. The waste in a factory as industrial waste is mainly taken over by an industrial waste treatment company, and an industrial waste contractor landfills, and it is disposed of by such methods as evaporation drying, incineration by the incinerator. Moreover, some of the facilities are performing incineration disposal in their own incinerator within their company.

In addition, although the point differs from waste liquid a little, since the crude alcohol made from cellulose such as a plant, etc. and sugar, etc. can be used as heat resources safely and rationally by the application of this technology without being accompanied by a large change of an industrial combustion equipment, it is no problem that it is regarded as a same definition in these detailed lists.

Moreover, the emulsion-use water is usually the water used as the water for the usual emulsion fuel, such as tap water, water for industrial use, groundwater, river water, rain water, and so on, and since it derives the same problem as waste liquid does although depending on its component, pH or oxidization-reduction potential, etc., it is considered that many problems of those application are simultaneously solvable by the present invention.

[Waste Liquid Incinerator]

The waste incinerator that disposes of waste liquid is especially called waste liquid incinerator. The waste liquid incinerator has in principle a main burner which sprays fuel with self-inflammability, and this main burner also serves the action as the pilot lamp for the temperature maintenance in a furnace and the waste liquid that has flammability.

The waste liquid is sprayed in the shape of a fog into the furnace at which combustion by this main burner is performed. At this moment, the waste liquid with flammability forms the secondary flame, and as for the waste liquid without flammability the organic matters is thermally decomposed by an oxidation reaction after moisture has evaporated.

Although there were once many forms of performing the furnace temperature maintenance at a grade of only evaporating waste liquid, the furnace temperature maintenance standard is tighten up now, obliging to maintain combustion furnace temperature at 800 degrees or more.

[Industrial Combustion Equipment]

Industrial combustion equipment is a general term of equipment which uses the thermal energy accompanying a combustion reaction as industrial energy for a certain purpose. It is classified mainly according to the pressure in a combustion chamber and whether it is continuous combustion or intermittent combustion.

[Industrial Combustion Equipment with Combustion Chamber in Pressure near Atmospheric Pressure]

It is the combustion equipment mainly performing combustion with the furnace pressure between atmospheric pressure and 0.01MPa(s) by the ventilation means called fan, and mainly uses the thermal energy as heat. In principle all has the operation form of continuous combustion.

(Boiler)

It is the one that heats up the heating medium such as water and heating medium oil, and uses the indirect heating by the heating medium in the manufacture process. There are a steam boiler, a warm water boiler, a heating medium boiler, etc. Moreover, an absorption type freezer etc. goes into this classification.

(Furnace for Industrial Use)

It processes the product by giving direct thermal energy to a product, and is used when temperature is low by indirect overheating by the above-mentioned the heating medium. There are a calcination furnace, a dissolution furnace, a dry furnace, a heating furnace, etc.

[Industrial Combustion Equipment with Combustion Chamber with Twice or Bigger Pressure of Atmospheric Pressure]

It is the combustion equipment that compresses the air with the compressor mainly called a compressor and piston, performs combustion in a furnace with the pressure several times or larger than atmospheric pressure, and aims at transforming the movement energy among its thermal energy owned by the gas into the mechanical energy.

(Gas Turbine Engine)

Its characteristic is to perform continuous combustion, and it generates electricity and utilizes mechanical energy by rotating the windmill called turbine with the movement energy having a high-pressure exhaust gas. System-wide thermal efficiency is gathered in many cases by heat collection of the exhaust gas by the equipment using a heating medium generally called a waste heat boiler.

(Diesel Engine)

It is characterized by intermittent combustion, and it obtains the mechanical energy by performing self-burning by injecting fuel in the hot compressed air pressurized by the piston to a few Mpa and depressing piston by the expansion energy of the gas by the combustion heat. Although the conversion efficiency which produces mechanical energy from fuel is superior, system-wide thermal efficiency is inferior to a gas turbine engine since it needs to cool a cylinder and a piston.

(Direct Injection Gasoline Engine)

Although it is characterized by intermittent combustion, and injects fuel into the compressed air as diesel engine does, in principle the injected fuel does not performs self-burning, but by the pilot fire called spark plug a heat reaction is generated.
Nowadays, for the improvement of the fuel expense and the measures against low NOx, there is a strong tendency that it performs combustion not by diffusion combustion but based on the theory near the premixed combustion by the adjustment of the mixing method of fuel and air, and injection timing and ignition timing.

[Industrial Combustion Equipment with Flexible Combustion Load Depending on Demanded Thermal Energy]

It represents: for a steam boiler, a steam pressure change in a process according to the amount of steam demands; for the warm water boiler and a heating medium, the feature that the amount of combustion changes or stops automatically by the warm water according to heat consumption in a process or temperature change of the heating medium, and for boiler; and for the case that the use form of thermal energy is electric power, the feature that the amount of fuel changes or stops according to the electric power demanded in the process.
Moreover, for the various industrial furnaces, it has the feature that controls or stops the amount of combustion according to the target product of heating or the atmosphere temperature in a furnace, etc.

(Example of Boiler Composition)

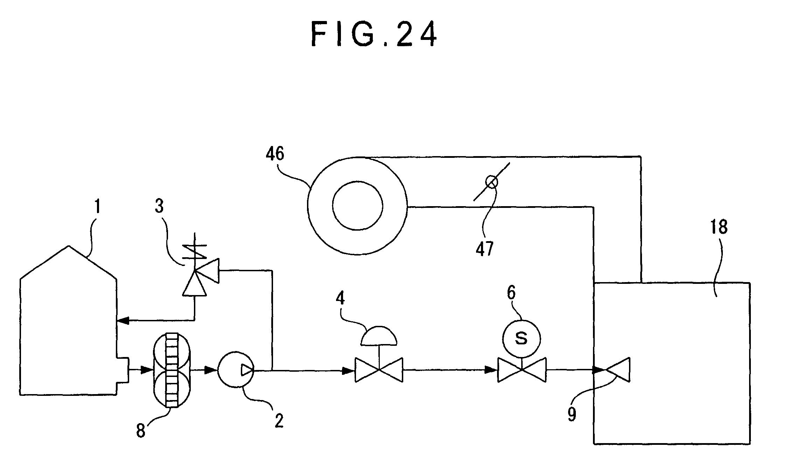

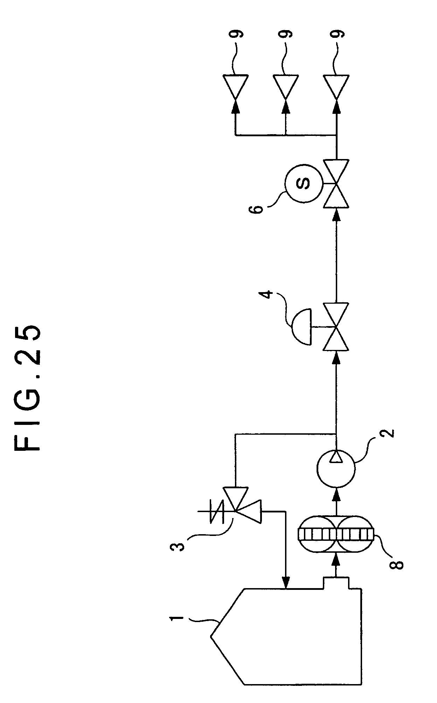

Fig. 24 is the example of composition of the circumference of the liquid fuel supply line of the combustion means of the proportion control type boiler of the small-media capacity. Moreover, Fig. 25 is the example of composition of the fuel supply line for boilers with two or more burners often set in a large-capacity boiler. Although there is the difference whether the number of burners is one or plurality, it is characterized by the feature that fuel pressurized with the fuel pump 2 is flux-controlled by the fuel flux adjustment valve 4, and the control signal is a steam pressure power signal of a boiler, and that it moves simultaneously with the divergence control of a damper 47 which controls the amount of ventilation.
As for the small-media capacity boiler, although a fuel flux adjustment valve and the divergence control of and a damper are in many cases mechanically connected through the cam mechanism etc., as for a large-capacity boiler, it is usually controlled electrically or by air pressure, etc. using the PID circuit called cascade control and its actuator.

Since Fig. 25 is the same as Fig 24, the line of a fan is excluded in Fig. 25.

(Example of Calcination Furnace Composition)

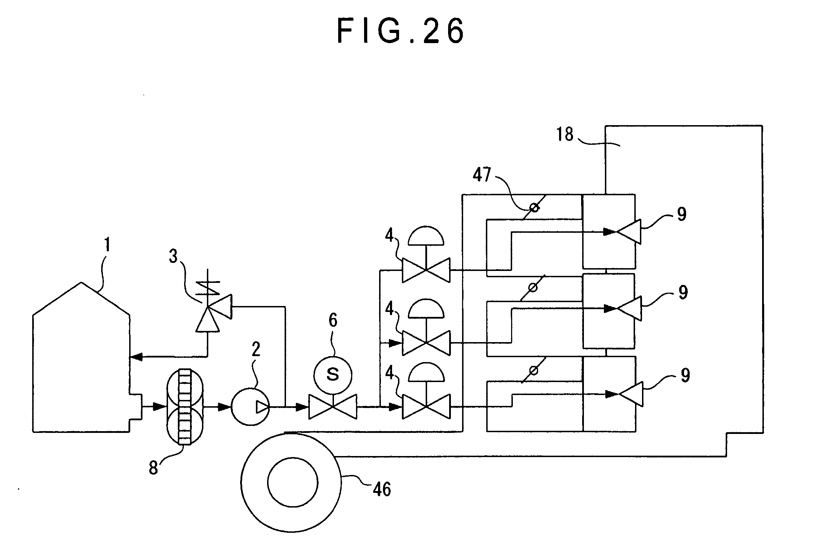

Fig. 26 is the example of composition of the liquid fuel supply line of the inner calcination furnace of an industrial furnace. Since a calcination object is supplied from a top and what calcination finished was discharged from the lower part, the ventilation by the fan is supplied from a lower ventilation mouth in order to cool the product which calcination ended.

However, since a burner part also needs ventilation for making itself form a flame, the branched ventilation duct is arranged at a combustion means. Although the fuel adjustment valve and the damper of each combustion means are controlled in order to keep the amount of ventilation optimal according to the amount of combustion, it is characterized by the feature that each of the combustion means, the fuel adjustment valve, and the damper are independent to one burner unlike a boiler.

One of the features of the industrial furnace is that it performs combustion in the relatively calm combustion chamber in the pressure which is almost equivalent to atmospheric pressure or little bit smaller and uses a flame or combustion gas for uses for heating of a direct product and drying.

Another point is that since many control objects of combustion amount are not the control objects that can be grasped as a whole amount of a combustion amount like steam pressure and it is often necessary to individually perform temperature control of a part being heated by the flame or combustion gas as shown in Fig. 26.

Although there are various kinds of a industrial furnace, it is the equipment set as the object of the present invention that has a combustion means to use liquid fuel in principle, is equipped with the above-mentioned characteristic, and mainly performs control of the amount of combustion and ON/OFF by making the control object of temperature.

(Example of Gas Turbine Composition)

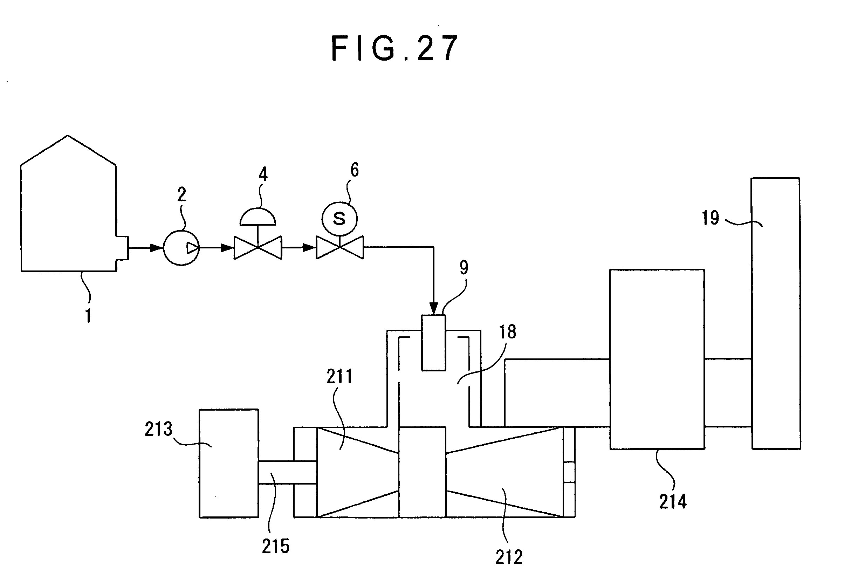

Fig. 27 is the example of composition of a gas turbine dynamo with a liquid combustion means. In a gas turbine engine, by the compressor 211, air is compressed into about 5-15 times and the compressed air is sent to the combustion chamber 18, and at the same time the circumference of the burner is cooled.

Since compression by the compressor is a heat insulation compression in theory and has high-pressure air which has the temperature around 300-600 degrees, it has good conditions in order to bum.

Fuel pressurized by the fuel pump 2 is sprayed by the burner 9 via the fuel flux adjustment valve 4, and is burned under the high-pressure high temperature air mentioned. Since the volume of combustion gas expands as a temperature rises with combustion, maintaining the pressure of a burner, this energy is transformed into the energy which rotates a turbine 212.

The rotation energy of a turbine is transmitted to a principal axis, produces the driving force of the above-mentioned compressor, and also is transformed into electric power by the dynamo 213. As torque is changed according to the amount of power generation, the speed of a principal axis tends to change, the method of controlling the amount of combustion of the above-mentioned fuel flux adjustment valve, adjusting rotation speed by adjusting the amount of combustion, and performing electric power adjustment is common.

(Example of Diesel Engine Composition)

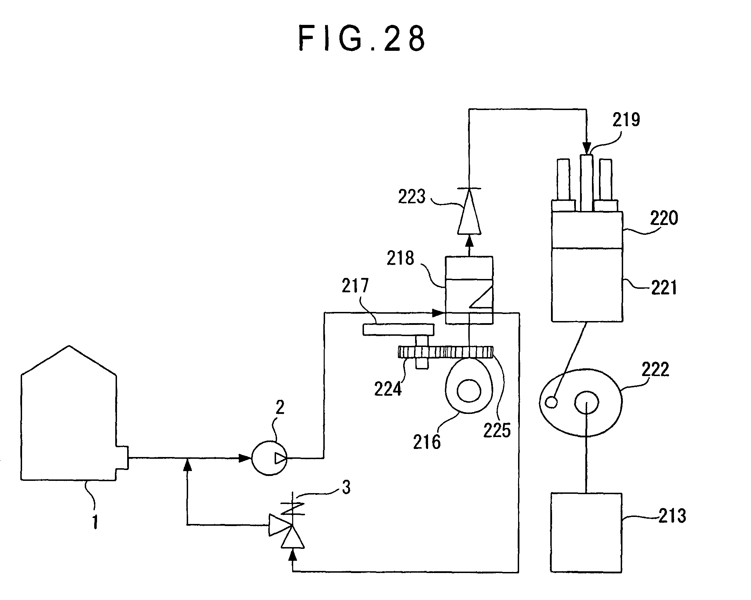

Fig. 28 is the example of composition of the fuel system of a diesel engine. It forms the circulation circuit that the fuel pressurized by the fuel pump 2 is given the fuel pressure control with the fuel pressure adjustment valve 3 via the injection pump 218 and returns to a fuel pump again.

A diesel engine compresses air by a change of the space capacity which a cylinder 220 and a piston 221 form, in that compressed air, it can be given reciprocating motion by the fuel cam 216 which has synchronized with the rotation speed of a crankshaft 222, and outputs combustion energy outside as the movement energy through a crankshaft by injecting the high-pressure fuel in the injection pump 218 which performs a pump action by the injection valve 219.

It is the system which uses the movement energy concerned and supplies electric power in a dynamo 213 in this example of composition. As power generation load changes, torque changes too. In the amount of the same combustion, since the change appears as change of rotation speed, you need to keep the rotation speed constant.

In order to set the rotation speed constant, although it is omitted in this figure, there is a speed adjustment equipment called governor and this operates a control rack through the locker arm 217. The control rack rotates a control pinion interlocked with the plunger axis in an injection pump. There is a slot called 'lead' in the plunger of an injection pump, and the relative position of this lead and the hole opened to the cylinder of an injection pump controls the fuel discharge amount n and balance the amount of torque generating with power generation load.

In addition, although there is also such a control method that it operates a direct control rack and makes a rotation speed change like the transfer equipment does, there is no difference in the fuel system shown in this figure.

[Liquid Fuel]

It usually refers to crude oil, the gasoline that separation refining was made from crude oil, kerosene, light oil, heavy oil, etc, the various liquid fuel compounded from oil and fats and carbohydrate of the living thing origin, a natural gas, or coal can also be utilized with this technology.

[Combustion Means]

Although it is generally called a burner and represents the spraying equipment which sprays liquid fuel into a combustion chamber in the shape of a fog and makes it burned, it controls a flame maintenance device called swirler, baffle, burner corn, etc for maintaining those combustion and the flow and the circling of air, and the air register device which adjusts flame form, and the secondary and the 3rd air mouth, etc. also constitute a part of combustion means.

[Burner]

(Steam Spray Burner)

- Internal Mixture Type

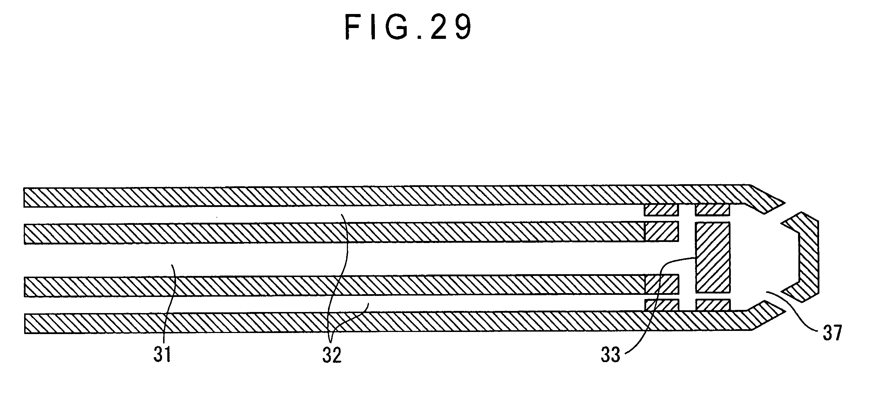

Fig. 29 is a conceptual diagram of an internal mixture type burner.

- Middle Mixture Type

Fig. 11 is a conceptual diagram of a middle mixture type burner.

- External Mixture Type

Fig. 30 is a conceptual diagram of an external mixture type burner.
In addition, in a steam spray type burner, spray is also possible in the high-pressure air (it has pressure equivalent to steam pressure power.) pressurized by the compressor.

(Rotary Burner)

Fig. 31 is a conceptual diagram of a rotary burner.

(Back-Pressure Spray Type Burner)

Fig. 32 is the conceptual diagram of back-pressure spray type burner. In addition to the use in a boiler, etc, a gas turbine etc. also may adopt this form.

(Pressure Spray Type Burner)

It is the burner type with the spray nature of a hollow pattern with a fine spray particle by making a whirlpool produced at a burner nozzle tip part by pressure of fuel oil, making the oil film formed, and making it spray. Since the diameter of a spray particle and a spray pattern change sharply if pressure is reduced, in order to change the amount of combustion it is in principle necessary to change the number of burners which burn.

(Low-Pressure Spray Burner)

It is the burner which can perform spray by the low air pressure acquired by the fan, and there are many examples of adoption in the various industrial furnaces, etc.

(Fuel Injection Valve)

Although it is basically for diesel engines, in the case of a gas turbine etc when performing the combustion amount control by changing the combustion number, in order for fuel not to be carbonized with hot heat or for high-pressure gas not to return to a fuel system, it has the structure which blocks nozzle mouth and a fuel system by the structure like the injection valve for diesel engines, therefore both are called a fuel injection valve.
It is fundamentally the spray nozzle which has the valve structure that the nozzle opens with the rise of fuel oil pressure, although many diesel engines have multi-mouth nozzle form, a basic composition of a gas turbine is the same as that of a pressure spray type burner.
Of the fuel injection system formed into electronic control, there are some that have solenoid structure in the fuel injection valve itself, open and shut a valve by ON-OFF of the signal of solenoid, and perform a control of opening-and-closing timing or the injection number.

[Flame Maintenance Device]

Although there are various names according to form, such as a BAFFURU plate and a burner corn, basically it is needed to prepare the negative pressure area near the burner spray belt, and form the stable flame belt using the phenomenon that a part of flames burned returns.

[Air Mixture Equipment]

It is mainly called an air register, and while promoting mixture of fuel oil droplets and air, it coopers up a flame form and makes the flame formation matching well with a combustion chamber.

Of the above-mentioned burners, it is used with the steam spray type burner, the back-pressure spray type burner, the pressure spray type burner, etc. and there is the one which can change the angle of revolution wings according to the amount of combustion or can change the ratio of primary air and secondary air, while there are fixed type burners.

[Turn Down Ratio]

A turn down ratio is a ratio of the amount of the minimum combustion which can be burned, to the amount of the maximum combustion in the proportion control type combustion equipment. It is a pressure spray type burner that has the smallest and around 1:2 is a limit. A steam spray burner has the largest and it can perform combustion as the burner itself mostly without causing increase of the diameter of a particle to about 1:10.

However, since performances of flame maintenance device and air mixture equipment, etc. are various, the turn down ratios in actual equipment differ in many cases for every equipment.

[Fuel and Liquid Transfer Means]

The fuel and waste liquid used by the present invention are transported by the method called liquid transfer means.

[Drop]

The mass of a liquid is used.

[Positive Displacement Pump]

It makes a compression expansion of the space capacity closed by using power, and suction and discharge of fluid.

(Gear type pump)

It is a rotation type pump and uses the closed space which consists of gears.

(Vane Type Pump)

It is a rotation type pump and uses the closed space formed in the movable board called vane and the axis-biased cylinder.

(Root Type Pump)

It is a rotation type pump and uses the closed space formed with two sets of elements called 'roots' which have a shape of cocoon.

(Plunger Type Pump)

It is a reciprocating pump and uses the closed space formed in a piston and a cylinder.

(Diaphragm Type Pump)

It is a reciprocating pump and uses the closed space formed of elastic deformation of rubber and a thin metal plate.

(Screw Type Pump)

It uses the closed space formed of a 'rotor' with a screw form part, 'stator' corresponding to it, and the sub-screw part called 'idler' from its form.

[Non-Positive Displacement Pump]

It is the transfer means using centrifugal force, the thrust generated on wings or the friction power of fluid, etc., and in addition, the pump can be constituted theoretically even by applying the electromagnetism of water.

(Centrifugal Type Pump)

It uses the centrifugal force generated in a liquid and there is a turbine pump with the single stage and multiple stages.

(Axial-Flow Pump)

It uses the thrust putting on a propeller and there are a single stage axial-flow pump, a multi-stage axial-flow pump, etc.

(Friction Pump)

It is the pump taking advantage of generating the flow velocity by using the friction power of a liquid, and it also y. There is also the one which has more high-pressure of discharge pressure with the single stage by using the impact strength produced when a direction is changed rapidly. A cascade pump, the Wesco pump, etc.

[Flux Control Means]

In the present invention, it is a means to be used to control the flux of fluid.

[Flux Control Valve]

It is the valve characterized by making predetermined flux pass by changing the coefficient value called CV value of a valve arbitrarily within the permissible level. Although there are many valves called glove system in general, there is also the one in a shape like a ball valve.

Although this system is effective in fluid with the low viscosity, unless it performs feedback control by the flux detection means or the pressure detection means, generally precise control cannot be performed.

[Controlling Rotation Speed of Pump]

It is the control method that flux control can also be performed simultaneously, transporting a liquid by changing the rotation speed of the above-mentioned positive displacement pump. Even if it is a reciprocating pump, the pump which can change rotation into reciprocating motion by the cam etc. can use this control method.

This system is advantageous to liquid with comparatively high viscosity and high lubricity. If the type of pump with a little internal leak is selected, even the open loop (control without feedback by pressure or flux) shows sufficient accuracy.

In addition, flux control is still possible by the rotation speed control although accuracy falls. However, it is limited for the use that has a little pressure change and needs feedback control for precise control.

[Controlling Pulse-Number by Pulse Pump]

It is mainly used for a reciprocating pump among the above-mentioned positive displacement pumps and the control that can performs a transfer and flux control of a liquid simultaneously by making the driving force of a pump of a reciprocation motion energy generated by on and off of and by sending the pulse sequence which controls on and off of electromagnetic force.

Since pulsation is generally generated, it should be used only when the injection amount is a little for particular amount of fuel or when pulsation does not influence a burner as a pouring point is in the primary side of a fuel flux adjustment valve.

[Flux Detection Means]

Although the sensor called flux meter is generally shown in many cases and the flux meter of the following kinds is known, if the quantity in which the liquid is flowing can be grasped quantitatively, it can be used as a flux detection means.

[Volume Type Flux Meter]

It is the one that measures the amount of passage of fluid precisely using compression expansion of closed space such as oval gear, a rotary piston, and a root.

[Differential Pressure Type Flux Meter]

It measures differential pressure generated by fluid resistance when passing an orifice and performs the flux measurement.

[Vortex Type Flux Meter]

It performs the flux measurement by measuring the frequency of the Kalman whirlpool generated in the lower stream side of a triangular prism.

[Electromagnetic Flow Meter]

The electromotive power generated when fluid with conductivity like water passes the flux is measured, and flux measurement is performed.

[Mass Flux Meter]

It uses KORIORI power and performs the flux measurement by measuring the mass flux which passes a sensor.

[Turbine Flux Meter]

It carries out flux measurement from the rotation speed which changes according to a stream by using the principle of a water wheel or a propeller.

[Proportionality Operation Means]

The proportionality operation means refers to performing an operation in the control system in which the amount of outputs (MV) is determined against the ratio=setting value predefined against the amount of inputs (PV) in order to change MV according to the change in PV and SV set, and the PID calculating method has been known since the old days and it is common.

[PID Operation Machine]

In PV=SV, the principle of PID operation becomes with a MV=50% output, in the maximum of the proportionality belt called P, in the case of direct proportion it becomes MV=0%, in inverse proportion it is MV=100%, and in the minimum the principle is P control which becomes reverse of it.

However, the phenomenon which PV and SV do not correspond cannot be dissolved in the range other than the error called offset, i.e., MV=50%, only by this P control. Therefore, the integration operation called I is needed. Integration operation integrates the deviation and the time when deviation followed under the condition of PV $\diamond$ SV, and it realizes PV=SV by making the size (integration value) reflect in MV even when MV takes output values other than 50%.

However, although the integration operation is the outstanding calculating method in the stable control system, since there is a limit in the use as which a control system with a rapid change and a quick response are required, the differentiation operation called D is used together in many cases.

Differentiation operation reflects the ratio of change in fixed time of PV on MV, for example, considering it in typical heating control of inverse proportion, when a rapid temperature rise is detected it calculates in the direction where the temperature rise is controlled, i.e., the direction which decreases MV

In addition, in a control system having a little time lag in which a value change of MV called the control delay appears as being a change of PV (Example : a pressure adjustment control constituted of: PV which is the value of the pressure sensor possible to respond with high speed; MV which is the output value of a flux control valve; and SV of the pressure set), without calculating I and D by lessening width of P very much, the stable control in which a deviation is not realized is virtually possible,.

Moreover, the control system having a large response delay and the heating control of a large-sized tank with a natural cooling action, etc. do not have a problem with only I control. In general, there are control systems sufficient with PI control, and although there is some control delay, in the control system with a little amount of buffers to the size of output change, PID control is adopted. In addition, proportionality control cannot be performed only in D control.

However, in the present control apparatus, since there is no difference in respect of product cost if only P operation or I operation is taken, even if it is the case where only P operation is performed (depending on the setting), it is normally called a PID operation machine as a common name.

[Cascade Control]

In the above-mentioned PID operation, when the value of SV is a MV value of the PID operation machine located in a higher rank, this control is called cascade control. For example, if the pressure control mechanism of a boiler is considered, the PID operation machine consisting of the output (MV) which detects the steam pressure (PV) and sets it at the pressure predetermined (SV) becomes required.

However, since flux does not necessarily increase proportionally with the size of MV, the fuel flux control valve of a boiler needs another PID operation machine which sets MV of a pressure controller to SV, sets the signal of a flux meter to PV, and sets the output of a fuel flux control valve to MV.

Specifically, the control system controlled by combination of these two PID operation machines is called cascade control, As for this, there is a case that MV may be distributed to two or more secondary PID operation machine from main PID operation or MV may be further distributed to the PID operation machine of the low rank from the subPID operation machine.

(Feedback Loop Control and Closed Loop Control)

Usually, it is the language used in the control method of the subPID operation machine of cascade control, and performs control which checks PV value to SV value from a higher rank and rectifies MV value.

(Open Loop Control)

In the above-mentioned flux control, if the divergence of a flux control valve and the flux which actually flows are matched, there will be no necessity of daring use the signal from a flux meter. However, when the way of coincidence is, for example, logarithm-like matching or exponentially matching, the operation to change SV from a higher rank to MV is required. The control system which does not check the value of PV by itself as mentioned above and performs cascade control by changing SV from a higher rank into MV is called open loop control.

Although it performs optimal oxygen concentration control by feedback control if the sensor is normal when using the oxygen densimeter which is the failure-prone sensor for divergence adjustment of a damper etc, it is the control method important in respect of practical use, such as setting the damper divergence to the value preset according to SV.

(Multi-Element Operation Control)

In PID operation control, in the state having two or more external signals, the control which calculates MV is called multi-element operation control (PV). For example, in the case of warming control by a heater, although the control system from which flux and heater entrance temperature change fundamentally carries out PID operation in heater exit temperature (PV) and setting temperature (SV), in doing so, when flux decreases, the gain of MV is decreased. When entrance temperature falls, it promotes the stability of a control system by adding auxiliary operation of raising bias, etc.

[Fuzzy Operation Machine]

In the above-mentioned PID operation control, MV was determined by performing accurate operation based on change of PV. In an actual control system, control often cannot be done as expected due to various disturbance conditions although it becomes very stable operation when these are the simple control systems which can be beforehand expressed as a numerical formula.

Particularly, when the high-speed control system which needs D operation is required, D operation is not helpful in fact. It is hard to calculate the optimal value of D. It is desired to change the value of D depending on a state. There is a case that the integration value of integration desired to be zero in a particular state. However, although these cannot be expressed as a clear numerical formula, it is obvious in many states as to: in what occasion it is not useful; how much vale of D you want to make in what kind of state; in what kind of state you want to make an integration value into zero; and so on.

Therefore, the control method aiming at performing good control of response, not by performing strict operation but by changing the parameter of a control system according to such condition judgment is fuzzy control, and it is the fuzzy operation machine which performs its control.

However, since in general the analysis in what conditions often varies depending upon the intension of the designers, few fuzzy operation machines can be used for multi-purpose, and it is actually used in many cases as programs, such as a microcomputer circuit and a sequencer.

[Low NOx Means]

NOx is the common name of nitrogen oxide, and NO and NO2 are given the generic name of NOx. As it is said that it would cause impaired respiratory systems if diffused in the atmosphere, it is a social duty to control in the fewest possible amount of discharge.

[Cause of Generation]

- Thermal NOx

As a cause of generation of NOx, it is oxidization of the nitrogen in the air by the combustion heat accompanying combustion. This is mainly called thermal NOx, and the more the combustion temperature grows into high or the oxygen concentration in an exhaust gas rises except for thin combustion, the more is it generated.

- Fuel NOx

In heavy oil, around 100-3000 ppm of the nitrogen is contained as pyridine or its derivative. Pyridine is what one carbon of benzene is replaced by nitrogen, and it is difficult to be removed even in the desulfurization process of fuel and tends to remain in residual oil, such as heavy oil, especially C heavy oil, etc.

Although the nitrogen ingredient contained in fuel returns to N2 and turns harmless by combustion or partially by the reduction reaction, some portion is oxidized to NO2 or NO and turns into NOx. Generally this is called fuel NOx.

- Waste Liquid NOx

In the conventional combustion technology, although the above-mentioned two NOx became a problem, when carrying out incineration disposal of the waste liquid with combustion equipment, nitrogen content, such as amine contained in waste liquid, pose a problem.

[Suppression Technology]

Regarding suppression technology, there are two methods, control of generating and denitration from an exhaust gas. Since NOx will completely become harmless if turning into N2, it is considered that the technology of preventing its generating is most priority in principle. Generation should be prevented as much as possible, and then only when it still exceeds a standard, denitration equipment should be considered.

[Suppression Technology of Generation]

(Low NOx Burner)

- Multi-Stage Air Blowing Burner

While it is the method that controls the air ratio shortly after the spray and prevents the rapid rise of flame temperature, it is the method that forms a reduction flame and performs the second and the third, etc. air supply in order to prevent smoke generation by the combustion method, and prevents N ingredient in fuel from oxidization.

Regarding the internal combustion engine, structure with a sub-combustion chamber is also alike in principle.

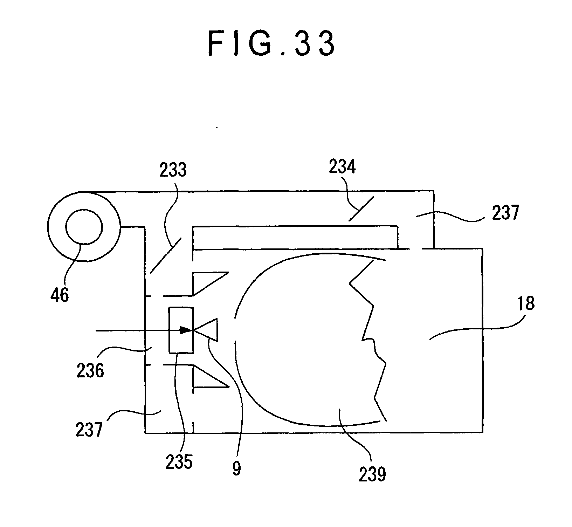

Fig. 33 is a conceptual diagram of the combustion mechanism of a three-stage combustion type. The air sent by the fan 46 is controlled with the main damper 233 and the auxiliary damper 234, and is sent through to the secondary wind box and the third wind box respectively. The orifice is prepared between the secondary wind box and the primary wind box, and so it has the mechanism in which primary air pressure also goes up with the rise of secondary air pressure.

In the state where spray and combustion are performed in the burner 9, first, the primary air is given revolution by swirler 236, forms the flame maintenance belt immediately after a burner spray, and stabilizes a flame. However, since the amounts of oxygen run short only with primary air, it becomes slow combustion and the flame which is about to hit a water-cooled wall. However, since fresh air flows on a water-cooled wall from the secondary wind box, flammability is improved just before a flame hits a water-cooled wall and a flame is passed to the rear of the combustion chamber.

Although a remarkable low NOx is expectable even in this stage, when the amount of secondary air is controlled to the grade running short to perform perfect combustion, combustion will not become active even in a secondary combustion range, but the remaining inflammable ingredient is able to burn by the third air blow, a high temperature part is not created in the whole combustion chamber, and combustion can be completed maintaining slow combustion.

Although it is the outstanding low NOx method, since it is necessary to carry out the exclusive design of a wind box and air blow-out mouth etc., and a boiler design is also partially changed in the case of the third combustion, it is commonly applied to a newly-built boiler.

- Fractionated Flame Burner

It is the form found in the steam spray burners and, it stops the mutual interference of flames by rarefying a nozzle pattern and aims at low NOx by promoting cooling of a flame.

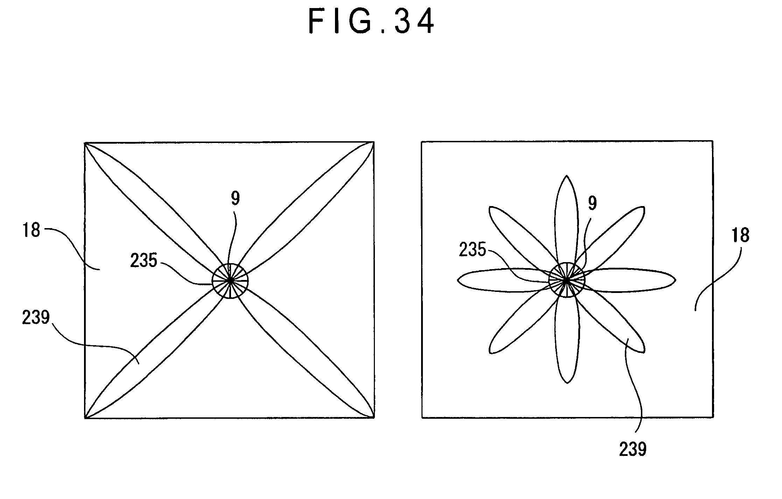

Fig. 34 is a conceptual diagram of the flame pattern viewed from the front of a fractionated flame burner. Although this requires adjustment of an air register etc.(for a revolution flow to be lessened), it is the one aiming at low NOx with the characteristic of the square shaped combustion chamber of a water pipe type boiler, and can be applied also to the existing water pipe type boiler. The right is a standard flame pattern. It has a weak point that the shape of a combustion pattern and a low combustion zone is subject to become unstable.

- Self-Exhaust Gas Re-Circulation Burner

By returning a part of exhaust gas in a combustion chamber to the primary side of a flame, this system reduces the oxygen concentration of the air for combustion and attains low NOx.

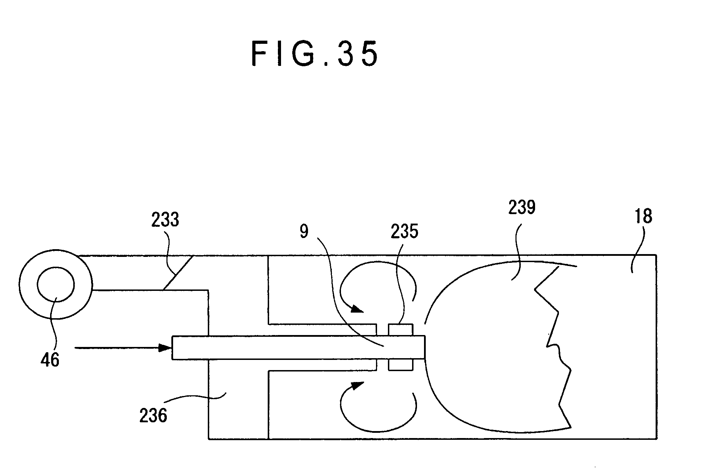

Fig. 35 is a conceptual diagram of the combustion mechanism of an exhaust gas self-recirculation burner. The tip part of the of the primary wind box 236 and the burner 9 projects up to the depth of the combustion chamber 18, and they blow off the air for combustion to the central part strongly with a flame. Around a blowout mouth of primary air becomes to have negative-pressure by the high flow velocity and attempts to suck in surrounding air. Then, the gas flow returned with twisting as shown by the arrow was produced, Then, the exhaust gas, which its temperature fell by endotherm with the water-cooled wall to some extent, is sucked into the air from which the box of the primary wind blows off, becomes supply air to a burner, and performs an exhaust gas re-circulation action.

- Rich-Lean Combustion Burner

It avoids combustion near a theoretical air ratio by the means of making the flame belt of a thin flame form after the flame belt of a pilot flame etc., and attains low NOx by controlling the highest temperature of a flame.

Although it is called a thin combustion burner depending on the case, since NOx reduction is not sufficient unless it uses the thin mixed ratio at which the usual lighting method cannot burn as a mixed flame, it is common that the zone where the fuel concentration suitable for ignition is high is made, and the inventor interprets it as the rich-lean combustion burner.

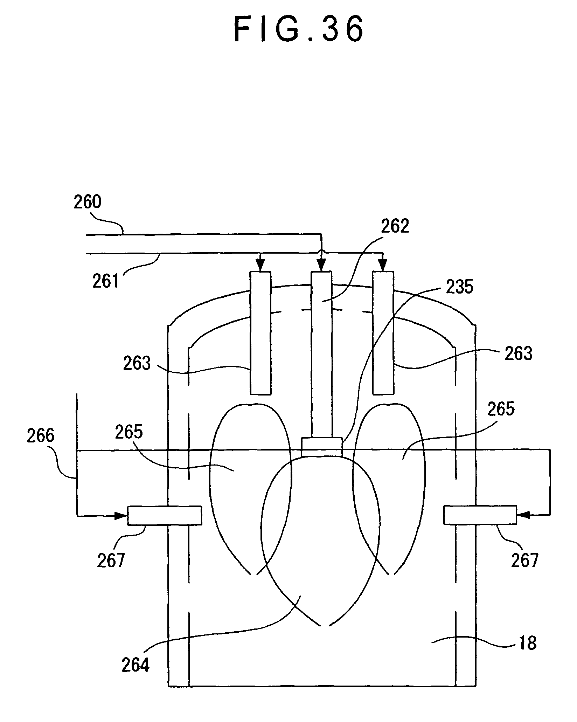

Fig. 36 is a conceptual diagram of the rich-lean combustion mechanism in a gas turbine. The fuel sprayed from the main burner 262 makes a flame formation stabilized by a flame maintenance zone by swirler 235. While the combustion of the fuel sprayed from the auxiliary burner 263 can be thin combustion without flame maintenance zone to which temperature tends to rise by flame maintenance by the main flame, preventing the rise of NOx, NOx rise of the main flame can be suppressed by reducing the oxygen concentration to which the main flame burns.

Fuel is controlled independently by the main fuel line 260 for the main burners, and the auxiliary fuel line 261 for auxiliary burners, respectively, and flame stability is maintained, measuring low NOx by adjusting the fuel ratio of the main flame and an auxiliary flame according to combustion load.

In addition, in a gas turbine, air is supplied to the combustion chamber like the above-mentioned multi-stage air blowing with separate 3-4 stages, it is because since a gas turbine may perform high combustion at a extremely superfluous air ratio as compared with a boiler, combustion is not stabilized by overcooling of a flame if all air is sent into a burner in one stage.

Since the air in which perfect combustion is almost possible is sent in with primary air (air from just before the burner) in principle, it is not what performs low NOx by the theory of multi-stage combustion. The secondary air supplied in the place which passed over the primary combustion belt performs a certain amount of dilution while promoting earlier perfect combustion, and then the amount of air are increased in a dilution zone and a cooling zone, and the oxygen concentration in the exhaust, come out of the cooling zone and led to a turbine, is about 16%.

(Water Injection)

It is the technology which controls the highest temperature of a flame by the evaporation latent heat of water, and sensible heat of steam by injecting water on a flame belt.

Depending on the injection method, it is easy to cause increase of HC or CO.

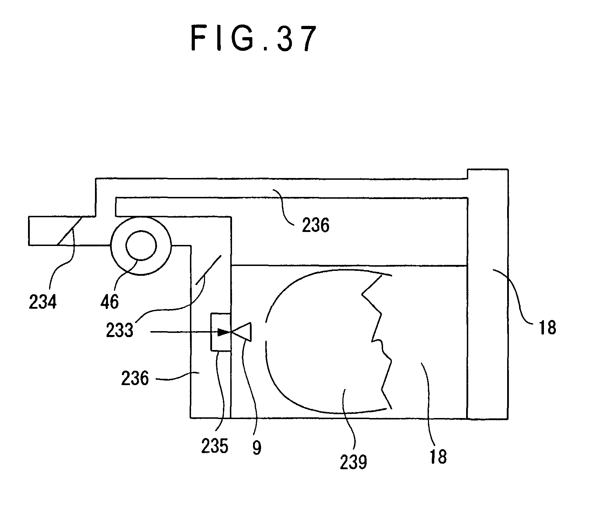

Fig. 37 is a conceptual diagram where the water injection of rich-lean combustion is performed. The pure water proportional to the NOx value or the amount of combustion is sprayed on the secondary combustion belt by the water injection nozzle 267 arranged in front of or behind the secondary air entrance of the combustion chamber 18. Generally, in order to maintain flammability in a gas turbine burner, there are many cases that it is sprayed on the secondary combustion belt as shown in this figure.

Incidentally, it is said that the effect of spray on a primary combustion belt and a secondary combustion belt in a gas turbine is 1 % reduction effect of NOx to 1% irrigation in the case of spray on the primary combustion, and on a secondary combustion belt, its effect of 0.5% to 1% irrigation. Of course, although a secondary combustion belt differs depending upon the factors such as the amount of combustion and spray form, etc, the reason for the water spray on the primary combustion belt with high effectiveness difficult is that scattering the water is hard as it can operate evenly to the flames, and that if it is unevenly scattered a part of the flames in which power have not been sufficiently strong is extinguished, casing the rise of HC or CO.

(Steam Injection)

Technology which controls the highest temperature of a flame by the dilution effect of air by steam and sensible heat of steam and by spraying steam on a flame belt. In the case of a gas turbine, as the injected steam also contributes to a turbine output, there is little decline in efficiency.

If a water injection nozzle becomes a steam injection nozzle, it will become a low NOx means by the steam injection system. Although steam injection is easier to make itself act evenly to a primary flame belt, there are more cases that steam injection makes itself act on the secondary belt for the reason that: if quantity is increased the air for combustion will be intercepted as it is gas; and that it is also hard for the physical size of a steamy nozzle to be located in the primary combustion belt of a gas turbine.

In addition, the steam injection performed by combined cycle etc. in order for the Durbin output to be increased is an injection after the dilution air zone in which the low NOx effect can hardly be expected, and differs from a low NOx means.

(Exhaust Gas Re-Circulation)

It is the technology in which flammability is not much worsened since the air flow velocity goes up and the highest flame temperature is controlled by mixing the air for combustion with a part of exhaust gas and making them burning.

Fig. 37 is a conceptual diagram of the composition of exhaust gas re-circulation type combustion equipment. This combustion equipment assumes especially the standard combustion equipment which does not plan low a NOx. The air for combustion is given a flux control by the fan 46 in the main damper 233, and is led to the primary wind box 236, and is supplied to the combustion chamber 18 as air for combustion in a burner 9. The auxiliary damper 234 makes a fan inhale the exhaust gas from a chimney (smoke path) via the re-circulation duct 240 by making entrance pressure of a fan low. Hereby, an exhaust gas re-circulates to a part of air for combustion, the oxygen concentration of the air for combustion is reduced, and the effect which makes combustion slow can be expected. Since the oxygen concentration in the air for combustion is low, it can strengthen the flame maintenance belt to the extent that NOx would go up in an usual way, and that since it is combinable with the air flow which can perform short flame combustion, low NOx is realizable by the combustion that its length is not different from an usual oxygen concentration flame.

However, when sulfur is contained in the fuel or the temperature of emission gas is as low as it may generate dew formation, since the emission gas returns to the primary wind box and that it may be the cause of failure, it cannot be used, and caution is need as the fire etc. may be started by soot, unburned gas, etc. deposited on the combustion chamber if unusual combustion of emitting smoke etc. was performed.

(Water Emulsion Combustion)

It is the technology used as the base of the present invention. NOx is reduced by the control effect of the flame temperature by the endotherm action of the same flame as water injection, performing atomization of fuel oil droplets by spraying emulsion fuel in which water dispersed into the fuel.

Although reduction of NOx is expectable to fuel with a little residual carbon content, in the case of fuel with much residual carbon content because it is antagonistic to a combustion promotion action, there are some cases that NOx value does not change at the combustion equipment which thermal NOx shows a low value like a boiler. Since it has a combustion promotion action, there is no increase in HC and CO, and smoke dust is reduced sharply.

(In-Line Proportion Type Mixed Oil Device)

In a combustion equipment like a boiler with a low NOx regulation value, when it uses the fuel which contains nitrogen content in fuel as C heavy oil does, there is a risk which exceeds a regulation value by the rise of fuel NOx. In such a case, it is the method that reduces NOx by proportionally injecting the fuel with a little nitrogen content as A heavy oil, etc. into C heavy oil.

[Exhaust Gas Denitration Technology]

(Wet Denitration)

It is the method of removing NO by making it absorbed into the hydroxide of an alkaline metal or alkaline-earth metals, or carbonic acid salt solution after oxidizing NO in an exhaust gas by ozone, the ultraviolet ray, etc. and making NO2 of it, and separation and post-processing of a nitrate are problems.

(Dry Type Denitration)

There are methods such as the reduction catalyst method by carbon monoxide, hydrocarbon gas, etc, ammonia catalyst reduction method, and direct reduction method which makes ammonia act on the high temperature exhaust gas near 1000 degree C.

Since a reduction catalyst method cannot be used except for a use from which exhaust gas oxygen concentration becomes zero like a gasoline engine and fuel expense also goes up, suppression technology of generating is important.

Moreover, although the ammonia catalyst reduction method can also use urea etc and has the outstanding performance which can reduce NOx selectively even in exhaust gas which contains a large quantity of oxygen, there are many problems, such as the problem that unreacted ammonia is diffused into the atmosphere by degradation of a catalyst, the problem of the cost of ammonia, updating cost by catalyst degradation.

The direct reduction method is the method used only for the special combustion equipment with the fixed amount of combustion and is not common, and it has many problems to solve such as the concern in which unreacted ammonia diffuses into the amorphia.

[Air-Fuel Ratio Control]

[Air Ratio and Excess Coefficiency]

The ratio of fuel to the amount of air for combustion is called an air ratio or the over-air ratio, and the air-fuel ratio is 1 in case exhaust gas oxygen concentration is zero, and this state is called the theoretical amount of air. In actual combustion, it is rare for exhaust gas oxygen concentration to apply by zero, and it is common to manage the oxygen concentration in an exhaust gas by the optimal concentration for each combustion equipment. Since oxygen is contained 21% in air, an air ratio is calculated by exhaust gas oxygen concentration as follows.

Air ratio = 21/(21 - exhaust gas oxygen concentration)

[Air-Fuel Ratio Control]

It is the control mainly performed at a boiler, the industrial furnace, etc., and is the control method to control the above-mentioned air ratio to be the value suitable for exhaust gas composition and the combustion flame in an ideal state. Generally, since the required amount of air is fixed when fuel bums, an air ratio can be mostly controlled to a target value by controlling the amount of air according to fuel flux.

However, since emitting smoke occurs with the small error of air-fuel ratios when a target air ratio is close to 1, in the present invention, it is desirable that highly precise air-fuel ratio control device is combined.

(Mechanical Link Type)

It is the oldest method used, and connects a fuel flux adjustment valve to a damper mechanically and performs fuel flux control and air flux control according to the divergence of the control motor operated by the information of a control target.

Generally, for the reasons that the divergence characteristic of a fuel flux adjustment valve and the divergence characteristic of a damper do not match, and the target air-fuel ratio differs depending upon each combustion belt, it can finely adjust the divergence of damper for a fuel flux adjustment valve by preparing a variable cam in the middle of the above-mentioned mechanical link.

(Electronic Control Type)

It is using the PID operation machine explained in the above-mentioned proportionality operation means, performs the same control as the above-mentioned mechanical link type, generally sets steam pressure power PID control as the main control, and makes two subPID operation machines, the fuel flux adjustment valve divergence adjustment appliance and the damper divergence adjustment appliance, carry out divergence control of a flux adjustment valve and a damper divergence. While it usually becomes open loop control in many cases when a fuel adjustment valve has linearity to divergence and flux, it may perform closed loop control by the signal from a fuel flux meter.

The divergence control of the damper is carried out according to the curve approximated curve by the polygonal line approximating method so that it has the proper air ratio defined for every load to fuel flux. A closed loop may be formed according to the value from the air-flow sensor etc.

(Multi-Stage Control Type)

The multi-stage type air-fuel ratio control is done by [Japanese Patent Application No. Shou 61-176875, combustion control equipment in combustion equipment], and composition is close to the above-mentioned electronic control type, although a fact that steam pressure power PID control is used as the main control is not different, it is the air-fuel ratio control method that the signal sent to a subPID operation appliance is not analog information but a multi-stage step signal of the stage (landing) of limited number.

It is the method that: with this method, not using the polygonal line approximating method in the above-mentioned electronic control formula, but by determining the setup for every stage necessary for combustion set by various subPID such as fuel flux, damper divergence control, VVVF control of the fuel oil burning pumps, and VVVF control of a fan, every combustion means with the complicated damper control system or the fuel spray system can be controlled flexibly and also correctly.

Although it cannot be applied to the gas turbine or diesel engine which the loading causes direct power generation for the reason that the unbalance of the control object load and combustion load cannot be resolved with the control object having a buffer like the boiler since combustion is also performed as this multi-stage step signal, there is no problem as these equipment by its nature does not have a concept of air-fuel ratio control.

(O2 Feedback Type)

It is the feedback control by the oxygen densimeter signal that does set-up of the oxygen concentration for every combustion load in each above-mentioned air-fuel ratio control and controls it to become target oxygen concentration by performing the rotation speed control when it carries out the VVVF control to or the damper divergence control or the fan.

The O2 meter is measured after an exhaust gas has come out of a combustion chamber and passes contact heating surface in many cases, and it shows a response with as slow response of a combustion state as about 2-10 seconds, after combustion is performed. In addition, it does not mean that a reaction is slow like the usual measurement, and it is a difficult control for the reason that D control and I control amongst the techniques of the conventional PID are meaningless since it is a past measurement type control always measuring the gas 2-10 seconds before at all.

In addition, since the O2 meter is a very unreliable sensor, although it depends on the state of an exhaust gas, the examples of the incorrect operation of this sensor, emitting smoke by the mistake for the controlling method adoption, or the abnormalities in combustion are not the unusual examples.

Therefore, the fuzzy reasoning control method, which performs the extremely precise control in the state which does not rectify oxygen concentration in principle and carries out a rectification when combustion continues at the same point for the certain hours within the limited scope of rectification such as rectification of fuel calorific value, rectification of air density, etc, is desired, and a safety circuit which stops O2 feedback is also required in the state where combustion exceeds the rectification range.

[Water Emulsion Combustion]

Water emulsion combustion is the combustion method of preventing the pollution of industrial combustion equipment by the various combustion improvement effects from the combustion by making water scattering in the shape of emulsion in the fuel burned with that combustion means in the industrial combustion equipment which uses liquid fuel.

However, the water emulsion combustion, considered easy on first viewing, is the technology also having a dangerous features not only preventing pollution but also making the function of industrial combustion equipment lost unless overcoming various technical difficulties.

Although it is said that technical discovery of emulsion combustion was made about 40 years ago, it is hard to say that it has been spread globally. It is because there are many engineers who cannot overcome the technical problems by the above-mentioned dangerous factor and there are many engineers who do not believe that there is the method to resolve them.

[Classification of Production Methods]

(Tank Blending Method)

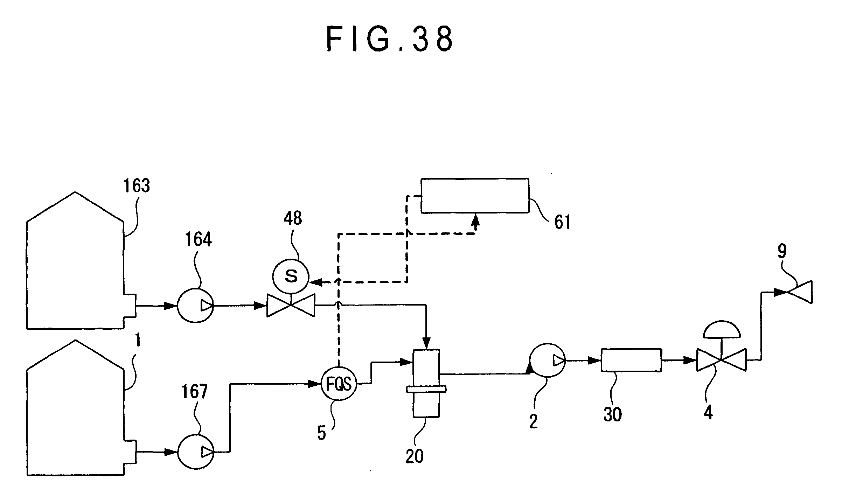

It is the method anyone can manufacture water emulsion fuel most simply. Fig. 38 is an example of the tank blending method. The fuel stored in the fuel tank 1 is supplied to the mixer 20 by the fuel pump 2, and is supplied to the emulsion tank 49. The water supply pump 164 is operated by operation of the fuel interception valve 6, and simultaneously the electromagnetic valve 48 becomes open. Because discharge amount of a fuel pump is fixed, if discharge amount of a water supply pump is decided, the emulsion fuel can be manufactured by the mixer according to the discharge amount ratio of the pump.

While it can be structured economically without a control device like proportionality control in this blend method since a fuel interception valve is controlled by float of an emulsion tank, the blend of the fuel emulsion mixture ratio or fuel with the high viscosity, etc. becomes possible by preparing variations in this basic composition. Moreover, the means of improving separation speed and stability by using together with an emulsifier etc. is also taken.

However, in principle, the equipment actually employed is very rare amongst the equipment of such composition, and such equipment is narrowly employed at 5% or less minute hydrolytic ratio.

As also stated in (Emulsion Nature) of [Grasp of Mixed State of Waste Liquid and Liquid Fuel] and [Realization of Waste Liquid Injection and Selection of Injecting Pump], this attributes only to the phenomenon that if mechanical shearing is given not only to the precipitation or separation generated during preservation but also to the precipitated W/O emulsion with high hydrated ratio, the fuel solidifies like cream by phase inversion and so the fluidity of the fuel will be lost.

In conclusion, the emulsion equipment which takes such composition has two or more various obstacles in the part before discussing application technology in this case, and does not deserve examination.

(Conventional Type In-Line Proportionality System)

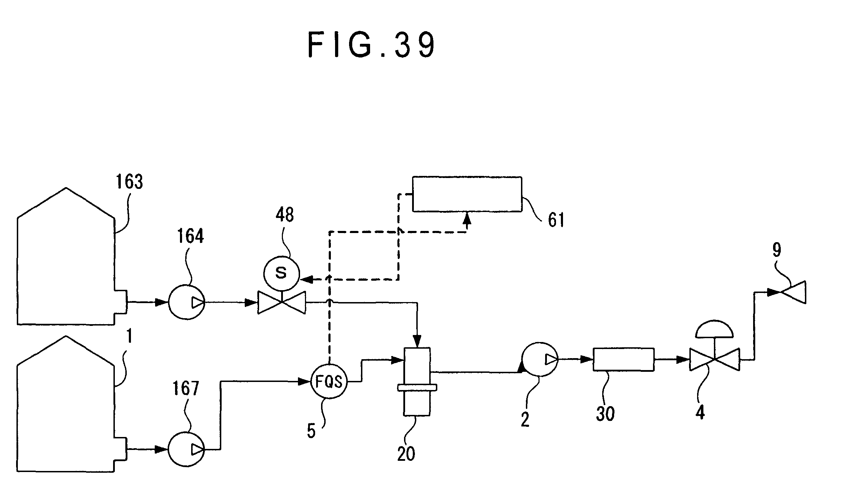

Fig. 39 is the emulsion manufacturing method developed in order that inventors might manufacture emulsion fuel with fuel having the high emulsion stability called C heavy oil, and is the equipment and the method which is [Japanese Patent No. 1474455 emulsification fuel oil manufacture equipment].

The fuel stored in the fuel tank is pressurized with the fuel booster pump 167, measured by fuel flux meter 5, sent to the fuel pump 2 via the mixer 20, warmed at the heater 30, and after flux adjustment was carried out with the fuel flux adjustment valve 4, burned by the burner 9

The amount of fuel measured with the fuel flux meter is sent to the flux proportion control machine 61 and calculates a proportional output according to the preset target value. Since this flux proportion controller machine adopts the time sharing proportion system, it carries out flux proportion of water by performing ON-OFF control of the electromagnetic valve 48 capable of high-speed high frequency operation.

Although the water performed flux proportion is mixed by the mixer and emulsified, an important point is that a mixer must be able to maintain an emulsion performance in the large flux range, and the mixer which has a performance like [Japanese Patent No. 1220654 In-pipeline serial emulsification machine]. Although as for this system it can operate enough at hydrolytic ratio below 15% in C heavy oil, when fuel oil is the fuel such as A heavy oil and kerosene with which emulsion stability falls, water separation, etc. arises on the way, becoming the cause of an obstacle, Since the fuel oil sprayed by the burner does not change by the same combustion load even after water supply practice, the actual calorific value falls by the amount of water added and the ratio of superfluous air rises. In case a fuel flux adjustment valve was optimized to the use for emulsion combustion, when the water supply stops by chance it causes the shortage of air and fuming. There were many and various problems to resolve as above.

[Performance Required in Mixer]

Although this is detailed in [Adjustment of Mixing Method of Waste Liquid], it all comes down to the fact that an ideal mixer for emulsion can manufacture the emulsion fuel with the stabilized particle diameter according to the change in the fuel flux corresponding to the large turn down ratio of a combustion equipment Besides, the diameter of a particle in which the optimal diameter of a water particle exists depending on the diameter of an average spray particle of a burner and can adjust the diameter of a particle after the burner characteristic has been grasped is desirable, and it is very important that those characteristics do not change to change of the fuel viscosity.

Therefore, it should be kept in mind that the performance targeted and desired in emulsification equipment in a general manufacture process differs completely in the sense that a flux changes in particular.

[Fine Explosion Action]

The most excellent effect by water emulsion combustion is a phenomenon of this fine explosion action. That is, it is the phenomenon that after emulsion fuel with the diameter of a water particle which matches the diameter of a spray particle of fuel is sprayed from a burner and receives the heat of a flame belt, inner moisture boils before lighting oil droplets, and dispersing surrounding fuel by the energy of evaporation.

Such an explosive evaporation phenomenon of water is famous with the examples of a steam explosion, a tempura oil fire, etc. The water particle that have an ideal globular form as a consequence of its the powerful thermal energy and its detailed particle by radiant heat cannot be boiled even after 100 degrees, and become the state of so-called instant boiling, and after evaporation is started, it at once let the surrounding fuel minimized.

The fuel minimized turns into a diameter of a particle much fewer than the diameter of a particle which the burner originally injected, and flammability is improved by increase of surface area and the inclusion action of air.

[Water Gas Reaction]

In the conventional theory, it is said that the smoke dust control action of emulsion is made by the carbon catalyst reaction of the carbon ingredient by the water gas reaction.

In the case of fuel with many ingredients called residual carbon, the crystal of black smoke is formed in the central part of the oil droplets diameter in the process which bums fuel oil, disassembled by the thermal decomposition accompanying combustion. This is commonly called soot. Black smoke is a carbonaceous crystal and it is a very stable substance, and since combustion speed is slow and combustion is not completed even if it passes through the combustion chamber, it deposits on the smoke path as soot, or is spread to the circumference of a chimney.

However, at the high temperature above 1000 degrees C like in a flame, carbon causes the following reactions called water and water gas reaction, and easy combustion becomes possible.

$$C + H_2O \rightarrow CO + H_2$$

Although this is endotherm reaction and therefore is not the phenomenon that generates the energy by turning water into hydrogen and CO, it serves as an outstanding catalyst which burns the soot resulting from residual carbon.

This phenomenon has many examples, such as water gas generation from coke, a flame occurring, if steam is sprayed on red-hot charcoal with a spray, or moisture being taboo at the high temperature heat resistance material made from black lead.

[Expected Effect]

Emulsion combustion performs a perfect combustion of fuel with a lot of residual carbon like C heavy oil according to the above-mentioned phenomenon, and has the effect of making generating of soot decreasing sharply, and it also has the excellent effect with the NOx reduction effect etc when used for fuel such as A heavy oil and kerosene, without worsening flammability by the above-mentioned fine explosion action, also by the phenomenon that the evaporation latent heat of water draws combustion heat.

[Example of Application]

(Boiler and Industrial Furnace)

Curtailment of smoke dust amount in C-heavy-oil combustion, prevention of the soot diffusion to the circumference called descent smoke dust, NOx reduction by realization of low oxygen operation.

NOx reduction which does not reduce the flammability in A heavy oil combustion or kerosene combustion.

(Diesel Engine Gas Turbine)

The improvement of NOx reduction and smoke color

[Dangerous Factor]

(Instability of Water Emulsion)

As explained in the tank blending method, even if it uses an emulsifier etc. in the delicate phenomenon of combustion (setting in the range of the realistic amount used), it is very difficult to use what was stored.

(Degradation of Lubricity)

As for the pumps designed with expectation of the lubricity by fuel oil, exhaustion cannot be prevented with the water lubrication by water entering, and therefore it becomes the cause of a trouble Application of the gear pump in kerosene and light-oil emulsion, application of the diesel injection pump in kerosene and A heavy oil emulsion, etc. need to be taken care.

There are problems that cannot be solved only by the emulsion device. If it is inevitable, the application of an additive agent with high lubricity or selection of the material resistant to the water lubricity, etc, is used.

In addition, although it results also from lubricity, if it is in the fuel oil with low oil film formation capability, it is necessary to also care about the corrosion by emulsion water touching direct steel materials. These measures are the same as that of the above.

(Unstable Fuel after Mixture)

In instability, the biological side, the chemical side, and the physical side exist.

- Generation of Slime

The biological side is a point that when the emulsified fuel stores in a tank bottom etc it becomes the breeding region of the bacteria which exist in air, fuel, or underwater by careless employment. That is, unless tank cleaning is done periodically, in the emulsion fuel stored in a tank like a tank blend type, emulsion with the high hydration ratio remaining at the bottom inevitably remains. If the bacteria which can use fuel oil as food breed here, various substances which the bacteria discharge become the cause of generating sludge, corrosion, mold, etc.

- Generation of Sludge

Next, regarding the chemical side, in fuel, although it is small amount, the substance (malthene-kind) with an action of an emulsifier is contained. Since a lot of malthene is contained particularly in C heavy oil, although it has specific gravity near the C heavy oil, the fact that the emulsification fuel of C heavy oil is comparatively stable attributes considerably to an action of this ingredient.

However, in C heavy oil, malthene is performing the important action in order to disperse the aromatic series of high molecular compound called asphaltene. If stress, such as heating or giving mechanical shearing repeatedly, is repeated to the C heavy oil which has turned into emulsion fuel, gradually, malthene is absorbed into the circumference of a water particle, the dispersing capability of asphaltene will decrease, and it will cause sludge generation.

Therefore, in water emulsion fuel, heating is taboo, particularly if it contacts the heating media like an electric heater that its surface turns high temperature, carbon adhesion occurs on the heater surface, and inventors have knowledge of such phenomenon.

- Control of Fuel Temperature

The last is the physical side. Although separation and precipitation were described previously, it is the point which a water particle will boil if it exceeds 100 degrees C with the character of water, and presents a situation like a mousse. Although this is also found with the example of C heavy oil, highly advanced technology of temperature control is required for maintaining ideal combustion of the fuel like C heavy oil which requires a high temperature setup, suppressing water boiling water.

(Matching of Flame etc.)

Although emulsion combustion is the outstanding prevention-of-pollution apparatus which normally can use a current combustion means as it is, it may need a certain adjustment, reconstruction, etc. depending on the combustion state of combustion equipment. Particularly, there are points, which have to be dealt with adequately by checking the situation of combustion of the combustion equipment side, such as the phenomenon in which a flame becomes thick by emulsion combustion, prevention of the raw (unburned) splashing by the high flow velocity of the air for combustion, etc.

(Difficulty of Air-fuel Ratio Adjustment)

Although it is the solved problem by the fuel oil burning pump front in-line proportion system, in the tank blending method or a spray pump front in-line proportionality system, since the calorific value of fuel which passes a fuel flux adjustment valve changes, air-fuel ratio control becomes difficult. Then the hydrolytic ratio is precise and stable, and there is no failure at all, it is sufficient to exercise the combustion adjustment according to the present hydrolytic ratio, in reality, the response to be made would be preventing it from being the worst situation even when a stop and change arise.

[Measures against Dioxin by post-processing]

Regarding the waste incinerator, in order to observe the environmental standard of "Special Measures against Dioxins", installment of a rapid cooling of an exhaust gas and installation of advanced dust-collecting equipment are compulsory regardless of new or existing.

[Spray Means]

Regarding the above-mentioned combustion means, the spray means is a burner tip for a steamy spray, a pressure spray, and a low-pressure spray burner, it is a rotary cup for a rotary burner, and it is a fuel injection valve etc. for a fuel injection valve. Regarding the water spray equipment, the spray means is a water injection nozzle, etc.

[Generation of Dioxin]

[Dioxin]

Dioxin is polychloro-dibenzo furan (PCDFs), Polychlorinated-para-dibenzo dioxin (PCDDs), and coplanar polychloro biphenyl (coplanar PCBs), and the standard for the emissions and intake is expressed as concentration calculated by this material conversion according to the individual toxicity by defining 2,3,7,8-tetrachlorodibenzo-para-dioxin (Teq) ,which is said to have the strongest toxicity, as 1.

While it is said that it generates fundamentally by incomplete combustion, although generated from the element (carbon, oxygen, chlorine) which generally exists under environment, since the value permitted is a very small value, it cannot be said that the generating mechanism, the prevention method, etc. are established.

For example, Even if the chlorine in waste liquid is made into the value of zero by the present technology, the chlorine required for the dioxin synthesis of ng/Nm3 order in an exhaust gas is contained, and the chlorine required for the synthesis of these exists also in fuel, lubricating oil, or the atmosphere.

[The amount of dioxin generation in a waste liquid incinerator]

A waste liquid incinerator belongs to the comparatively small-scale waste incinerator mainly installed in a business place etc., and the amount of dioxin permitted at present is the processing amount of 2 or less in most cases, for an existing furnace, it is 10 ng-Teq/Nm3, and for a new furnace, 5 ng-Teq/Nm3 is an environmental standard value.

[Increase of NOx]

While NOx is generated by oxidization of the nitrogen ingredient contained in waste liquid, generally it is generated by the nitrogen fixed by the high temperature state accompanying combustion.

[Amount of NOx Generation in Waste Liquid Incinerator]

The NOx value acceptable in a waste liquid incinerator is 250-700 ppm (12% of oxygen concentration), for example, compared to 150-180 ppm (4% of oxygen concentration) of a boiler and the value of conversion for 0% oxygen concentration, it is 583-1633 ppm of an incinerator for 185-222 ppm of boilers, and surprisingly the incinerator has 4-10 time larger amount of NOx generation.

[Factor for Difficulty of NOx reduction in Waste Liquid Incinerator]

In a waste liquid incinerator, due to the prevention of dioxin generation by dioxin preventive measures in recent years, the tendency that NOx value is increased cannot be prevented for the following reasons: there is a tendency to increase the amount of combustion of the main burner to processing waste liquid; the temperature condition in a furnace becomes a high temperature side in order to keep a furnace temperature conditions of 800 degrees C or more; it is managed by superfluous air combustion for the prevention of generation of black smoke or smoke dust; and so on.

[Increase of $CO_2$]

The factors for the earth environment deterioration are the above-mentioned dioxin, or fuel, and also the carbon contained in fuel turns into CO2, causing global warming.

The amount of CO2 generated per waste liquid unit tends to increase due to the above measures against dioxin, and for the reason that generation of CO2 is not avoidable in the waste combustion as a waste liquid incinerator makes fuel burn with the main burner.

[Necessity for Post-Processing]

A waste liquid incinerator is required to implement the measure against dioxin of post-processing, and involves many assignments such as cost, maintenance feasibility, etc.

Although the above technology, equipment, the method, etc. have the excellent characteristic respectively, those have not essentially solved the dioxin generation at the time of waste liquid burning, and if only the reduction of dioxin generation is considered, another problem such as generating CO2 arise.

An object of the present invention is to provide the incineration treatment method of waste liquid using the industrial combustion equipment which prevents dioxin generation, and mixed liquid.

Another object of the present invention is to prove that there is no concern that the dioxin, regarded as an environmental pollutant in the new knowledge, is increased with emulsion combustion technology by the water emulsion fuel manufacturing equipment with which the inventor has already achieved sales record of several hundreds of units, and also to spread and promote emulsion combustion technology by establishing the more appropriate application method.

**Disclosure of the Invention**

According to the present invention, an incineration treatment method of a waste liquid using an industrial combustion equipment includes the steps of: when using the industrial combustion equipment having a combustion means for combusting a liquid fuel and performing an incineration treatment by carrying out mixed dispersion of the waste liquid into the fuel, performing in advance an examination of a waste liquid type of the waste liquid to which the incineration treatment is performed as well as an examination of composition, physical properties, and mixed characteristics; examining a pre-application inspection item that selects an applicable industrial combustion equipment in a rational pre-treatment means, a pre-application prerequisite item that checks the state of a combustion flame of the combustion equipment and composition of an exhaust gas is within a combustion limit showing an ideal state in the equipment, and an application examination item that totally adjusts the pre-treatment means of the waste liquid, an injection method of the waste liquid, a mixing method of the waste liquid, an air-fuel ratio control method of the combustion equipment, combustion device optimization, a low NOx means, existence and kind of an additive, and necessity of combined use with a water emulsion combustion; adjusting an injection ratio of the waste liquid and the additive as well as a rate of change of the injection ratio; preventing deviation from a regular range of oxygen concentration in the exhaust gas; maintaining an ideal combustion state without a phenomenon which suspects the ideal combustion state; preventing obstacles to the combustion means; preventing obstacles of the industrial combustion equipment by residual substance ingredients after combustion; controlling a change of smoke concentration accompanying with the composition of the waste liquid within a regulation value; when the pre-application inspection item, the pre-application prerequisite item, and the application examination item deviate from a normal range, stopping the injection or performing a post-application operation item that adjusts to the injection ratio which can rectify the deviation; and performing a post-application check item that checks, in a case that there is no dioxin control means by a post-treatment or alternatively before such means, restriction of the dioxin concentration in the exhaust gas to a concentration level expected when the target fuel oil is combusted by the industrial combustion equipment, and also checks capability of operation management of NOx, an amount of smoke dust generated, halogen and heavy metals resulting from the combustion of the waste liquid within a limit permitted for the industrial combustion equipment.

With such an aspect of the present invention, since the environment in which dioxin generates is eliminated by examining the pre-application inspection item, the pre-application prerequisite item, and the application examination item, and then performing the post-application operation item and the post-application check item, the incineration treatment method of waste liquid utilizing the industrial combustion equipment which prevents generation of dioxin can be provided.

In an incineration treatment method of a waste liquid using an industrial combustion equipment according to the present invention, it is preferable that the method includes the steps of: using the industrial combustion equipment including a water injection equipment that has NOx reduction effect by spraying water; in the state where water injection is carried out, and when an amount of dioxin generated is at a concentration level expected by the industrial combustion equipment, or is set at a concentration level expected by the water injection by waste liquid mixture, performing in advance an examination of a waste liquid type of the waste liquid to which the incineration treatment is performed as well as an examination of composition, physical properties, and mixed characteristics; examining a pre-application inspection item that selects an applicable industrial combustion equipment in a rational pre-treatment means, an pre-application prerequisite item that checks the state of a combustion flame of the combustion equipment and composition of an exhaust gas is within a combustion limit showing an ideal state in the equipment, and an application examination item that totally adjusts the pre-treatment means of the waste liquid, an injection method of the waste liquid, a mixing method of the waste liquid, an air-fuel ratio control method of the combustion equipment, combustion device optimization, a low NOx means, existence and kind of an additive, and necessity of combined use with a water emulsion combustion; adjusting an injection ratio of the waste liquid and the additive as well as a rate of change of the injection ratio; preventing deviation from a regular range of oxygen concentration in the exhaust gas; maintaining an ideal combustion state without a phenomenon which suspects the ideal combustion state; preventing obstacles to the combustion means; preventing obstacles of the industrial combustion equipment by residual substance ingredients after combustion; controlling a change of smoke concentration accompanying with the composition of the waste liquid within a regulation value; when the pre-application inspection item, the pre-application prerequisite item, and the application examination item deviate from a normal range, stopping the injection or performing a post-application operation item that adjusts to the injection ratio which can rectify the deviation; performing a post-application check item that checks, in a case that there is no dioxin control means by a post-treatment or alternatively before such means, restriction of the dioxin concentration in the exhaust gas to a concentration level expected when the target fuel oil is combusted by the industrial combustion equipment, and also checks capability of operation management of NOx, an amount of smoke dust generated, halogen and heavy metals resulting from the combustion of the waste liquid within a limit permitted for the industrial combustion equipment; and injecting a water solution or an emulsion that satisfies the post-application check item.

By this, even in the combustion equipment adopting gas combustion among the industrial combustion equipment, if a water injection equipment is located at the position where can NOx is reduce by water injection, waste liquid processing will be possible using that equipment.

According to the present invention, a mixed fluid includes: the waste liquid processed by the incineration treatment method of the waste liquid using the industrial combustion equipment according to the present invention; in the combustion means of the industrial combustion equipment with the combustion means for combusting the liquid fuel or in the industrial combustion equipment, the mixed fluid is manufactured by applying more than one knowledge among the pre-application inspection item, the pre-application prerequisite item, the application examination item, and the post-application operation item to a water injection means having NOx reduction effect by spraying water; the mixed fluid so adjusted that: an average content concentration of an entire spray fluid sprayed to a combustion chamber is in a range not exceeding a limit where a lethal toxic gas ingredient and lethal radioactivity intensity are generally permitted; a chlorine is in a range of 85000 ppm or less when a total amount of combustion in heavy oil conversion is less than 2000 kg/h, 17000 ppm or less when it is between 2000 kg/h and 4000 kg/h, or less than 1700 ppm when it is 4000 kg/h or more; an N ingredient is in a range not exceeding a regulation value of NOx of each combustion equipment; an S ingredient is in a range not exceeding a regulation value of SOx of each combustion equipment; a heavy metal is in a range not exceeding a regulation value of heavy metals of each combustion equipment; in the combustion means, an amount of moisture is in a range of 0 to 60%; in the water spray means, an amount of moisture is less than 100%; and an ash is in a range not exceeding an amount of ash permitted in the fuel substantially applicable to the combustion equipment, or in a range in which safety has been checked by performing the post-application operation item.

According to this, since a lethal toxic gas ingredient and radioactivity intensity are set at the range which does not exceed the limit generally permitted, and the other ingredients are also set at the range not to be the obstacle in the operation, the waste liquid which pollution cannot generate easily and the mixed flued of water can be made.

Besides, since it is common that emulsion-use water for the water emulsion fuel used by the application item in claim 1 contains various salts and impurities, in operation the operation method according to the claim 1 is desired, and emulsion fuel with less pollution can be made by the method.

The mixed fluid according to the present invention preferably includes an emulsion-use water to perform emulsification.

According to this, since a mixed liquid can emulsify and become to be able to be used as emulsion fuel by this, it is adjusted to salts and impurities according to various combustion equipment. According to this, since safety can be secured even in the time of the combined use with waste liquid and causes of emitting smoke such as a transitional phenomenon can also be avoided, mixed liquid with less pollution can be made.

Principal part of the present invention is described below in detail.

[Use of Unused Combustion Energy]

When using a chemical reaction called combustion in industrial combustion equipment, the standard of design is focused first on the efficiency side how efficiently the thermal energy fuel have is converted into the target energy.

Next, it is about the aspects of reduction of pollution such as the method for lowering smoke dust, etc. and the method for lowering NOx to cope with the pollution problem generated with the increase in the number of installation.

Besides, due to the characteristic of the equipment that it is shut out of the market unless both of these technical problems are not achieved economically, the situation is where only the efficient and clean equipment with which the rational design was made is operating.

However, the inventor has noticed that there is unused energy in these combustion equipment almost in common. The unused energy means that while combustion heat in case a liquid burns comes to the high temperature 1300 degrees C or more, heat required at the combustion equipment is at most 1000 degrees in many cases.

That is, the flame itself at 1300-degree C or more is only used for making heating surface and a product absorb heat ray which the flame gives out as a result, and the 1300 degrees C flame itself is not effectively used in most of all industrial combustion equipment.

It is found that dioxin, in which the harmful effect to a human body is pointed out suddenly in recent years, becoming the social problem, is an organic compound resulting from various organic matters, and since it consists of elements called the carbon, hydrogen, chlorine, and oxygen existing close it is generated easily by incineration of waste.

The waste liquid processing can be done without generating dioxin as a result that if the waste liquid containing these organic matters is burned with the waste liquid mixture fuel mixed in fuel mentioned above, it is completely thermally decomposed with the high temperature in the flame which is the only unused energy, and can be done without rising the concentration of carbon dioxide as another social problem by utilizing the created combustion heat as heat energy for the industrial combustion equipment as before.

It is a truth that the activities as mixing a variety of substance produced in an industrial process with the liquid fuel and incinerating it by the boiler, etc. have been practiced from the past. However, those things are not like the present invention responding to the current dioxin problem but based simply on such ideas as it is just ok to bum or evaporate by heat, and relies on this kind of means only for the reason that there is restriction about equipment and cost although ideally spray from the waste liquid spray burner independent of the main burner is desirable.

However, it was found that unless various problems resulting from mixing waste liquid with fuel, rather does it not only becomes a source of dioxin generation by combustion worsen but also causes increase of NOx and smoke dust, failure of the industrial combustion equipment itself, and deterioration of a product in many cases, and its easygoing application would have high risk socially and industrially.

Therefore, the inventor makes a detailed analysis of waste liquid first, then, performs an examination from the ingredient and its calorific value, from the state where waste fluid is mixed with fuel, carries out an examination of optimization of the injection method, a mixing method, the air-fuel ratio control method, the combustion equipment, and an selection of the applicable equipment for combustion, etc. Moreover, under the circumstance where the above-mentioned combustion equipment performs fare combustion, if waste liquid is injected where it does not disturb the fare combustion, it will prevent causing faults for the industrial combustion equipment while preventing the generation of dioxin, NOx, or dust, and it confirms its technology which enables to control even the amount of carbon dioxide generation by the energy conservation effect.

[Dioxin Concentration Expected in Industrial Combustion Equipment]

Regarding dioxin, although there is no clear standard in the most combustion equipment except for an incinerator, the level is desired to be at least less than 0.1 ngTeq/Nm, which is the severest effluent standard permitted with an incinerator.

The expected level is considered to be 1/50 or less of 0.1 ngTeq/Nm with the industrial furnace at which halogen is not contained in a boiler gas turbine and 1/5 or less with the equipment with which intermittence combustion is performed like a diesel engine. Regarding the equipment with more than 0.1ngTeq/Nm, effort to reduce concentration should be made, and it cannot be the target equipment by this processing method.

[Restriction of Heavy Metals]

Moreover, if waste liquid will be burned, discharge of the metal ingredient contained in waste liquid or the ingredient which has halogen as a main body has to be taken into consideration, either. Especially, since industrial combustion equipment do not have incidental facilities as post-processing of an exhaust gas to remove heavy metals like a bug filter or a scrubber, it is believed to be a social duty that heavy metals should be in advance removed with the measures such as pretreatment.

[Conclusion of Detrimental Ingredient]

In conclusion, while as for the waste liquid incinerator, disposing all the waste liquid wasted from the process is the expected performance for the device, for the industrial combustion equipment, using the fuel which does not take out a detrimental ingredient into an exhaust gas is premise.

The ability called for the post-processing in a waste incinerator (waste liquid incinerator) is capability of accepting any kinds of waste liquid like this and disposing of, it clearly differs from the waste liquid processing method in industrial combustion equipment. That is, it must be able to otherwise be sure by this processing method that all the ingredients in an exhaust gas can be controlled below the level at which a country or local governments and people expect by investigation and examination of various characteristics of the waste liquid available for combustion disposal in advance.

[Use of Water Injection Nozzle]

Since invention of claim 1 is liquids which cannot be used as liquid fuel, although it can be safely supplied to a burner by methods such as emulsification and dissolution, such a means is not provided in gas combustion.

Although water spray equipment is a kind of the NOx reduction means performed in order to reduce NOx, as causes increase of HC or CO, it cannot perform water spray, maintaining an ideal combustion state, if the balance among the injection position, spray particle diameter and the amount of combustion is not controlled precisely.

However, unlike the case where it is mixed in fuel, water spray depends upon the spray range (whether it is the primary zone or secondary zone) or the size of a flame, etc., and the probability that it can perform the incineration reliably is low.

Generally, when performing water spray as a completed equipment, although only with a premise that there is no generating of HC or CO, after fully checking, it is found that if it is the waste liquid which dioxin cannot be easily generated or the waste liquid which consists of, approx.1-5 carbon number alcohol, acid, aldehyde, ether, etc., it is mixed in water spray line, and it can be disposed safely even if it is discharged in the state of incomplete combustion since the benzene by heat condensation is not generated.

Although, this technology is of course applicable also to water spray with a liquid combustion means, it has been found out that this is also available for the gas combustion facility although in the limited target, and as long as paying attention to NOx control, temperature of the combustion chamber, exhaust gas temperature, etc., this is the useful technology for the efficiency improvement.

Therefore, this water spray nozzle controlled precisely can be the only waste liquid processing method in gas combustion equipment.

[Vision for Future Liquid Fuel]

The liquid fuel made from oil has been long time said to be drained over time. To be sure, compared with a natural gas, the residual ratio of oil is low, and it is considered not to be avoided that its price rises with drain of resources. The conventional consideration regards strengthening of the energy supply system mainly with natural gas until the use of the nuclear fusion heat called energy of the next generation as its assignment

However, the merit of the liquid fuel in waste liquid disposal is technology which is very worthy when protecting the earth environment as mentioned in the forms of operation. Fortunately, since portability of liquid fuel has been appreciated, there has been technical accumulation of synthetic liquefaction fuel compoundable with the alcohol from the cellulose of recycling resources or with natural gas or coal for many years, and it is thought that it becomes a profit base with the jump of oil price. There is no possibility that the usefulness of this processing method of the present invention may not be lost when a natural gas becomes cheaper than liquid fuel, therefore, there is no fear that this processing method may obsolete by drain of petroleum resources.

[Crude Alcohol]

The used paper such as magazines currently incinerated which is difficult to be reused can also obtain the alcohol to which effective use is expected as a heat source, if it passes through the process of from cellulose to sugar and to alcohol.

However, in order to use alcohol as direct fuel alcohol it has to be refined with high purity. But to obtain the refined alcohol with high this purity, very much energy and cost are required. However, the distilled water in the crude alcohol obtained with easy equipment like single stage distillation can in fact be used also for a gas turbine or a diesel engine as a means to reduce NOx and smoke dust of industrial combustion equipment by this processing method, playing an important role in the NOx reduction. Moreover, by this processing method, the organic impurities simultaneously contained in a distillate can be processed without a problem. Such crude alcohol is, although is not waste liquid in narrow sense, very effective in reuse of energy and prevention of earth environment worsen by using itself in this processing method.

[Radical Control]

[Explanation of Radical]

Radical refers to the state that when atoms which constitute a molecule are combined, the atoms in a covalent bond state which share an electron were pulled apart by a certain reason, having a free electron. Although the liquid fuel and waste liquid which are used by the present invention contain various hydrocarbons and this radical gives various bad effects on mixture of fuel and waste liquid, on the other hand, the combustion reaction is bearing the role important for triggering a rapid heat reaction using this radical. The present invention requires sufficient consideration also about the point how to control this hydrocarbon radical.

[Relationship between Foreign Substance Generation and Radical]

Fuel is the aggregate of various hydrocarbons and various hydrocarbon and they are also contained in waste liquid (radical of fuel oil and sludge generation).
Although fuel receives various stresses in the refining process and an adjustment process and so a radical reaction occurs, since it converges during fuel storage and what changed into the stabilization state is shipped, these can be judged to be in a temporary stabilization state. In fact, this is attributable to the diversity of the hydrocarbon of the fuel. That is, since it contains the molecule which restores radical, not the ingredient easy to generate radical after progress of fixed time, although the sludge as result of a radical convergence remains, it becomes the stable state. For example, fuel oil was subject to lead to radical and there was no ingredient doing the restoration, a chain reaction would be caused by such radical, spontaneous combustion or polymerization would be brought about, and it would become what could not be used at all as fuel oil. It should be reminded that the sludge generated at fuel refining or an adjustment process is in fact a foreign substance as a result of the radical reaction converged. For this reason, apparently, even in the fuel oil considered seemingly stable, radical is also generated by stress, such as oxygen, ozone or an ultraviolet ray, and sludge generation is generated as a result of the convergence.

(Radical of Waste Liquid and Oxidization-Reduction Potential)

As for waste liquid, how much radical at least exist, unless it has the same knowledge and composition at least, what chemical reaction is triggered when mixing with fuel oil, cannot but depend on an experiment. That is, it is because composition of fuel oil itself is stable via the above-mentioned radical reaction even if a pure examination is attempted to be performed, and various foreign substances other than the main composition may be possibly mixed also in the waste liquid discharged as waste liquid.
However, when waste liquid has powerful oxidization or reduction potential, it is not hard to imagine that at least mixture of its waste liquid and fuel oil becomes the powerful stress of radical formation to the hydrocarbon of fuel oil. That is, oxidization reduction potential itself is the trigger of the radical reaction of giving or taking electrons. Therefore, as for oxidization reduction potential, you have to make them mix through the method of neutralizing before mixing them.

[Relationship between combustion and radical]

(Relationship among Cetane Number, Octane Number, Radical)

An important point in the theoretical composition of a diesel engine is the ignition nature of the fuel under the high temperature and pressure in the state where there is no flash point (namely, clump of powerful radical). While the indicator of the easiness of this ignition nature is the value called cetane number which evaluates the ignition nature, the octane number is an indicator which conversely shows the difficulties of ignition nature. This ignition nature represents a stress value when radical triggered by a stress of high temperature and the action of oxygen results in combustion (namely, rapid radical reaction) by chain reaction. That is, the fuel with high cetane number is weak from stress, and the fuel with the high octane number is strong from stress.
Here, the ignition nature and inflammability has to be clearly distinguished. Inflammability is equivalent to the steam pressure of a gasified ingredient among the fuel ingredients, and if there are many ingredients with low molecule subject to gasify, the flash point will fall. (Inflammability improves.) Conversely, ignition nature shows the weakness to stress, and if straight chain with a big molecular weight and unsaturated group exist many, ignition nature increases. Here, in the case of the fuel oil which consists of hydrocarbon with comparatively a low molecule like light oil, the longer straight chain structure the higher the cetane value and it can be defined as an excellent diesel engine fuel.

- Radical Control Ingredient of Heavy Oil, Resistance Ingredient

However, when a huge molecule exists like in A heavy oil or C heavy oil, the complicated element which cannot be solved by the above is involved. Although the polyphenol, which became famous for the carcinogenic prevention effect in wine, is the general terms of the compound of phenol with two OH group or more attached, it is presumed that various radical reaction control substances are contained also in heavy oil. That is, stability is high and the hydrocarbon with the structure in which the benzene ring is combined with various forms has extremely high stability and is difficult to be influenced by a radical chain. Polyphenol is protected by its own powerful benzene frame energy and, even if OH group reacts with oxygen radical and receives energy, it is distributed in the whole benzene frame and new radical is not taken outside. On the ground of the above, polyphenol is considered to have a powerful radical control action However, ironically, it gives the characteristic that it is not decomposed by stability of dibenzo-p-dioxin which is a base of dioxin, a dibenzo franc and biphenyl, etc., that is, the milder form of radical. This is a radical resistance ingredient in respect of its ignition nature. Further, furthermore, a difference between polyphenol regarded as a typical good substance and the dioxin regarded as a bad substance is, radically speaking, simply whether the substance configured is in OH group or chlorine, when a radical attack is received oxygen radical, while if OH group, it oxidizes and turns into — O (carbonyl), and restores radical by passing the H+ and making H2O, if chlorine is configured, gene is hurt by more harmful — CIO made by O-. It is presumed that due to its action conversely making O2 which is by nature unstable be radical, substance configured in 2.4,7,8 has an extremely high toxicity. However, the element common to both is that their own powerful frames are extremely stable with mild radical. It is presumed that dioxin has a receptor in a living body as living body hormone throughout it, and since it is taken in the position which is easier to damage a gene, with very small quantity those actions effectively works to the parts which has more serious damage. For this reason, it would not be exaggeration to say that the ignition nature which is the stress resistance changes for every acceptance of fuel oil in the case of the fuel which becomes the product through various ingredients and stress as heavy oil does.

(Combustion and Radical Relation)

As mentioned above, although among fuels the substance which shows various characteristics radical exists, a very primitive chemical reaction called combustion is simplest chemical reaction that breaks the radical resistance of all the hydrocarbon that usually exists in fuel. For example, it is clearly probed from the fact that tannin famous as good polyphenol is easy to be burned by igniting a flame. There is no existing substance tolerant to combustion even among hydrocarbon with the most powerful frames.

- Radical Tolerance of Graphite

However, the above-mentioned polyphenol or policyclic condensation compound are thermally decomposed by receiving the powerful radical action of combustion, and generates the hydrocarbon gas at approximately 1-5 C easy to be burned. However, while C and H of the benzene ring is one pair in policyclic condensation compound, it can not turn into hydrocarbon gas since in a condensation position there is no H configured, and eventually remains as a graphite crystal. This is the so-called residual carbon. The problem is that this graphite is a very stable substance even against the radical with extremely high energy like radioactivity if it is in the situation without oxygen. That is, there is a fear that the soot with oil droplets whose surface has become graphite-like may protect internal hydrocarbon from radical of combustion. Since high-class charcoal, such as Bincho charcoal, raised the purity of graphite and has the precise crystal, the flames last very long.

Therefore, it is presumed that if a graphite crystal is generated at the central part of oil droplets with combustion of fuel oil, the probability that the hydrocarbon protected from the radical chain reaction remains by graphite also rises.

(Relationship between Water and Radical)

- Radical Control Effect of Water

Water is a substance with very high radical tolerance like the above-mentioned graphite. It can be said that the fact that if a damper is poured on the above-mentioned combustion it stops is also a primitive chemical reaction stop-action. (Radical control action) It is considered that this would result from the boiling point level of the normal water or steam, the size of specific heat, and the size of evaporation latent heat. That is, the capability which absorbs the energy from the outside is high and controls radical. This is clear from the fact that water can be used not only as the reactor core material of a nuclear reactor like the above-mentioned graphite but also as emergency shutdown material which must need most reliable. It is presumed that the cause of the radical control effect of the water is in the peculiarity of water or steam such as high specific heat, high boiling point , and the like, namely, in the polarity of water and intermolecular interaction with it. That is, it is thought that the water which has the bigger intermolecular interaction by polarity like the above-mentioned polyphenol has the action which absorbs radical within its intermolecular interaction, and does not make it transmit outside. Besides, it is presumed that since this intermolecular interaction is maintained even if it becomes steam in a usual temperature and a usual pressure range, it has the excellent radical control with the peculiarity of steam. Although some theories interprets it has cluster structure with the extraordinariness of intermolecular interaction resulting from this polarity, there is nothing in the theory completely solved about this part.

- Fine explosive radical reaction of water

It is a question whether or not water has the radical control effect in any states. Decomposition of the dioxin by critical water or super critical water etc. which has become the centre of attention recently, shows that H2O also has a very powerful action (that is, smashing the stability of dioxin), and the water gas reaction which decomposes the above-mentioned graphite also shows that the water can change to the powerful radical according to the circumstances (that is, steam and carbon react above 1000 degrees C) It is presumed that water in such high temperature exceeded 1000 degrees C would have higher reaction activity than O- and H+ which originate in a general combustion reaction do. Particularly, the oil droplets sprayed is not one, and when two or more particles interfere mutually and receive the reaction of hot steam, it makes this action improve further.

[Cause of Radical Generation]

As mentioned above, although most common radicals are hydrogen radical or the oxygen radical which oxygen or hydrogen has become O- or H+ from the stable state of O2 or H2, the other parties who have received or been robbed of electron also become each radical.

(Cause of Radical)

The causes of radical generated are various. Physical causes such as the above-mentioned heat, an ultraviolet ray, and radiation, O3 or other various oxidization reduction substances, and movement of various electrons resulting from a chemical reaction can become causes of a radical generation. In this patent, it is heat that needs special attention. It is commonly considered that heat is generated by the process of heating and if heat is not applied to a liquid, radical by heat is not produced. However, the pressurization with the pump which transports fuel shows the surprising heat generation with a few air bubbles by the heat insulation compression effect, and the cavitation phenomenon produced by the mixer used for the mixture of an orifice and a liquid which performs flux control also gives the extremely big heat stress (radical) to the fuel at the micro level.

[Fuel Oil and Water in Combustion Reaction]

The characteristic given to the fuel oil of the water in a combustion reaction seems to have a very good relationship in prevention of pollution in the sense that it works repressively (NOx control), on the other hand, it becomes radical (smoke dust control) at the certain critical point (probably 1000 degrees C) (smoke dust control), before ignition of fuel oil. Although a NOx control means such as water injection or emulsion combustion and the smoke dust control mean do not seem to be devised as based on such theoretical consideration, even if this point was solved, it cannot be helped accepting that water injection or the water emulsion technology itself have no patent nature. However, taking into account the situation that such water injection technology and water emulsion technology in the boiler combustion considered most early cannot be necessarily said to be successful, it is considered to be important technology to apply appropriately by the method based on the theory.

[Reason for Unpopularity of Water Injection or Emulsion Combustion among Boiler Combustion Engineers]

(Sacrifice of Latent Heat Loss)

As mentioned above, an action of the water in combustion demonstrates the excellent characteristic in terms of prevention of pollution. However, the water which finished such a duty is discarded as steam, and cannot carry out heat recovery. Therefore, in the burner which had flammability improved based on an advanced combustion design, the radical effect by emulsion combustion hardly contributes in respect of efficiency, but the evaporation latent heat part becomes loss of efficiency, and it reduces the efficiency of the system.

(Limited Effect of NOx Reduction in C-heavy-Oil Combustion)

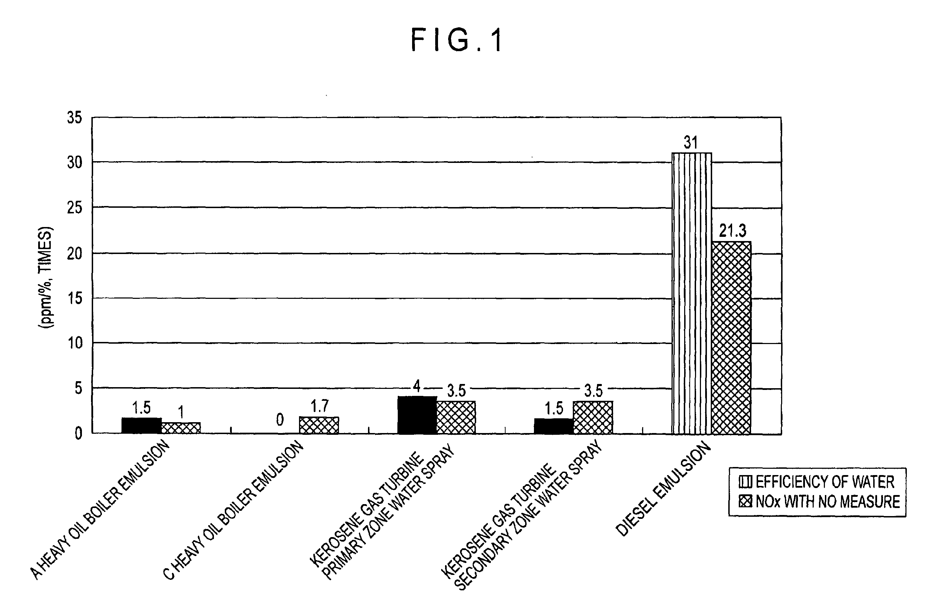

In a boiler, it is a NOx reduction action that water injection or emulsion combustion was expected most. There are many engineers who recognize the radical control action of water unconsciously, it would not be so hard to have such an idea that if steam acts into a flame, that flame temperature falls and it contributes also to reduction of NOx. However, as it is, in the combustion which follows a comparatively slow combustion process like a boiler, the amount of NOx reduction by flame temperature fall is very little. Fig. 1 shows the value how much effect the value for no NOx measures against a boiler, a gas turbine, and a diesel engine (multiple which set A heavy oil boiler combustion to 1 for the NOx value when not taking low NOx means at all) and 1% of water would have in NOx reduction. Unfortunately, since an understanding to water emulsion in the gas turbine engine can not be won in present, although the data based on water spray was adopted, the boiler and the diesel are based on the value of actual measurement. Fuel is not specified by the diesel engine as nitrogen, residual carbon, etc. in fuel hardly depend on the amount of NOx generated.

As can be seen in the Fig.1, the NOx reduction effect of C-heavy-oil boiler emulsion is considered be mostly zero on average by the knowledge of 100 or more examples of the inventor. It is presumed that this fact would result from the event that the NOx reduction efficiency in the boiler combustion which can be found in A heavy oil boiler emulsion, and the factors for NOx rise resulting from the radical action in emulsion combustion process are countervailed accidentally. That is, since C heavy oil has much hydrocarbon of a high polymer (there are many radical resistance substances) and the viscosity of fuel is also high, diameter of oil droplets tends to become large, and that a combustion reaction is difficult to progress. However, it is considered that after emulsion makes atomization of fuel by fine explosion action which is a physical phenomenon, it serves as high temperature further and becomes radical, hastening decomposition of these high polymer substance faster and faster. For this reason, it is presumed that even if water is added when the temperature of the primary range in which NOx is generated most easily is within the range where good combustion can be maintained, it is countervailed by the heat absorption and the radical activity action by evaporation latent heat of water, and it agrees to the result of actual combustion application.

[Superiority of Emulsion Combustion Based on Radical Theory in Waste Liquid Processing]

Although it is thought that water injection and steam injection also virtually causes such a radical reaction, as the moisture sprayed in the second half of combustion in fact works effectively by only the control action of radical, there is almost no effect in the unburned part control. That is, it is because the ratios at which water turns to radical differ clearly between the latent heat and sensible heat which water has acting before combustion, and the one acting after combustion.

That is, in the new emulsion combustion theory propounding that it is sprayed with fuel, since it is considered that with an ignition of a fuel oil droplets changed to an atomization by fine explosion, it is attacked by H+ and O-and instantly a thermal decomposition reaction progresses, it is not hard to imagine that it demonstrates greatest effect also to decomposition of various kinds of organic matters contained in waste liquid other than the fuel contained in fuel.

However, when waste liquid containing an organic matter is sprayed to the flame performing ideal combustion formation, unless control with a flame is performed very well, there is a fear of only resulting that decomposition of the organic matter in waste liquid is controlled by the radical control effect of water. In fact, this is the point that shows greatest difference when comparing the dioxin control by the waste liquid incinerator and the measure to which emulsion combustion is applied.

[Importance of Adequate Mixing]

There is another important point about the radical control in waste liquid mixture. It is the point that mixture of waste liquid and fuel is performed at once and quickly, and after mixture it is burned immediately.

(Mixture at Stretch)

There are the tank blending method and the in-line proportionality controlling method also amongst the methods of mixing fuel as there are in water emulsion manufacture. The inventor has also been manufacturing and supplying many in-line proportionality mixture machines of A heavy oil and C heavy oil by applying the technology of water emulsion equipment. Although this was based on the experiential knowledge that there is much sludge generated with the tank blending method, this point has also been able to be figured out by the radical theory. That is, it is not difficult to imagine that the mixture of the fuel oil of A heavy oil and C heavy oil which have different stress histories and composition each other would bring the new cause of radical generation to the interface to no small extent.

When movement of the electron occurs only on this interface, although unusual phenomena such as a fire is not caused by this scale of radical it as fuel has a control substance, a chain reaction is subject to take place and sludge with a huge frame of a more stable substance tends to be generated. Surely, there must be a cause of sludge by malthene withdrawal of asphaltene. It would be true that a chain reaction tends to occur with the mutual mixture if these are kept contact but not mixed

The phenomenon that the substance which is subject to receive a radical chain reaction is avoided by dispersing itself has consistency well with the thin combustion theory which is the latest low NOx means, although it is paradoxical. That is, in the thin combustion range (there is a lot of air to fuel.) in which combustion with very low NOx is possible, unless enormous amount of energy exists, a chain reaction does not occur. That is, a chain reaction does not occur and engine does not run only by the sparks (radical) like a spark plug. Therefore, by creating the fuel concentrated zone only in the circumference of a spark plug, a little radical makes this concentrated zone burned, and this large radical makes radical transmitted to the whole combustion chamber.

In conclusion, it is important in designing mixed equipment to lose a portion with the high concentration (portion which a radical chain tends to generate) in the mixture of fuel and waste liquid (especially mutual dispersibility is dissolution dispersion) and make it uniform concentration at once.

(Quickly)

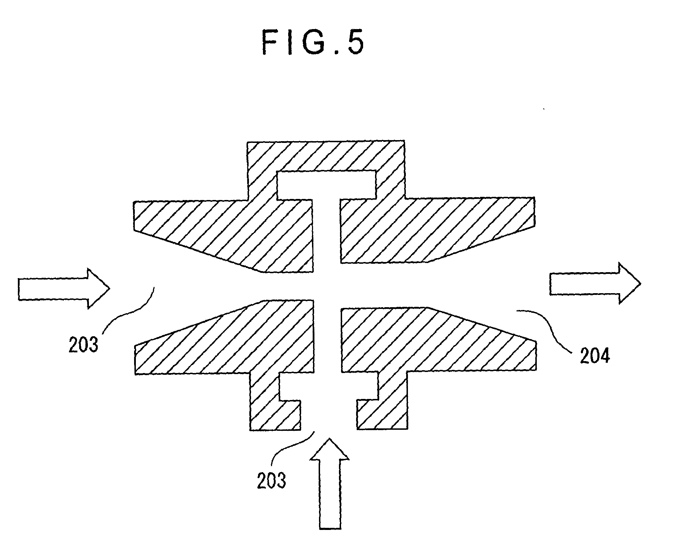

This is the completely same reason as the above-mentioned. The injector type mixer of Fig. 5 is the mixer form adopted after the inventor has noticed radical theory, and although it is adopted for the mixture of fuel to fuel as a pre-mixer, it is the ideal mixture method of bringing the flow velocity forward, making it mixing equally from the circumference, and producing a turbulent flow after mixture.

The theory of injector itself is more desirable and easy to this uniformly quick mixture. Incidentally, the inventor believes that the mixer of a revolution guidance shuttlecock system as the mixer by the present invention is slightly inferior to the injector type in terms of the easiness of radical generation as mixture takes time in the process which goes via two or more steps of guidance shuttlecocks.

(Simple Mixture)

Not only in the above-mentioned chemical mixture but also mechanical mixture, energy is required not a little, and this energy is transmitted to the fluid which is going to be mixed and becomes the cause of radical. Therefore, the mixed energy beyond necessity is not only unnecessary, but may rather become a source of an obstacle for mixture of the ingredient which you do not want to give radical before combustion as much as possible like fuel and waste liquid. In this point, although the mixer of [Japanese Patent No. 1220654] was not designed based on this radical theory, but from a viewpoint of mixing efficiently with necessary minimum energy, it seems to be adjusted with the theory based on even-even radical theory, and have succeeded as a mixer for emulsion fuel manufacture.

When correlation between familiar foods and various mixers was investigated after recognition of the radical theory, the interest things were found. They were milk and chocolate. Milk and mixer *(Translator's comment: Milk and chocolate)* are also produced by a mixer in which milk and chocolate are raised pressure with a high pressure pump called homogenizer and passed through fine orifices to obtain emulsion with highly homogeneous quality.

However, milk and chocolate here must be receiving the frightful radical reaction. But, it is the well-known fact that there is no problem even if we consume the milk and chocolate homogenized. That is, although the same is said of heating, these milk and chocolate seem safe since there is the outstanding radical control effect in those and there is an action which absorbs and makes such stress harmless. But, it is not hard to imagine that if you drank milk in the state without stress based on this theory it would be healthier.

Therefore, in the present invention based on this theory, you should also use the mixer with high energy using the ultrasonic wave, etc. as a mixed system should be used only for mixture of very stable waste liquid.

**Brief Description of Drawings**

Figure 1 is a graph showing an effect of NOx reduction;

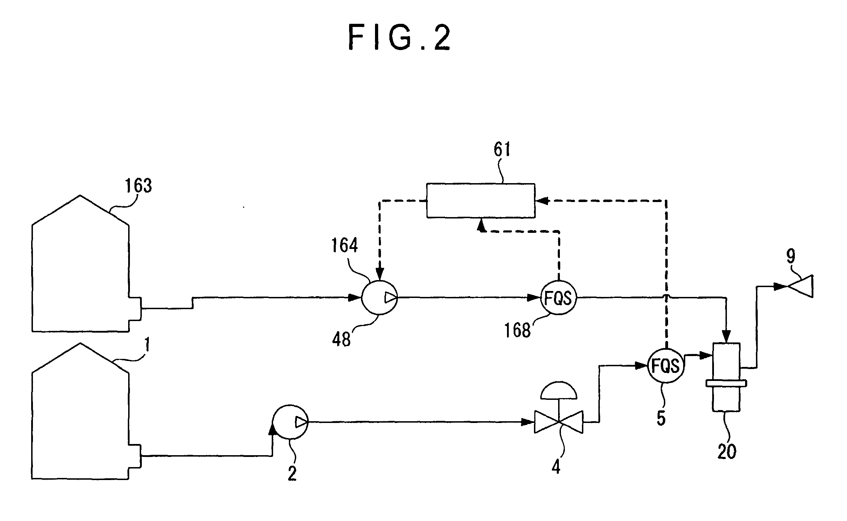

Figure 2 is a basic block diagram showing a water emulsion fuel oil manufacture equipment of a burner-front-in-line proportion system;

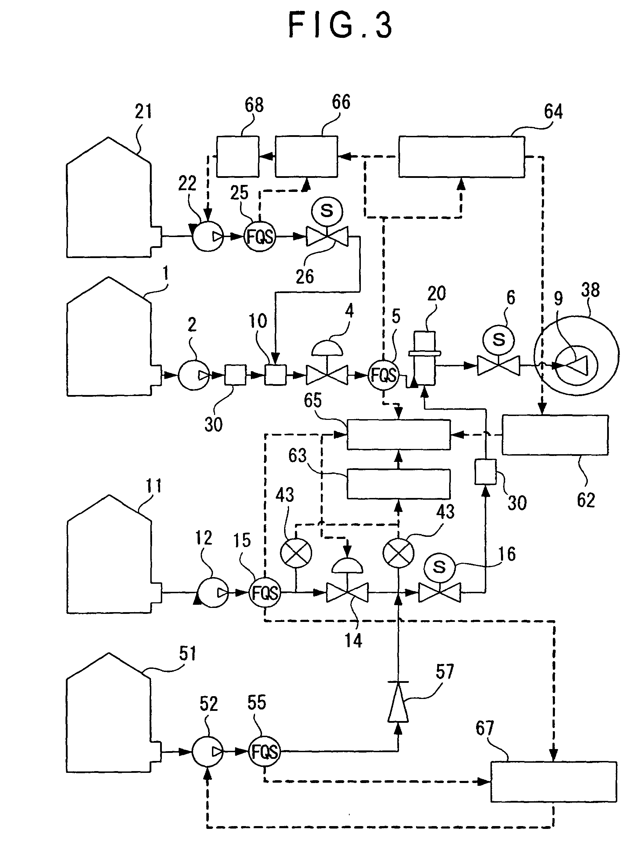

Figure 3 is an illustration showing an application of proportionality injection to a boiler;

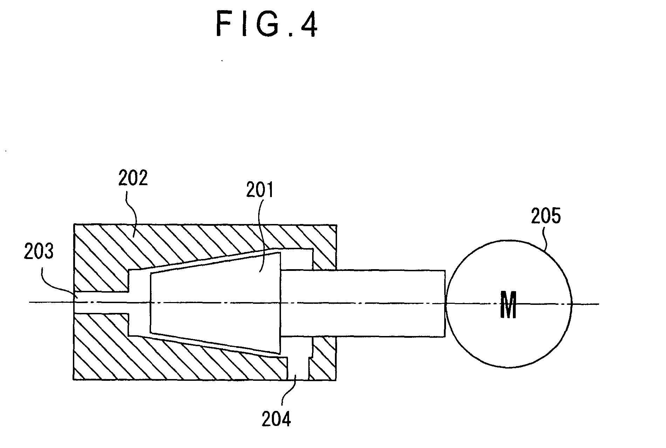

Figure 4 is a block diagram showing a mixer with a crush function;

Figure 5 is a block diagram showing an injector-type mixing machine;

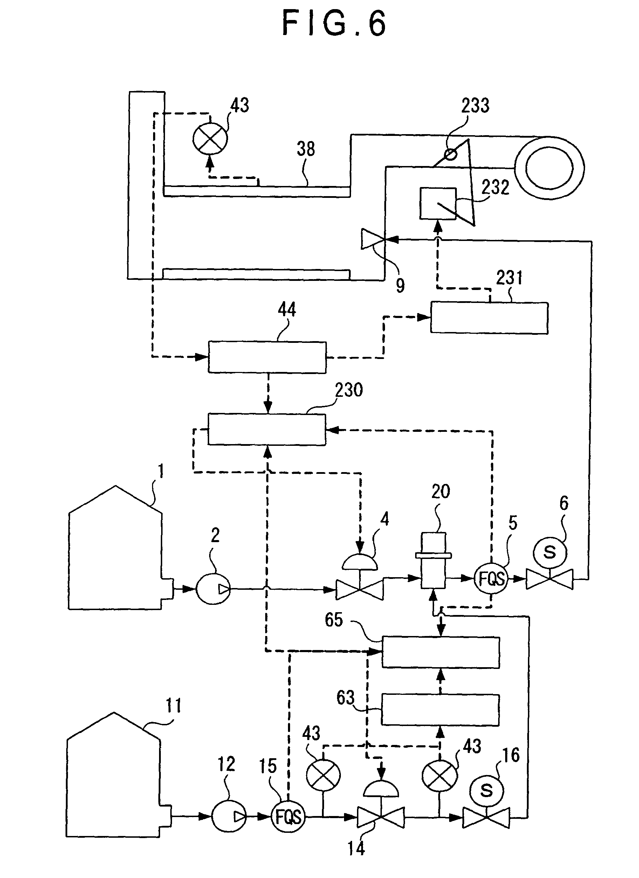

Figure 6 is an illustration showing an air-fuel ratio control method when injecting waste liquid with calorific value after a fuel adjustment valve;

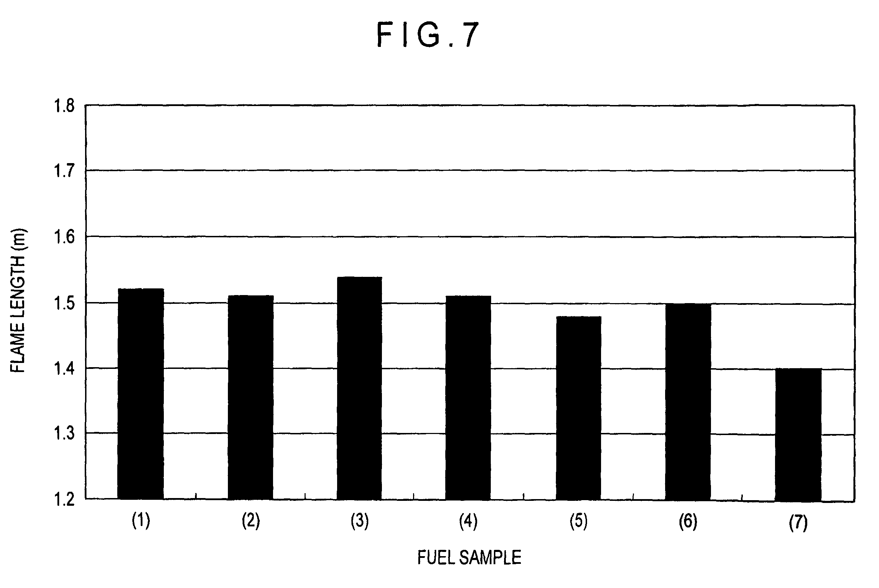

Figure 7 is a graph showing a result of measurement of flame length in case of burning water and various waste liquid;

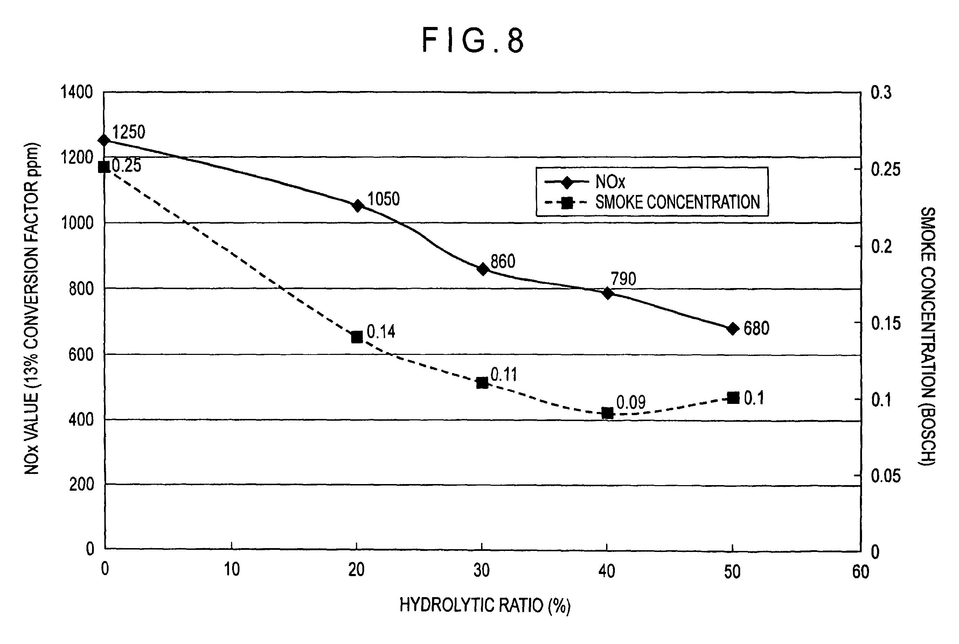

Figure 8 is a graph showing a result of measurement of NOx and smoke concentration in diesel engine currently employed with C heavy oil;

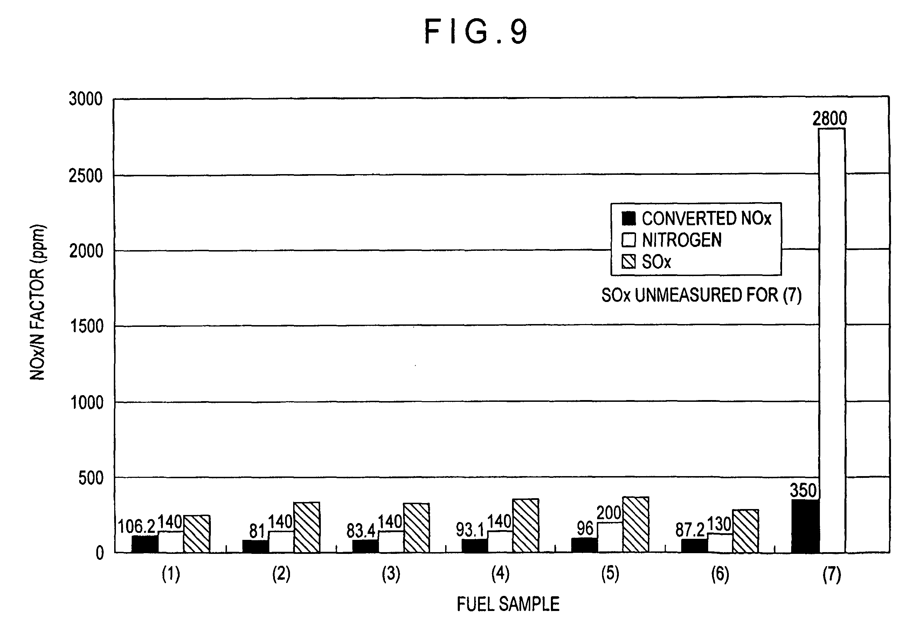

Figure 9 is a graph showing an effect of reduced thermal NOx by water emulsion effect;

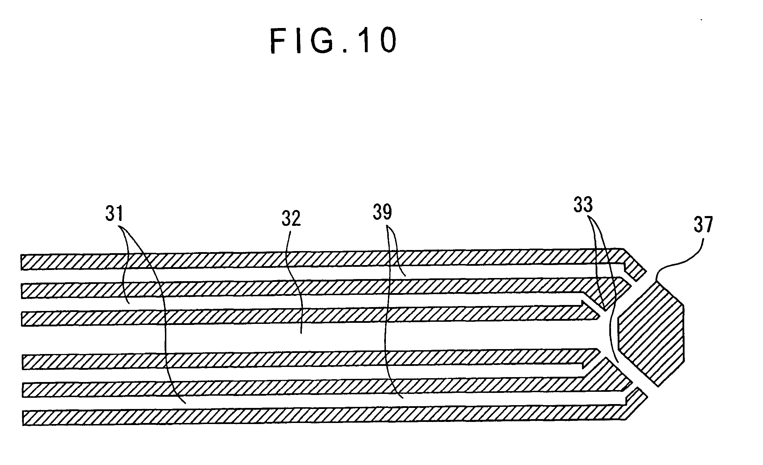

Figure 10 is a block diagram showing a processing form utilizing a water injection nozzle of a middle-mixing type burner;

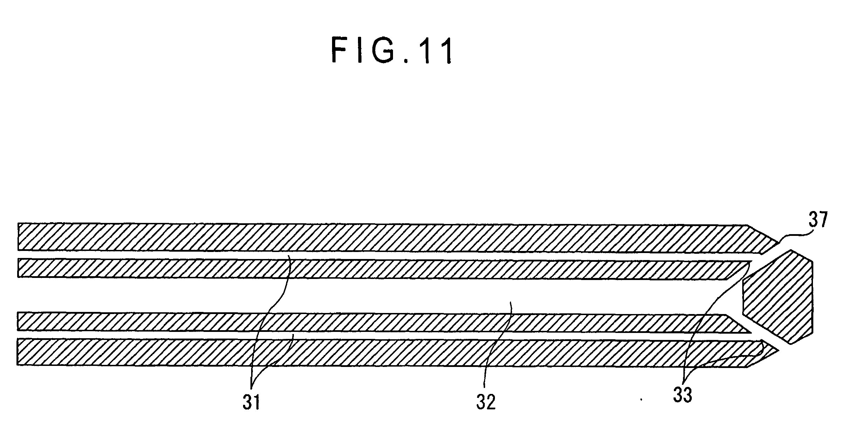

Figure 11 is an illustration showing a burner;

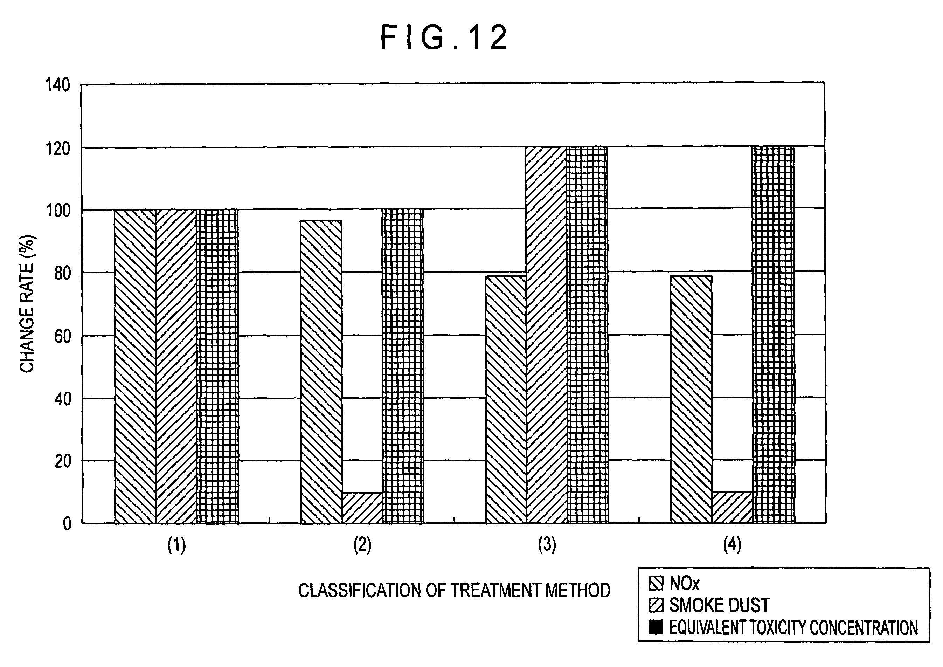

Figure 12 is a graph showing harmful substance concentration in exhaust gas;

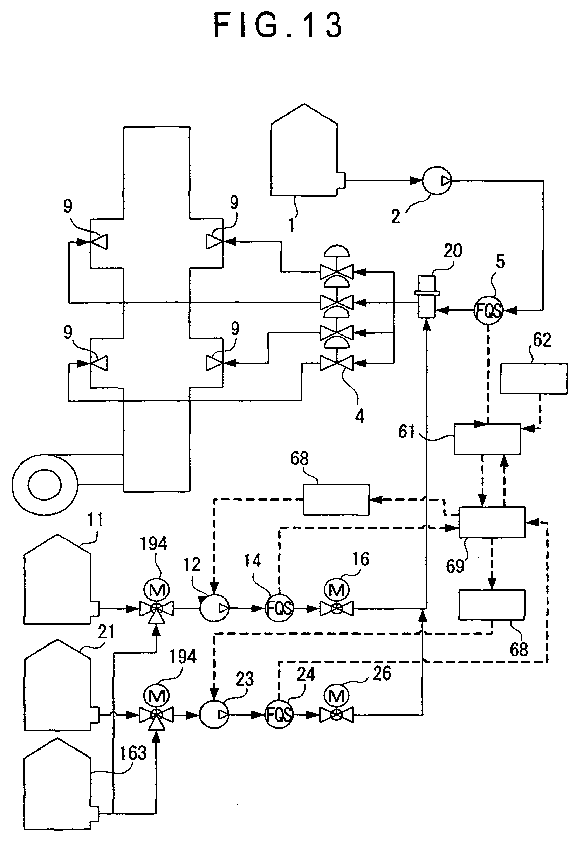

Figure 13 is a block diagram showing an application to a lime calcinations furnace;

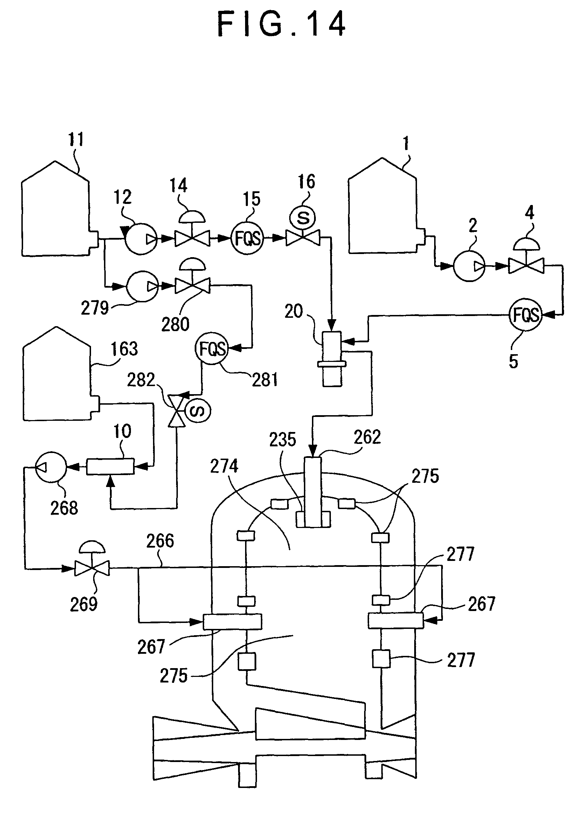

Figure 14 is a block diagram showing an emulsion method of a gas turbine engine and injection of waste liquid into a water injection nozzle;

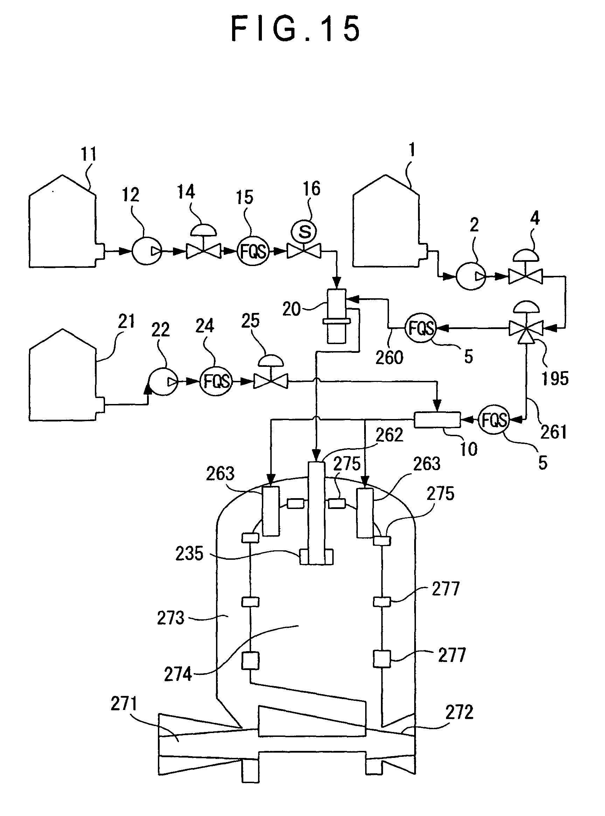

Figure 15 is a block diagram showing an application to a gas turbine without a water injection process for reducing NOx;

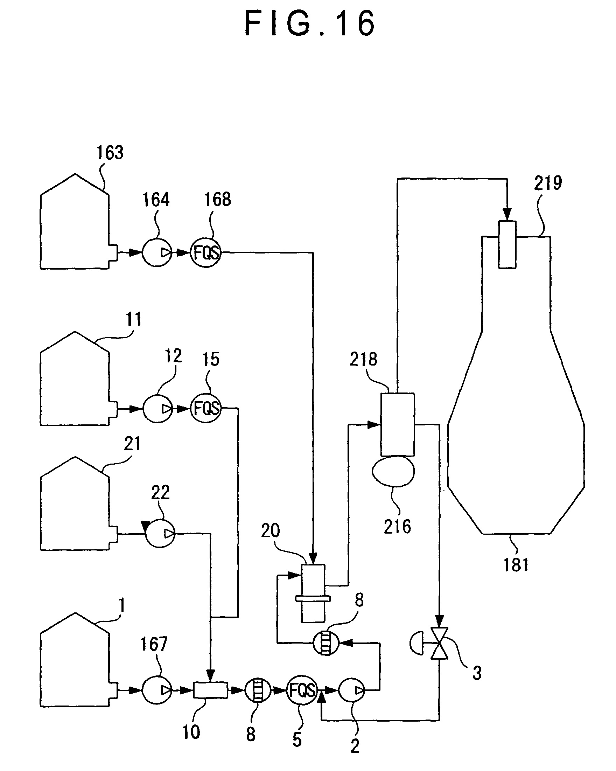

Figure 16 shows a block diagram showing a vertical type lime calcinations furnace;

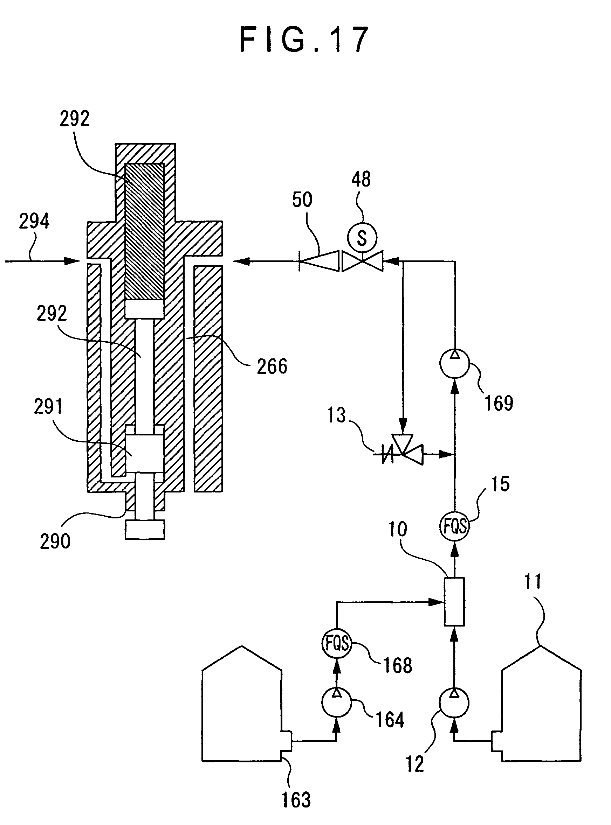

Figure 17 is a block diagram showing waste liquid combustion;

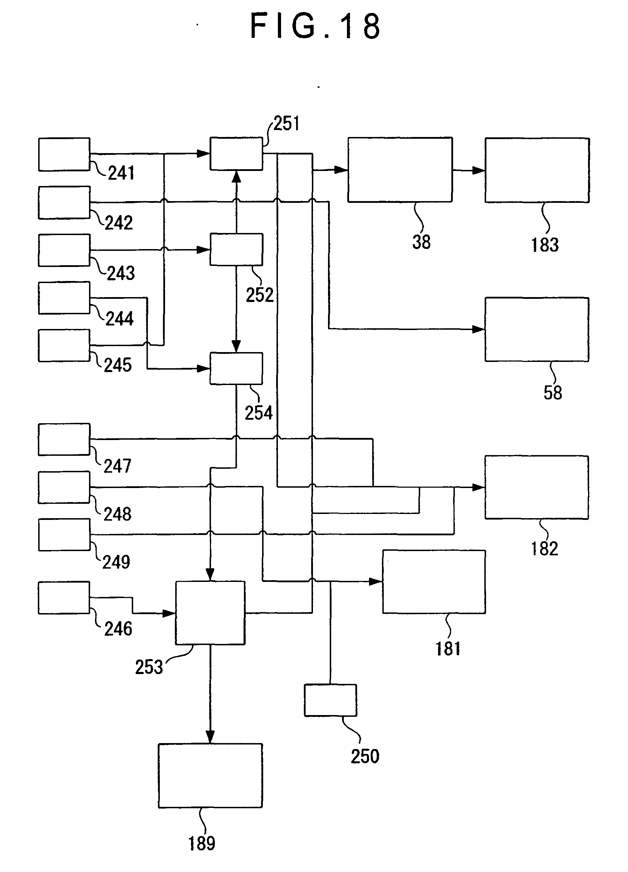

Figure 18 is a block diagram showing an entire process;

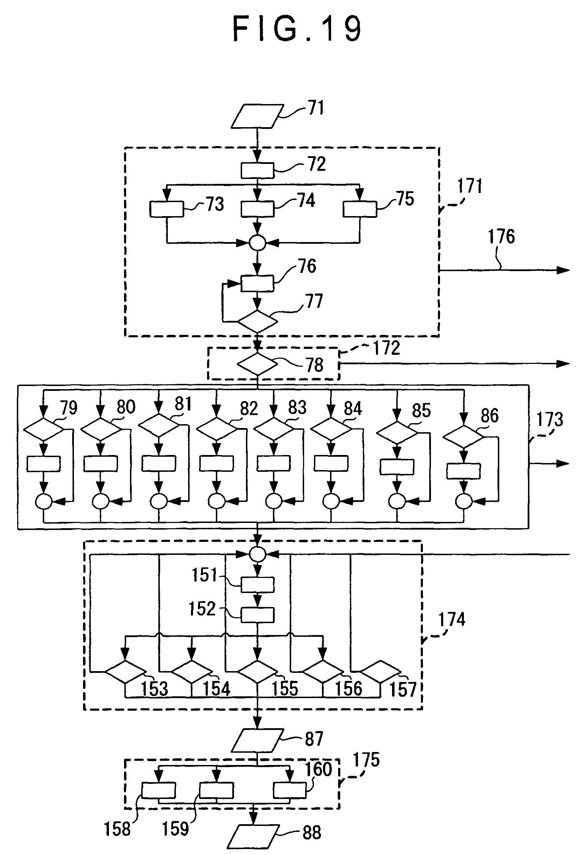

Figure 19 is a flow chart for processing waste liquid with industrial combustion equipment;

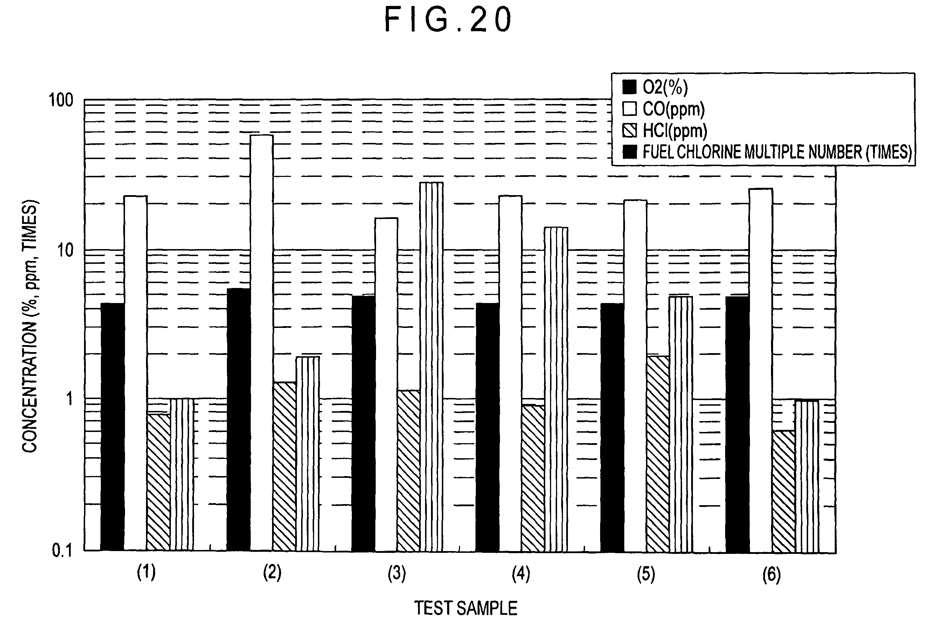

Figure 20 is a graph showing oxygen concentration, CO content, HCl content, and total amount of chlorine during experiment;

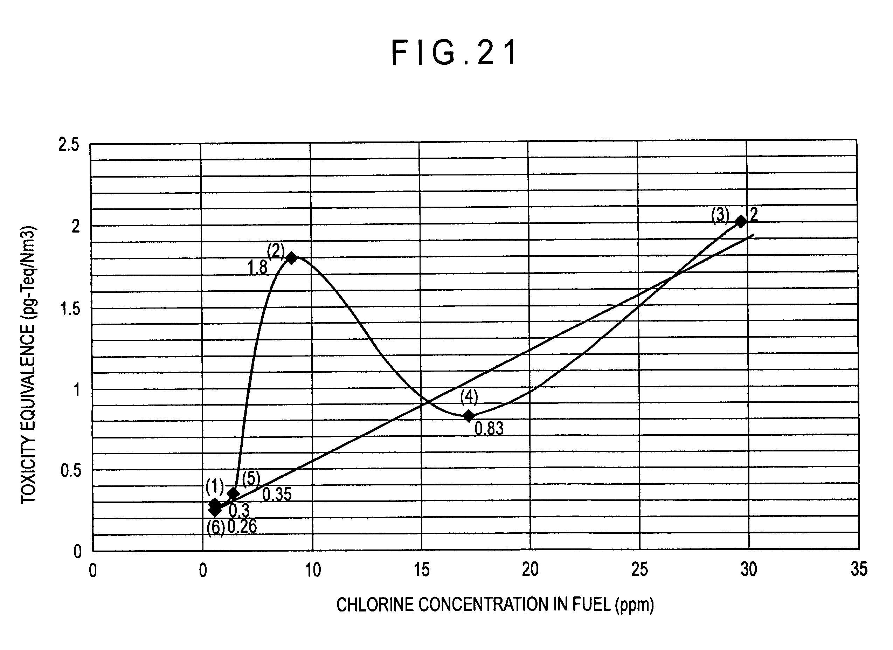

Figure 21 is a graph showing correlation of toxicity equivalent value and chlorine concentration in fuel;

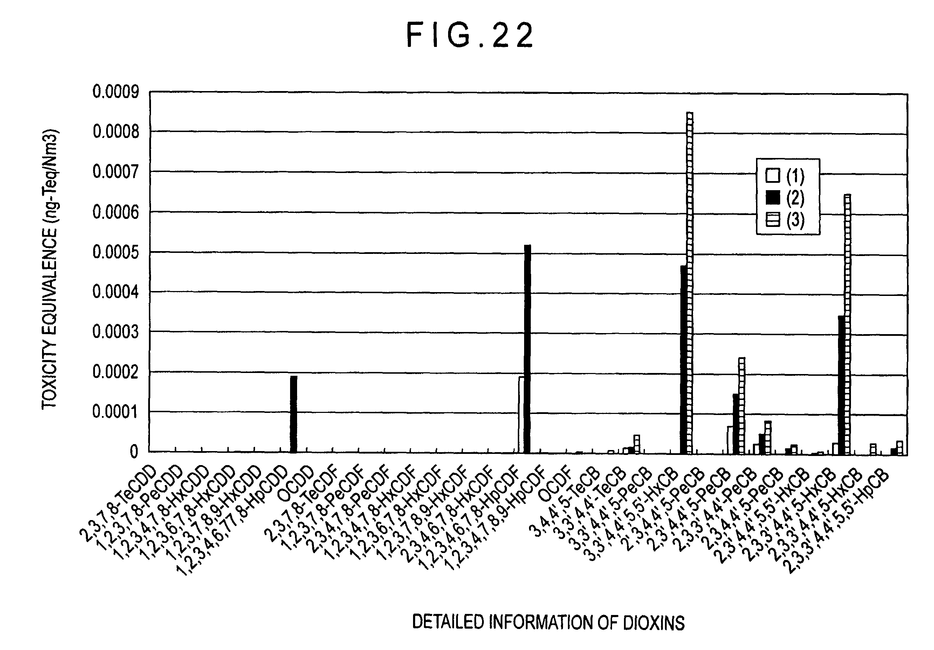

Figure 22 is a graph showing toxicity equivalent value of heavy oil, tap water, and blow water sample;

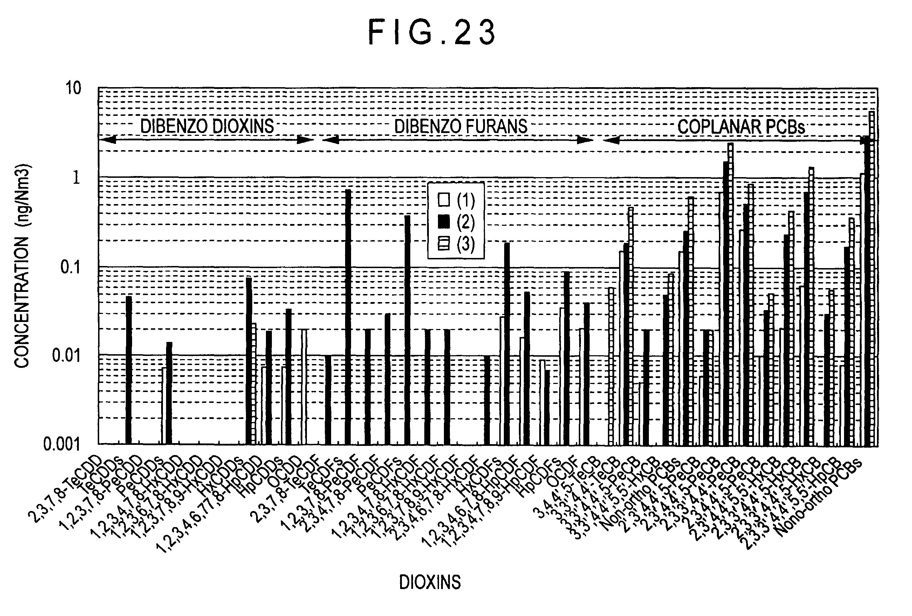

Figure 23 is a graph showing distribution of dioxin generation;

Figure 24 is a block diagram showing a basic composition of a boiler, an absorption-type freezer, and the like;

Figure 25 is a block diagram showing basic composition of a boiler with a multi-burner;

Figure 26 is a block diagram showing a basic composition of an incinerator and the like;

Figure 27 is a block diagram showing a basic composition of a gas turbine cogeneration;

Figure 28 is a block diagram showing a basic composition of a diesel engine;

Figure 29 is a conceptual diagram showing an internal-mixing type burner;

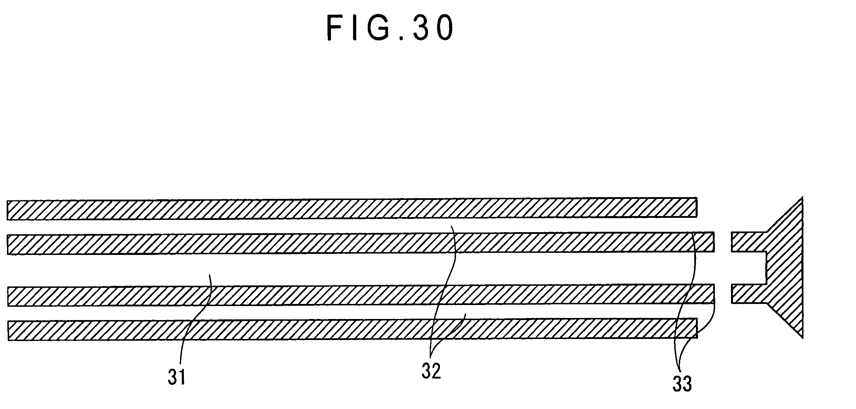

Figure 30 is a conceptual diagram showing an external-mixing type burner;

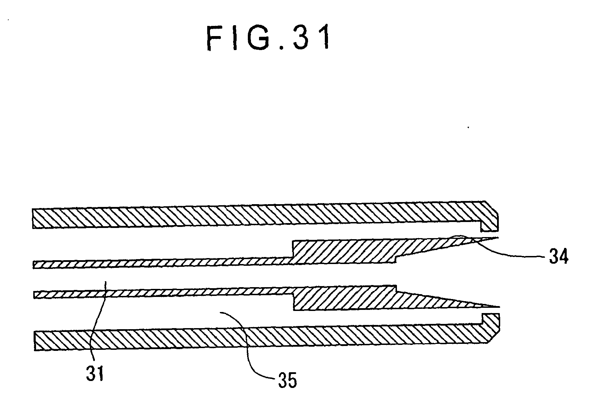

Figure 31 is a conceptual diagram showing a rotary burner;

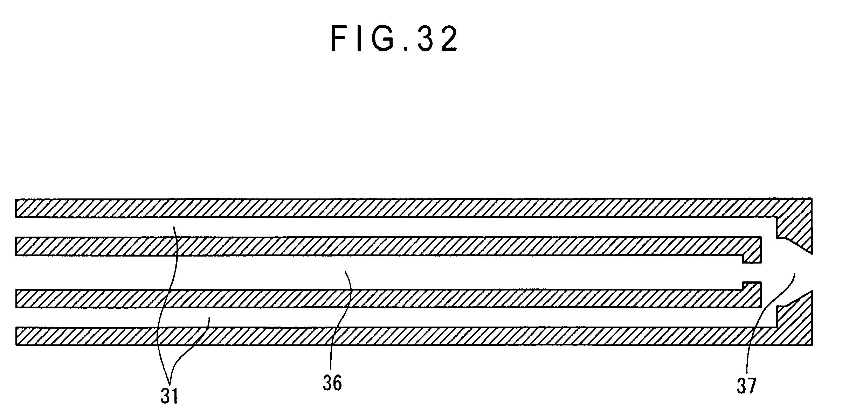

Figure 32 is a conceptual diagram showing a back-pressure spray type burner;

Figure 33 is a conceptual diagram showing a combustion mechanism of three-step combustion type;

Figure 34 is a conceptual diagram showing a flame pattern seen from the front of a split frame burner;

Figure 35 is a conceptual diagram showing a combustion mechanism of an exhaust gas self-recirculation burner;

Figure 36 is a conceptual diagram showing a rich-lean combustion mechanism in a gas turbine;

Figure 37 is a conceptual diagram showing a composition of exhaust gas recirculation type combustion equipment;

Figure 38 is a block diagram showing a basic composition of water emulsion fuel oil manufacture equipment employing a tank blending method; and

Figure 39 is a block diagram showing a basic composition of water emulsion fuel oil manufacture equipment employing the convention in-line proportionality system.

**Best mode for Carrying out the Invention**

An embodiment of the present invention will be described with reference to attached drawings.

[Highly Precise Emulsion Manufacture and New Theory]

Emulsion technology applied by the present invention is premised on emulsion equipment with the highly precise proportionality injection mechanism called 'burner front in- line proportion system' in principle.

[Burner Front In-Line Proportion System]

Fig. 2 is the basic composition of the water emulsion equipment which the inventors are actually manufacturing in present.

In Fig. 2, the fuel stored in the fuel tank is pressurized with a fuel pump 2, the fuel for which flux adjustment was carried out with the fuel flux adjustment valve 4 passes through the fuel flux meter 5 and the mixer 20, and is burned by the burner 9. Water is discharged with the positive displacement water pump 164, and it is injected into a mixer via water supply flux 168 meter. Considering only flow composition, it has very simple structure. We should use the mixer which the diameter of an emulsion particle does not change with flux change like the mixer used by the above-mentioned [fuel oil burning pump front in-line proportionality system].

(Solution of Transitional Phenomenon)

However, in proportion control technology, very severe control is called for injecting water into a fuel pipe by which flux control was practiced with a fuel flux adjustment valve. One is the problem of the transitional phenomenon at the time of an injection start and stop.

That is, in the case of injection at this point, the fuel by which flux adjustment was carried out with the fuel flux adjustment valve is fixed in many cases no matter whether or not the water is injected. (This also depends on the characteristic of a fuel flux adjustment valve.) For example, when the water of 30 L/h is injected at once where it is flowing at the flux of 100 L/h, the amount of fuel injected by the burner at the moment of injection increases to 130 L/h which is the sum of two fluids.

However, at the moment of injection, water is not injected into the fuel near the burner, and the transitional phenomenon in which the fuel itself flows at 130 L/h occurs. For this reason, a lot of emitting smoke will arise immediately after injection. Conversely, if water injection is suddenly stopped where it is stable in this state, the fuel sprayed by the burner at 130 L/h will decrease to 100 L/h at a stretch. However, since about 23% of water is contained in the fuel near the burner immediately after stopping, the substantial amount of combustion decreases to 87 L/h. This thing leads to superfluous air combustion, and becomes cause of generation of white smoke or flame failure.

Therefore, in order to solve these states, the special control method, which is enforced at the speed to which injection stop of water supply and hydrolytic change, etc. do not affect a combustion system, is needed. In addition, since the transitional phenomenon is the value determined as the capacity of the fuel system from a mixer to a burner tip by flux, you should design it with the shorter thin line as the injection ratio can be quickly changed by lessening distance between a mixer and a burner and making a piping caliber as small as possible in the case of the use requiring the severer load characteristic than a boiler does like a gas turbine.

(Response of Load Fluctuation)

The second is fluctuation in load. Combustion equipment like a boiler is often required the high-speed load response with a load fluctuation, and as the consumption point of steam is spread especially in many minor capacity boilers, this tendency is remarkable. Although a precise proportion follow-up which can keep up with the speed change in such change of fuel flux is called for, it is also the feature that there are many engineers who have not noticed this thing. In short, although the fact that the above-mentioned transitional phenomenon occurs as a result of response delay taken place to the fuel change can be understood by the explanation up to here, for example, when the amount of combustion increases to 200 L/h in the state where it has burned in 100 L/h, if hydrolytic ratio is 30% and emulsion fuel of 130 L/h and 260 L/h are not respectively sprayed from a burner without error, neither transitional emitting smoke nor white smoke is avoided. However, in the usual PID calculating method, even if feedback control currently considered to be highly precise is performed, the transitional situation of 130 L/h→230 L/h→260 L/h surely occurs. This is because the follow-up nature of proportionality water injection is low.

Water injection control of this technology is practiced by inputting the signal from a fuel flex meter into the flux proportionality controller 61 and performing rotation speed control of a capacity type water pump by the signal which has done high-speed proportionality operation based on the fuzzy reasoning mentioned later here. Although the open loop control is possible in principle as the capacity type water pump is using the highly precise thing, (if it is not open loop control conversely, such a high-speed proportionality response is difficult.) discharge amount per rotation varies over time or by instrumental error. Then, the above-mentioned high-speed proportionality operation is made to perform, after identifying the instrumental error characteristic of the feed pump currently used based on the signal of a water supply flux meter and considering this instrumental error characteristic beforehand.

(Other Problems)

Although not stated in details here, without overcoming such various technical problems that inner pressure of a mixer does not change according to combustion load or as prevention of the boil phenomenon of the water injection accompanying the rise of fuel oil temperature, this flow that looks easy at a first glance does not become useful with actual equipment.

Regarding proportion control technology, the technology which inventors have applies fuzzy reasoning and takes the method and makes the water injection ratio follow-up momentarily at the moment fuel is increased, and that since we developed the proportion injecting method of causing neither the overshoot resulting from hunching etc., nor the under-flow phenomenon, its technology is operated safely and efficiently in the actual industrial combustion equipment exceeding several 100 sets.

(Actual achievement of equipment that many problems were solved)

This equipment is the injecting method or the equipment which has solved all the problems as emulsion equipment when putting emulsion combustion in practical use. While being able to randomly set up not only C heavy oil but also A heavy oil and kerosene with a very early separation speed within limits in which a burner can burn without using additive such as an emulsifier by using such emulsion fuel manufacture equipment, this equipment can solve the problem of the ignition nature by the water separation at the time of a reboot by stopping water injection automatically in a low combustion region using the characteristic that a air-fuel ratio does not change when water stops.

[New Theory of Emulsion Combustion]

It used to be conventionally believed that emulsion combustion would reduce soot by fine explosion action and the water gas reaction. However, although a lump of the carbon crystal of soot is generated in the second half of combustion and this combustion promotion is not supposed to contribute to NOx generation, we were annoyed by the wonder cause such that while it serves as the reduction effect of NOx in combustion of A heavy oil or kerosene in combustion of an actual boiler, there is no NOx reduction effect in C-heavy-oil combustion. (If good emulsion fuel is used, even if it makes water supply increase, NOx will hardly fall.) Due to this phenomenon, the application of the emulsion combustion to a boiler is limited, and it is a cause of being hesitant about the application of the emulsion combustion itself to the other combustion functions.

- Radical theory

However, the answer for this question is easy if you consider the effects of emulsion combustion as the fine explosion action and the radical action. That is, it is as having mentioned above that emulsion which is able to perform good combustion becomes radical after fine explosion, and the present invention discovered based on this theory is accompanied not by the mere idea that heat recovery is attempted by turning the organic matter harmless by thermal decomposition, but by the theoretical backing based on scientific safety.

[Conclusion of Emulsion Combustion]

The inventor conquered various dangerous factors of water emulsion combustion, obtained the knowledge of the new radical theory from the delivery examples and operation records of the water emulsion equipment in hundreds of sets as the above-mentioned example of the methods, and established the waste liquid processing by this processing method. However, as not only indicated as the difficulty here but mentioned from now on, the difficulty of emulsion combustion is not only due to the cause attributable to the emulsion equipment, but also in the points that we have to appropriately combine various responding technology such as the burning method, the combustion means, etc. suitable for emulsion combustion which the combustion equipment side have to respond.

Moreover, since the amount of chlorine not less than waste liquid is contained also in case of using tap water as mentioned in the present embodiment and it is also clear it can become the cause of dioxin generation depending on its application, these obtained knowledge should be referred and utilized to cope with the environmental problem about the device that cannot overcome the cause of smoke such as these transitional phenomena, etc.

Furthermore, also in terms of the influence on the combustion chamber or the heating surface, as the emulsion-use water it is clearly more favorable not to use the water called soft water which replaced the calcium and magnesium by natrium, but to use the water called soft water before replacement, and in the case of the fuel containing vanadium, since raw water may be rather desirable than using pure water, it is necessary to select the optimal water quality in consideration of the burner type and the form of the combustion chamber, which its concentration is mentioned later.

[Examination of Waste Liquid Type]

Examination of waste liquid type is important for guessing the error range of the composition predicted beforehand and predicting by knowing the kind of waste liquid which performs incineration disposal, the main analysis substance which requires a huge amount of time and expense if specified only by composition or physical properties.

However, at any ratio, based on the information, such as the main materials, the processing substance, the ingredient expected, and concentration, of waste liquid, you have to investigate a waste liquid type, composition, physical properties, and the mixed characteristic.

[Food Type Waste Liquid]

Regarding food waste liquid, cation is needed about scum by biological decomposition, mold, etc, a transfer obstacle, etc. except for plant oil and the refined animal oil. When sugar and protein are contained, cautions are required also for a burner kind for the measures against a burn and carbon adhesion.

(Plant Oil and Animal Oil)

It is waste oil of deep-fried-dishes oil for tempura. Concentration specification of the salt mixed by the manufacturing process is important.

(Waste Liquid of Juice)

Processing of the waste liquid in manufacturing processes such as juice, and also salvage such as a pull-date piece is required. As for these, since ingredient specification is performed quite strictly for the product shipment by the producer side, the processing in which the possible injection ratio depends on the preset value for every item is possible.

(Waste Liquid of Milk)

Since it contains protein, salt, etc., that are easy to solidify by heating, and becomes the cause of NOx rise, cautions are required for combustion equipment, fuel used, a low NOx means, etc.

Further, although the milk evaporates the moisture in milk in a concentration process in case powdered skim milk is manufactured, since most of these evaporation ingredients is distilled water, it is the optimal as emulsion-use water. However, for the reason that a high-concentration milk ingredient may leak if abnormality is in a process, the same cautions as the milk are required.

(Stock Waste Liquid)

Since the outflow of various substances is expected according to a target product, cautions are required. However, as for the stock into which salt etc. was put beforehand, without considering the pre-treatment of desalination etc., the application is impossible.

(Sugar Waste Liquid)

Concentration change of dilution water of and waste sugar in sugar manufacture processes of fructose liquid sugar, etc. needs to be taken care of. Moreover, in the things like an injection valve or a pressure spray burner easy to be influenced directly by heat at the time of a spray stop, it is easy to solidify in the shape of caramel, and is subject to cause a spray failure. In this regard, a steam spray burner has an advantage as it controls such phenomenon as long as saturated steam is used.

[Alcohol System Waste Liquid]

(Ethyl and Methyl Alcohol System)

It is discharged in a distillation process, a medicine factory, etc. since other alcoholic ingredients can mostly be specified by the manufacturing process, and they need to be specified.

(Polyalcohol and High-Class Alcoholic System Waste Liquid)

The approximate concentration of polyalcohol such as ethylene glycol and glycerine, and high-class alcoholic system waste liquid such as propanol and butanol can be presumed by specific gravity measurement, if the ingredient is specified.

[Cutting Oil and Metalworking Fluid]

Since the metal as processing target which is both water solubility and non-water solubility is contained in the form of metal soap, it is necessary to grasp its concentration and character.

[Amine and Ammonia System Waste Liquid]

Waste liquid which contains N contents in its composition like monoethanolamine and morpholine. However, you need to be cautious of oxidization reduction potential.

[Solvent System Waste Liquid]

It is the ingredient which mainly consists of organic solvents such as benzene, toluene and ethyl acetate. Although some of extracts can be also used with the gas turbine etc., for ones containing pigments requires, it is required to consider equipments acceptable depending on the ingredient concentration or to perform pre-treatment. Cautions about pigments are required especially for those elements, etc. used.

[Chemical Industry System Waste Liquid]

Water-soluble organic matters, such as formalin, acetic acid, and aldehyde, etc. and also solvent system waste liquid are discharged. There is a possibility that the one with a little of ash and chlorine, etc. may be able to be used also for a gas turbine.

[Waste Liquid with Fear of Containing Toxic Substance]

As for waste liquid with a possibility that a toxic substance may be contained, it is necessary to investigate the character of the toxic substance, and as for the liquid which generates toxic gases such as sarin in which very small quantity has lethality, it is necessary to give up the examination about it. In addition, as for a liquid with a possibility that the substance applicable to a general deadly poison may be contained, directed by its MSDS(s) (handling direction), we need to perform composition analysis and examination of physical properties.

Moreover, when there is a possibility that it may be detected at the time of abnormalities, even if it does not come out at the time of regular, these liquids should be applied together with the injection stop measure that can detect those unusual states.

[Waste Liquid with Possibility of Containing Radioactivity]

Since these are not suitable to incineration disposal with industrial combustion equipment, it is necessary to give up the examination.

Moreover, when there is a possibility that it may be detected at the time of abnormalities, even if it does not come out at the time of regular, these liquids should be applied together with the injection stop measure that can detect those unusual states.

[Waste Liquid with Possibility of Containing Heavy Metal]

Although these need to be pre-treated so that it becomes below the concentration level at which these can be discharged with the corresponding industrial combustion equipment, when pre-treatment is not performed and there is a possibility that it may be detected at the time of abnormalities, even if it does not come out at the time of regular, these should be applied together with the injection stop measure that can detect those unusual states.

[Specification of Error Range Expected]

You need to pay attention to concentration error especially in the case of the waste liquid that its calorific value in waste liquid is approximately 50 per cent. It is because it is the important information for specification of the air-fuel ratio control method described below. Moreover, you need to consider the analysis method which can specify the error easily.

For example, in the case of alcoholic system waste liquid etc., since its approximate concentration, namely, the calorific value can be specified by measuring its specific gravity, a specific gravity measurement signal can be used as a calorific value signal at the time of waste liquid injection.

As for the waste liquid to be pre-treated, you also need to pay attention to the concentration error caused by the faults of the pre-treatment equipment, and in such cases the trouble with industrial combustion equipment can be prevented beforehand by building in the interlock of the failure information in waste liquid injection equipment.

In addition, it is important in a safe application to examine the maximum error of each ingredient constituting the waste liquid, and to take the simulation and a measure about the solving method in each case.

[Composition of Waste Liquid]

The most important point in this system which bums waste liquid with industrial combustion equipment is to make a detailed analysis about waste liquid, because even the person in charge who handles the discharging process hardly knows the its details in many cases as the waste liquid is the aggregate of the substance with a various ingredients and characteristics depending on every industry and every process. The items for composition analysis of the waste liquid are broadly classified into the following each items.

[Amount of Moisture]

Although it may become the contrary of calorific value, if you make superfluous moisture mix and burn, as it would become the cause of combustion aggravation, a lot of attention is demanded.

However, an addition of adequate moisture leads to reduction of amount of smoke dust and reduction of NOx, and the disintegration of a fire-resistant substance can also be expected. Therefore, after considering the amount of moisture which waste liquid contains, it is necessary to determine the maximum injection ratio as much as possible.

[Halogen]

Although it demands a lot of attention in mind as Cl serves as a generation source of dioxin, the acceptable amount of discharge as HCl is defined for every combustion equipment. Moreover, as the whole halogen, because it degrades the fire refractory material and the heat transmission pipe of combustion equipment, it is important in terms of equipment preservation to restrict it as the total amount of halogen contained in fuel.

[Ash]

Ash is a remaining solid when it is heated in air at the temperature of 700 degrees C or more, and it includes the oxide of various metal ingredients, phosphoric acid, sulfuric acid, etc. Since influence of every ingredient constituting ashes on combustion equipment or local environment is large, an appropriate pre-treatment or a control of injection ratio according to each item is required.

(Total Amount of Ash)

It analyses the above-mentioned evaporation residual substance as residual substance amount heated in temperature of 700 degrees C or more in the airflow, and it is specified to JISK2272.

(Alkaline Metals)

As alkaline metal salt, such as sodium and potassium, has a low melting point, it is easy to form clinker in a combustion chamber. Although it exists a little also in fuel, it is desirable on combustion management that its amount existed in waste liquid is as little as possible.

(Alkaline-Earth Metals)

As alkaline-earth metals oxide salt, such as calcium and magnesium, has a high melting point, it causes relatively little failure in the combustion chamber. Conversely, if it is strongly connected with halogen such as chlorine and this ingredient exists superfluously to chlorine, it is thought that the risk of dioxin generation can be reduced considerably.

Particularly, in case alkaline-earth metals exists in waste liquid in this processing method, since it as a very fine calcium oxide particle shifts to the combustion chamber together with chlorine depending on the methods of distribution to waste liquid, the probability that the chlorine atom exfoliated can combine with chlorine before it forms a chloride with other metal ingredients is high, and the failure due to corrosion caused by chlorine can be prevented.

Further, as calcium and magnesium is highly friendly to living bodies, even if they are spread into the atmosphere, there is said to be no damage. Moreover, as they are effective in raising melting point of other low melting point substances, there seems to be a case that they are positively added in order to mitigate the demerit of these ingredients

(Copper)

Although the harmful effect on environment is not high in particular, since it turns into the chlorination copper which is the effective catalyst of dioxin composition, it is believed to be important that either it is removed with a pre-treatment as much as possible, or it is made to lose catalyst ability by adding alkaline-earth metals.

(Iron Group Metals)

There is no harmful effect on environment in particular, and since melting point of iron oxide is also high, it is permissible that it is contained to some extent in waste liquid.

(Tin and Zinc)

It is contained much mainly in waste oil such as lubricating oil. Like alkaline metals, since it generates the compound with low melting point, it is necessary to restrict the amount of these ingredients contained in waste liquid taking into account the heat load of combustion equipment, the surface temperature of a combustion chamber, etc.

(Vanadium)

Vanadium exists in relatively heavy crude oil such as C heavy oil etc. at approximately 10 ppm. Since it is the substance causing the high temperature corrosion, it is desirable that it is maintained with the fewest possible quantity.

(Silicon)

When contained as a silicate underwater or being spread like silicone oil, it demands as much attention as alkaline metals do.

(Aluminum)

It is mainly contained in the waste liquid used in aluminum processing processes such as cutting oil. Since the oxide of aluminum has a very high melting point as alkaline-earth metals do, it is difficult to be an obstacle of a combustion chamber. Therefore, although there is a certain limit acceptable for every combustion equipment, it is the ingredient acceptable comparatively.

(Phosphorus and Arsenic)

Since it is corrosive over steel materials in a specific temperature range, it is necessary to control the injection ratio and the injection method by the balance of the above-mentioned alkaline-earth metals. If alkaline-earth metals exist in waste liquid, as they turn into calcium phosphate, phosphoric acid magnesium, etc. with a very high melting point, the bad influence on the combustion chamber can be prevented.

Although the influence of arsenic on the combustion chamber can be prevented by the same method as phosphoric acid, considering it is spread into the atmosphere, it is desired to remove it with a pre-treatment as much as possible.

(Heavy Metals)

Since these hardly exist in fuel in principle, it is not assumed that it is discharged into the atmosphere with industrial combustion equipment. Therefore, in case these ingredients are contained in waste liquid, those should be removed with a pre-treatment means, or in case the post-processing cannot remove completely, you should exempt the case from an application of the present invention.

[Other Composition]

(Nitrogen)

Although there is no trouble with it particularly in combustion, since it is discharged as nitrogen oxide in an exhaust gas by the combustion being the state of nitrogen inclusion, cautions are required. When contained as nitric acid, it is thought that about 50% converts into NOx, while it is nearly 100% as ammonia state nitrogen.

With the exception that there is a denitration equipment, when disposing of the waste liquid containing these, it is necessary for you to adjust the mixture ratio within the limit of the quantity not exceeding the NOx effluent standard of the target equipment for processing or to process with a low NOx means or a pre-treatment,.

(Sulfur)

Although there is not trouble with combustion in particular, like nitrogen, the quantity contained in an exhaust gas is defined as an effluent standard. With the exception that there is a desulfurization facility, it is necessary to process it, adjusting the mixture ratio within the limit of the quantity in which discharge concentration does not exceed these standards.

However, S ingredient contained in waste liquid is generally low as compared with fuel oil in many cases, and conversely it often has an action that dilutes S ingredient of fuel.

(Scale (SS))

Each combustion means of combustion equipment performs ideal flame formation by making fine fuel particles sprayed. When SS ingredients in the waste liquid are constituted from an organic matter and cannot be dispersed more finely than a fuel spray particle by a certain dispersion means, it is necessary to remove them in advance.

Also in terms of filtration of this waste liquid or the examination of separation equipment it is necessary to comprehend the SS ingredients about not only that quantity but also about physical-properties aspects, such as a particle size distribution and those characters.

[Physical Properties of Waste Liquid]

[Calorific Value, Specific Gravity, and Viscosity]

Grasp of the calorific value of waste liquid has big influence on the determination of the injection point of waste liquid, and the air-fuel ratio control method of the combustion equipment.

Moreover, it is necessary to also grasp the specific gravity of the waste liquid depending on its injection method. For there is a case that a transfer of the liquid with heavy specific gravity becomes difficult as the next case of a viscosity increase if the centrifugal type and the axial-flow pump is used.

The viscosity of solution also affects various factors, such as the transfer method, the injection method, and temperature maintenance. Although the moderate viscosity has a merit that it enables selection of a positive displacement pump and can take transfer means and a flux control means only with a pump, in the case of the too much high viscosity, it causes a cost rise with increase of a piping caliber, the necessity for temperature control, etc. Further, in the case of solution without the viscosity, application of a positive displacement pump is limited in many cases, and it is disadvantageous in high-pressure injection.

[Corrosive Behavior of Metal]

It shows mainly a corrosion behavior against a metal material, in general the case with low pH is a problem, and it is necessary to examine the material of wetted surface component, the material of the burner in a combustion means, etc. However, even if pH is high, there is also a substance like ammonia with a character which affects copper and a copper alloy, as there is also a case like a metal soap that wetted surface metal may be affected by the metal contained in it, cautions are required.

Although it is in principle desirable to design the wetted surface with a corrosion-resistant material when it is corrosive, neutralizing or using an anticorrosive together are also effective when it is difficult to cope with the case like a diesel engine with large contact zone with fuel.

[Lubricity]

It becomes an important factor in using with the positive displacement pump or the diesel engine. Since the behavior of lubricous is the index to what degree it can prevent two sliding parts of the metals from wearing, and sticks, etc. as a result of the characters of various liquids influencing one another, it is difficult to determine this behavior only by analysis of waste liquid.

When this character is required, it is principally desirable to perform a lubricous test after mixing with the fuel oil as object. It is because that the lubricity of the fuel itself differs depending on, whether it is kerosene, A heavy oil, or C heavy oil, and the distillation method or decomposition methods even if fuel oil is heavy oil, and naturally the lubricity at the time of mixing waste liquid also differs.

Although it is possible to find out its approximate lubricity with the conventional four balls test machine, the Timken test machine, etc in case waste liquid is an oily liquid, the method of obtaining it experientially by developing the equipment which can perform a lubricous test in an emulsion state maintained and considering the result and an actual application result, is being adopted because it will be in an emulsion state if the waste liquid is a water-soluble liquid.

[Fluoride Rubber Tolerance]

When treating fuel oil, lately, the fluoride rubber is normally used for liquid-shut equipment. Fluoride rubber is most excellent in solvent-proof nature among the materials which has rubber elasticity except for perfluoroelastomer (product name: Kalrez). It is because the benzene system ingredient is contained in fuel oil and a life span of the nitril system oil-proof rubber available with lubricating oil is short.

Since perfluoroelastomer have an impact not only equipment for the waste liquid injection but also on the design of the combustion methods and transfer methods for the reasons that it is very expensive as the material in present and when using PTFE (product name: Teflon) as a seal material, the exclusive design is required, etc, the judgment whether or not Viton can be used is also important.

[Bum Nature, Adhesiveness]

In waste liquid combustion, it is necessary and special character. That is, it is the nature with candy-like adhesiveness like sugar with heating evaporation to be investigated. Although there is no problem with particular kinds of burner, it is contraindicated with the gas turbine adopting the injection valve system and a diesel engine in which combustion is performed intermittently.

It is permitted in sugar and also some of protein, except the composition considered no problem, it is judged by the characteristics of a 120-degree C heating residual substance etc.

[HLB]

HLB is the numerical value which shows the balance of the lyophilic group and hydrophilic group in emulsifying agent, and it can be defined that lipophilic nature is highest at 0 and the substance with 20 has the highest hydrophilic nature. Therefore, if the surface-active agents with the HLB known is mixed together in the waste liquid as object, it is possible to presume HLB of the waste liquid. It is generally thought that the waste liquid has lipophilic nature if HLB is 10 or less, and if liquid fuel is mineral oil, it is possible to mix it easily, and if it exceeds 10, it is necessary to use the emulsifying agent or give the energy mechanically, being emulsified.

[Oily Liquid]

The typical oily waste liquids are the waste oil of vegetable oil and fat, the waste oil of the various industrial oil and fats, an organic solvent, etc. Mixture of these waste oil and fuel oil is seemingly very easy. However, in oil and fats, two soluble groups of the other party were connected strongly each other by the mutual characteristic called compatibility, and there is a high possibility that ingredients left remains as insoluble sludge conversely.

Generally this is called mixed stability. Since particular cautions are not needed at the time of mixture if it is mixture of ingredients excellent in mixed stability with fuel oil, rarely there is also a case that these waste liquid is processed by an easy method of the tank blend.

However, under the situation that the quality of fuel also changes variously, it is difficult to maintain the stable combustion with such an easy method.

As the elements interfering the stability, the time progress after mixture, the influence of oxygen or ozone, the heat shock, etc. are known, it is desirable to mix it proportionally in fuel oil at all events, and when combustion equipment stops, it is favorable to stop in the state where there are no remains of waste liquid.

Moreover, also about the injection point, you should also choose the injection point which can maintain stability within the limits of time to be able to carry out the combustion disposal according to those mixed stability.

[Water-Soluble Liquid]

The typical water-soluble waste liquids are waste alcohol, foods drainage, organic acid waste water, etc. In order to mix these with fuel oil, there is a method of giving mechanical shearing power such as a mixer called emulsification means or a homogenizer, or the method of emulsifying using a surface-active agents, etc. Generally, although a water-soluble liquid has small compatibility with fuel oil and so there are a few functions of it which deprive the soluble group of fuel oil in many cases, since it is conversely easy to generate the problem attributable to the stability of an emulsion particle, it is desirable to inject still proportionally and just before combustion as much as possible.

In addition, in this kind of situation, it is generally possible to reduce the amount of smoke dust sharply by the fine explosion effect particularly by making the water-in-oil type (W/O) of emulsion when using the heavy oil as the fuel oil. Moreover, in the case of a water-soluble liquid, except for alcoholic system waste liquid, there is generally a tendency with a little calorific value. For this reason, since an increase of an injection ratio will be accompanied by aggravation of flame stability, the ratio of the maximum injection ratio also needs to be defined at maximum according to each combustion load belt, and also the amount of injection of a burner becomes the sum of the amount of fuel oil and waste liquid in the maximum combustion range and therefore it exceeds the defined amount of spray on the design in many case, so it is necessary to restrict the injection ratio so that the amount of rated injections may not be exceeded.

[Emulsion Nature]

As for the typical emulsion nature waste liquid, water-soluble cutting oil (rolling solution), a compressor drain, detergent waste water, etc. exist., although this generally forms O/W type emulsion (oil-in-water type emulsion) in many cases, there is the one that the floated oil of the pressure float equipment raises the phase inversion or the other of showing the composition of W/O type emulsion (water-in-oil type emulsion) like the drain of the equipment with which centrifugal separation of the oil and fats called pure machine is done and impurities are removed.

The feature of emulsion type waste liquid is that oil and fats and water form separation or cream during preservation and even if it is the same waste liquid, its physical properties are not uniform. Although there is a little influence on the air-fuel ratio when the additive ratio to fuel is very low and it does not become an obstacle on processing, air-fuel ratio adjustment becomes difficult as the amount of injection to fuel increases.

When the mixture ratio to fuel exceeds 10% in the case of emulsion waste liquid, in principle, it is desired to be separated into water phase and oil phase and processed by the same treatment for the above-mentioned oily liquid or a water-soluble liquid, after being separating into two phases of stable water phase (it does not have a problem if there is little separation nature even if there are a little of oil grains and it has become like milk.), and oil phase which decreased moisture.

In addition, the one more point which you have to take care about emulsion waste liquid is the problem of phase inversion. That is, generally, emulsion waste liquid is in many cases the drainage after oil-water separation processing was made in a certain form, and there is not a rare case that despite its W/O type emulsion, it has a high ratio of water or despite its O/W types, it has much quantity of oil.

Incidentally, W/O type emulsion shows the state that oil becomes continuous phase and the particle of water exists in it, and O/W type shows the opposite emulsion. Generally, if either of continuous phase exits enough to dispersed particles the emulsion type does not change and stays stable even if a mechanical shock (pumping and cavitation by the valve) etc. is given.

However, when it is W/O type emulsion, for example and that the amount of existence of water is plenty, water becomes continuous phase y mechanically shocking and oil changes to particle phase. This is a phase transition. Although it becomes stabilized emulsion in its own way if a phase transition is performed at a stretch in the whole solution, if the phenomenon occurs in a part of whole solution, it becomes hard for each solution to move in the interface phase (W/O and O/W), and it shows very high flow resistance, namely, the increase of viscosity.

Although it gets familiar with mayonnaise etc. as a example of the application of this phenomenon, a shampoo, cosmetics, etc. are also the ones with the character by applying this principle that those have a high viscosity when being used but those can be rinsed away easily when those become dry (continuous phase evaporates) or by washing in cold water.

It demands a lot of attention because if such a phenomenon occurred in the waste liquid injected by this method, not only would injection of injection fluid stop by increase of piping resistance, but also would the combustion equipment itself stop if such a phenomenon occurs in a fuel system.

Incidentally, such un-stable type emulsion tends to generate for W/O type emulsion in the settling phase of W/O type emulsion waste liquid, while for O/W type emulsion, it tends to generate in the surfacing phase and the centrifugal separation phase of O/W type emulsion waste liquid.

[Flash Point]

In the waste liquid disposing method, although it is an item without direct influence, in the law of Japan, the equipment regulation required for disaster prevention is defined in details depending on each flash point.

Moreover, when the flash point of waste liquid is 10 degrees C and fuel oil is 100 degrees C, since it becomes the flash point of waste liquid even if the amount of waste liquid injection are only 1% to fuel oil, understanding of the flash point is an issue on disaster prevention design of injection equipment and the whole combustion equipment.

[Toxicity]

For example, although there is no problem if combustion disposal is done as it turns into water and carbon dioxide, in case it is the liquid acetaldehyde, formaldehyde, etc. with the character that it can damage an environment and an operator by its leaking or dropping in the injection process, because a combustion equipment is not generally manufactured so that it can treat such a liquid, in the case of the equipment with which the measure against protection is not fully performed, it is necessary to give up application.

Particularly, when it contains the toxic gas such as sarin and phosgene which has volatility and lethality with leak of very small quantity or the substance which is easy to become the toxic gas, it is necessary to give up its application.

[Decomposition Nature]

For example, in the case of food system waste liquid, fermentation, not only do decomposition, mold, etc. occur during its storage, generating a bad smell, gas, etc, but also causes various failure, typically like blockage in a filter. Therefore, it is necessary to grasp in order to recognize the necessity of the measure for this.

[Spontaneous Combustion Nature, Self-Reactivity, and Oxidizing Quality]

Since spontaneous combustion nature, self-reactivity, an oxidizing nature, etc. are the specified substance on disaster prevention, it is necessary either to lose its behavior or to remove it in the pre-processing stage if it becomes a target by the investigation based on the classification of Fire Service Law etc.

For example, in the case of a substance with a possibility of exploding easily with a shock, heat, etc. like nitroglycerine, and the substance which has a strong-oxidizing nature and is subject to cause self-ignition by mixture with combustibles, unless those situations are not avoidable in a pre-treatment, it is necessary to give up its application.

[Waste Liquid, Liquid Fuel, or Mixed Characteristic with Water]

Although this item is closely related to composition and the physical properties of the preceding clause, it is necessary to examine the its mixed characteristic with the fuel oil and water for use together with ingredient analysis and the physical properties of the preceding clause.

[Dispersibility]

Dispersibility refers to the state where waste liquid was mixed with fuel oil, and taking into consideration that HLB of fuel oil is about 3-5, it can be said that when HLB of waste liquid exceeds 10 emulsion-like distribution is carried out, while it is the following cases, dissolution dispersion occurs.

(Emulsion-Like Dispersion)

The form of the emulsion-like dispersion in this processing method is in principle W/O type emulsion, namely, water-in-oil type emulsion.

It is desirable to choose the mixing method by the highly precise emulsion manufacture method in the case of the waste liquid which takes an emulsion-like distribution form, to adopt the conventional in-line system and to locate an injection point just in front of a combustion means as much as possible in the case of branching off in two or more combustion means like a diesel engine or an incinerator.

Although it is common to use an emulsifier when depending on the tank blending method, when the emulsifier ingredient etc. is contained in waste liquid, it is not the case. However, since various faults like precipitation are expected, it is not the method be chosen.

In the case of the waste liquid which takes an emulsion-like dispersion form when not using together with the surface-active agents with approximately HLB 3-7 possible to maintain W/O type emulsion, when you perform an addition in which additive ratio exceeds the value from about 100% (50% of water ratios) even if using highly efficient emulsion fuel manufacture equipment such as an in-line proportionality system, since there is a possibility that the phase transition by the shearing action accompanying fuel injection etc. may occur and there is fear of spray failure accompanying the rapid increase of viscosity, you need to care.

(Dissolution Dispersion)

There is no need to worry about separation like the above-mentioned emulsion-like dispersion because dissolution dispersion is phenomenon of blending like a dispersion of fuel oil, plant oil, a solvent, etc. It is generally recognized as very easy technology, and there is also an example at a first glance applied satisfactory by an injection into a fuel tank, fixed amount injection with an easy mixer (the amount of injection does not change even if the amount of combustion changes.), etc.

However, in these cases of applications that seem to have no problem, although the mixture ratio is very low to the fuel and the sludge is being generated, as a matter of facet, there are many cases that it accumulates at the bottom of a tank or you are saved with little obstacle such as frequency of cleaning a strainer has been increased.

The influence of the obstacle by the below-mentioned foreign substance generation becomes large from where the injection ratio exceeds about 10%. In the correspondence to this problem, the waste liquid which takes the former emulsion nature dispersion form is rather easier for its correspondence in many cases.

Although the obstacle after mixture is attributable to the chemical factor of a waste liquid ingredient and fuel oil, since various physical factors, such as time progress, a heat shock, and light, oxygen, ozone, etc. influence it, it is not different from the one of taking an emulsion nature dispersion form in terms of having to carry out combustion disposal as early as possible after mixture.

[Foreign Substance Generation]

Foreign substance generation represents a state that a foreign substance that may cause a failure is generated when fuel and waste liquid are mixed after foreign substance are removed from both of them in order for them not be an obstacle for the combustion means of the industrial target combustion equipment.

(Crystalline Substance)

Although it is hard to generate in mixture with fuel oil and waste liquid, it will be easy to generate if the ingredient to crystallize is contained when two or more sorts of waste liquid is mixed. What you have to care about are carbonate of calcium or magnesium or phosphate.

(Sludge-Like Substance)

Although it is most general sludge generation that an asphaltene ingredient becomes insoluble by malthene in fuel dissolved in a solvent ingredient, mineral oil, etc. in waste liquid, you need to pay attention to also the sludge generated by ingredient such that cross-links the unsaturated group existing in fuel oil.

[Solidification and Viscosity-Increase]

Since solution also has ingredient solidifying after mixture with fuel or becoming a high viscosity in the state of water solubility like an oil adsorption nature gelling agent does, the conformation test for these is also required.

For example, hydrazine used for the water processing has a function that solidifies the fuel with its little quantity in waste liquid. Since figuring out all those ingredients which causes the failures including a foreign substance generation with those ingredient compositions takes enormous amount of time and cost, the measures to actually mix them with the target fuel is rational.

[Stability]

Under what conditions each above-mentioned state occurs needs to be examined. It is because a failure has to be avoided by a pre-treatment or injection of an additive agent in case it occurs in an extremely short time after mixture and cannot be normally avoided by in an improvement of the injection method.

(Time Stability)

With progress of time, you need to check what progress the above-mentioned mixed characteristic follows. The stability of emulsion-like dispersion is easiest to understand. For example, if an injection point is set up in the position where combustion disposal can be done within the time even in case separation arises in several seconds, application of a surface-active agents etc. is unnecessary. However, before a combustion means interrupts combustion, you have to stop injection of waste liquid.

In addition, since the state of foreign substance generation, solidification, and being high viscosity may change in accordance with the time progression, it is necessary to check.

(Heat Stability)

Failures, such as foreign substance generation, and solidification, high viscosity, emerge more clearly by heating by a heater etc. Especially, in case the surface temperature becomes high like an electric heater, it is easy for failures to be generated more clearly. Although the ingredient with bad heat stability can be burned with no foreign substance generated by mixing it with the one warmed beforehand by the mixture of fuel oil and the vegetable waste oil containing unsaturated group such as linoleic acid, if you heat up the mixed, the sludge accumulates on the surface of a heater, if it is an electric heater, the heater surface may be overheated resulting in the accident due to a bad thermal conductivity of the sludge concerned.

In addition, since peroxide or a cross-link nature substance is also subject to combine with the unsaturated group in fuel oil by the heat shock and its action becomes much clearer, you need to be careful.

(Storage Stability)

It is a measure in the case of causing the above-mentioned failure with time progress. If it is in a heater or a combustion means with an equipment with which the flow velocity is slow and the flow stagnates, the stagnated mixed fuel causes a failure resulting from storage stability in case you manage to mix just before the equipment. Therefore, it is necessary to check it sufficiently. Moreover, even if it is in the combustion means for boilers which can be processed in a shortest time, when a failure occurs within 1-2 seconds, you may not cope with it so need an attention.

(Oxygen, Ozone, and Ultraviolet Ray Stability)

Usually, it is a satisfactory item unless the tank blending method is taken. Cautions are required when there is a concern by the tank blending method.

[Conclusion of Mixed Characteristic]

A pretreatment means, an injection means, a mixing method, combustion equipment, an additive agent, etc. must be examined to suit the origin of the various state and characteristic of above mentioned mixed waste liquid and fuel oil or waste liquid and water.

[Ideal State of Combustion Flame, and Exhaust Gas Composition]

The ideal combustion state is fundamentally to control generating dioxin and also to show the ideal combustion state which control generating NOx or smoke dust.

These are judged synthetically, by grasping mainly good condition, and determined from the overall condition which does not suspect the phenomenon of the ideal combustion condition and it can not be concluded to be an ideal combustion condition by a certain specific phenomenon.

[Raw (Unburned) Splashing]

When the amount of combustion is very few compared to rated combustion and when the spraying performance worsened at the burner. This is the phenomenon of deviating from the combustion chamber of the state where fuel oil hardly produces oxidation reaction, when the rating of the burner is exceeded or a flame maintaining performance got worse.

Apart from the cause mentioned above, it is generated also by the case where fuel oil temperature control is unsuitable, or degradation of a burner nozzle, or the ingredient which reduces combustion temperature like the moisture in dirt and waste liquid, or a chlorine ingredient is superfluously contained in fuel.

If there is a possibility of fuel and waste liquid being in the unburned state, and shifting to a smoke path, as well as the possibility with the liquid fuel to remain without evaporating, there is a high fear of secondary generating of the dioxin by the catalyst reaction, and is the phenomenon which must be looked out for most.

In addition, the monitoring of the raw (unburned) splashing can be easily supervised by adhering fuel oil droplets to a glass window when a monitoring window is at the back of the combustion chamber, however apart from this, since the abnormality monitoring from a chimney like white smoke or black smoke is difficult, it is necessary to be determined by the abnormalities of HC or CO, or the abnormalities of BACHARACH testing filter paper or smoke measurement filter paper etc., or to be analogized by the slight abnormalities of flame etc.

[White Smoke]

Although normal combustion is carried out near the burner, it is the phenomenon produced when combustion is interrupted, when the flame was cooled by the air for combustion or the difference of the atmospheric temperature within the furnace and the combustion was interrupted in the condition that the flame was cooled and the gas ingredient had remained. Mainly same as when the combustion is low or the combustion equipment is still in cool condition of the star up, it is easy to occur when the atmospheric temperature of the combustion chamber falls, and it also occurs by excess of combustion air.

It is presumed that it has become gas-like, and although there is less fear of secondary generating of dioxin than a raw (unburned) splashing, it is thought that the risk conversely generated directly in a combustion chamber is large.

[Black Smoke]

Although normal combustion is performed near the burner, there are separate phenomenon such as a phenomenon produced by shortage of the air for combustion and the phenomenon generated when combustion does not carry out intermittence when it passes a combustion chamber, which even if a part of flame is extended, or it becomes late by the fault of air mixing means such as a burner nozzle or a flame maintenance mechanism or an air register.

It is the phenomenon which must be avoided, to prevent generating the dioxin, although it changes also with degrees of the shortage of oxygen, or black smoke.

[Flame Length]

Although there is nothing what shows aggravation of a combustion state directly, since it is comparatively easy to check the flame for the boiler and the furnace for industry, etc. when an extreme difference is produced with the same combustion load and the flame length during incineration of specific object fuel in the formation of oxygen concentration, there is a concern which induces a certain obstacle.

Although it tends to be thought that generally shorter the flame the better, this is the law learned by experience at the time of using the same fuel, when volatilization system substances, such as a solvent, are mixed then you should pay attention to the obstacle of flame being too short.

[Additional Phenomenon Possibly Degrading Ideal Combustion State]

(Visible Phenomenon)

- Floating Oil Droplet

It is the phenomenon that huge oil droplet, mainly resulting from the fault of a burner, bums and floats inside of a combustion chamber like a firefly. It is easy to occur, when many remains of carbon ingredients exist in the fuel or when the waste liquid is not mixed homogeneously.

This phenomenon not only may be the generating factor of smoke dust but also it may be the cause of the secondary factor generating deposit in the smoke path.

However, it may be dramatically improved by adding water in the case where water is included in waste liquid, and mixture with waste oil.

- Floating flame

It is the phenomenon of a flame belt leaving the main flame and floating inside of the combustion chamber, if it exists after the combustion chamber, it becomes the cause of generating of black smoke or white smoke.

It can also be called the preceding stage of generating white smoke with the phenomenon which will mainly be generated if you are going to make it burn in a low superfluous air ratio at the time of low combustion. Cautions are required, if there is such condition, the waste liquid containing water is added in fuel, it will become a worse combustion situation,.

When generated in a middle combustion region or a high combustion region, a problem is in a flame pattern or air mixture, and it is necessary to improve including a burner etc. At the time such combustion condition exists in a middle or high combustion region, it is dangerous to mix the waste liquid which will be the factor which worsens combustion.

- Unstable Combustion

It is the feature that a combustion flame becomes large periodically, or become small, and a draft meter sways greatly.

Although it occurs when it is originated in fuel and the insufficiency of the flame maintenance function of a burner, in many cases, it is the insufficiency of the flame maintenance function of a burner. That is, although the flame maintenance function fell and the flame carried out the lift into the combustion chamber and the fire will be extinguished for a moment, the fuel which has already sprayed is re-lit and rapid combustion occurs periodically. As a problem precedent to generating of dioxin this may be a serious problem of the employment of combustion equipment and cautions are required., it is necessary to avoid mixture of waste liquid in the combustion region where such a phenomenon is observed which mainly (it may be generated by water an ingredient which is not easily burnt or conversely like a solvent which flammability is too good.) easy to happen by mixture of waste liquid in a low combustion region.

When generated in the middle and high combustion region, measures such as strengthening of a flame maintenance function which those phenomena do not generate, are required.

- Oscillating Combustion

It is the phenomenon in which relatively fast vibration appears in a draft and equipment different from the above mentioned unstable combustion.

This phenomenon originates, when the sound wave of low frequency by the combustion reaction resonates in a boiler combustion chamber. Although there is nothing that is directly connected with generating of dioxin, it may destroy combustion equipment, or this phenomenon itself has a bad influence in many cases on the meters for instrumentation, and it must be avoided.

Although the difference in the combustion speed accompanying mixture of waste liquid may cause oscillating combustion and can avoid in many cases by adjustment of an air-fuel ratio, adjustment of an air register and the amount of steam for spray, etc., depending on the case, exchange of a burner etc. may be required.

(Phenomenon of Requiring Analysis Means)

- Increase of CO

Although CO generated by combustion is ideally zero is desirable, it is a little difficult to prevent generating of CO around 10 to 30 ppm in industrial combustion equipment.

To prevent generating of CO by combustion completely is considered difficult, that the normal completion of combustion is because oxidation reaction called combustion is uncontinuable any longer if CO gas concentration of this level is considered that it is impossible to continue the oxidation reaction for combustion.

In common industrial combustion equipment, since heat is absorbed by a cooling wall and the subject also in a combustion chamber, if oxidation reaction called combustion stops, atmosphere temperature will drop rapidly and the conditions which it satisfies to oxidize CO to CO2 ceases to exist.

Therefore, although it is quite difficult in industrial combustion equipment to make CO into zero, this small concentration of CO will not lead to generating of dioxin directly, and for various microbes to oxidize CO to CO2 or to oxidize by the photochemical reaction in an ecosystem, there is no fear of CO increasing in the atmosphere.

However, when CO is detected, exceeding CO in ordinary use, it can show the signs that a certain unusual phenomenon has arisen in a combustion chamber. All phenomena, mentioned above such as a raw (unburned) splashing, white smoke, and black smoke, are also detectable with the form of the unusual rise of CO value.

Although various kinds of analysis methods of CO are learned, a non-distributed infrared system etc. is reliable.

- Increase of HC

Although it is difficult to also prevent HC completely like generating of CO, in combustion equipment which is continuous combustion type, it is easy to control to a comparatively low value compared with CO.

It consists of light gas which is about C1 to C4 and concentration is low, same as CO it does not become the direct generating factor of dioxin, when it is high concentration of over C6 of HC, such as benzene are detected, a dioxin generating risk increases.

In analysis of HC, an exhaust gas is burned in a hydrogen flame like a THC meter, and the method of measuring ion current etc. is known.

- Abnormalities of NOx Value

Although it tends to be thought that generally the low the NOx value the better, when it is much less than the NOx value defined by combustion equipment or exceeds it, it may become the index which a certain unusual phenomenon has been produced.

Especially, in case of fuel, such as A heavy oil or kerosene which hardly contains N factor in fuel especially, the fall of a NOx value shows the abnormalities of combustion in many cases, however when non-inflammability substances, such as water are in waste liquid, or when N factor is included in fuel like C heavy oil, a NOx value may fall by mixture of the inflammable waste liquid which does not contain N factor.

In addition, since a NOx value rises by mixture to fuel when N factor is included in waste liquid, it is necessary to control to the ratio of mixture which can carry out operation management below in the NOx value permitted with the combustion equipment concerned.

For measurement of a NOx value, apart from the chemical analysis, emitting-light method of the continuation analyzing method, the infrared analyzing method, etc. are used.

- Increase of Smoke Dust Amount

Amount of smoke dust is hardly generated in combustion of fuel with few residual carbon ingredients like A heavy oil or kerosene. In many cases this is contained at very little amount of smoke dust, even if a raw (unburned) splashing, white smoke, black smoke, etc. arise. However, there are much residual carbon ingredients like C heavy oil, or in waste liquid, when there are much residual carbon ingredients, amount of smoke dust in an exhaust gas tends to increase sharply. Although increase of particles of soot in such case, often it is accompanied by the above-mentioned glow of a firefly, but the correlation with raw (unburned) splashing, white smoke, and black smoke is thin.

In addition, although it is possible to measure reduction by making smaller oil droplets injected from a burner when there are much residual carbon ingredients in fuel, when moisture is contained in waste liquid, smoke dust amount can be remarkably decreased according to the combustion promotion effects, such as fine explosion phenomenon and an water gas shift reaction.

In any case, since smoke amount containing carbon has a possibility of becoming the secondary factor of generating dioxin in a smoke path and it is necessary to control to the lowest possible value, cautions are required for increase of smoke dust amount. However, when a metal ingredient exists in waste liquid, smoke dust amount increases as ash, therefore, you are required to grasp the amount of smoke dust according to the mixture ratio composition of waste liquid.

Measurement method to measure the amount of smoke dust, generally pass a fixed quantity of gas through a smoke amount collection cell and make the measurement, and the continuation analysis equipment using electrostatics capacity besides the method of measuring amount of smoke dust by which the collection was carried out etc. is being put in practical use.

- Abnormalities of Exhaust Gas Oxygen Concentration

Although there is no oxygen concentration in an exhaust gas itself is directly connected with generating of dioxin, when the air-fuel ratio is controlled to the optimum in the combustion region, and there is a sudden change, it can presume a certain unusual phenomenon.

In this system, since it is easy to be generated by change of calorific value, injection ratio change of waste liquid, etc. which waste liquid has, monitoring is required.

In addition, oxygen concentration can be analyzed comparatively easily besides a chemical analysis, by the continuation of analyzing methods, such as a magnetic dumbbell type, a magnetic style, and a zirconia type.

- Increase of BACHARACK Index

The quality of combustion can be checked by the method of making the soot in an exhaust gas adhering to the colorimetric filter paper called BACHARACK index. If this method is used, before the form of the above-mentioned black smoke occurs, the check the limit of emitting smoke is possible by the value of the BACHARACK index.

An emitting smoke limit is judged in the situation which the unburned carbon in an exhaust gas increases, when reducing oxygen concentration, and it changes for every equipment and every combustion load.

It is important to maintain the BACHARACK index at the infinite value near zero as a measure against dioxin.

- Increased Value of Dioxin Precursor

There should not be any abnormalities in the value of dioxin precursor, such as chlorination benzene and chlorination phenol. By the continuation monitor equipment been developed of this substance, it combines with this equipment and can check that it is in an ideal combustion state.

- Dioxin and Equivalent Toxicity Concentration

Since analysis by the gas chromatography defined by JIS is required for measurement of dioxin and the result after measurement takes long time to obtain, apart from the objective of this patent, it is thought that it is a means to check the ideal combustion state. However, with development of any science, or a rise of needs, it is thought that real-time measurement of dioxin, equivalent toxicity concentration, etc. is attained, in such a case it can be used for the means to check the ideal combustion state.

[Adjustment of Injection Method of Waste Liquid]

Adjustment of injection method is explained in Fig. 3. As shown in this figure, in boiler equipment, the composition in the case of mixing water-soluble waste liquid, oily waste liquid, and emulsion nature waste liquid, and carrying out incineration disposal into fuel, and using the fuel which needs heating called C heavy oil for fuel. In addition, this figure is used also for adjustment of a mixing method besides explanation of this adjustment.

[Realization of Waste Liquid Injection and Selection of Injecting Pump]

The fuel currently stored by the fuel tank 1 is pressurized with fuel oil burning pump 2, this is warmed by suitable temperature at heater 30, and after flux adjustment is carried out with the fuel flux adjustment valve 4, it bums with a burner. At this time, fuel flux meter 5 detects combustion flux, and transmits to the control device which performs proportionality control of the waste liquid of multi-point injection ratio determination machine 64 grade.

Water-soluble waste liquid is the acetic acid waste liquid of 3% of concentration, it is stored by the waste liquid tank 11, this is pressurized with the waste liquid pump 12 with cascade structure, and this is mixed with fuel in a mixer 20 via the waste liquid flux adjustment valve 14 and heater 30 which were controlled by the signal of a waste liquid proportionality controller based on the above-mentioned fuel flux. A waste liquid pump and a flux adjustment valve consist of stainless steel which has sufficient corrosion resistance to acetic acid, and other wetted surface parts is also manufactured by stainless steel.

Although the oily waste liquid is vegetable waste oil, this is stored by the sub-waste liquid tank 21, since it will bum if oily waste liquid is directly heated at a heater, and it tends to serve as an obstacle, it is warmed by about 60 degrees C within the sub-waste liquid tank. Since vegetable waste oil has good lubricity, the gear pump which is one form of a positive displacement pump as a sub-waste liquid pump is chosen, rotation speed serves as variable by the rotation output of the VVVF equipment 22 controlled by the instructions from the additive agent proportionality controller 66, and flux control is performed by the characteristic of a positive displacement pump.

Emulsion waste liquid is separated from washing process drainage with the centrifuge, and is O/W type emulsion waste liquid which contains about 14-HLB non-ion formula surface-active agent, vegetable oil fat, and moisture by about 5:55:40 ratio. Since this waste liquid is little in quantity, and if it transports with the pump in which it has a shearing action like a centrifugal type pump, the concern which the phase inversion takes place, and this will be easy to generate the cream and there is a concern of high viscosity, in the emulsification waste liquid pump 52 a diaphragm type pump is used, and without providing a mechanical shearing action, according to the pulse signal output in an emulsification waste liquid proportionality controller, the waste liquid is proportionality injected to the secondary side of a waste liquid flux adjustment valve.

That waste liquid has the capacity of 10 times or more to emulsion waste liquid, when plant oil fat forms micell with the surface-active agent, pulsation of a diaphragm pump is almost uninfluential to injection point, and moreover, it distributes easily in water-soluble waste liquid and it is stabilized. (Oil in which phase inversion does not occur: Water ratio)

[Selection of Injecting Point]

(Burner Front Injection)

The injecting method of waste liquid is firstly the selection of injection point. In the case of the above-mentioned water-soluble liquid or an emulsified nature liquid, it is desirable for it to be just before the burner, for the phenomena for instance being easy to generate separation and small calorific value.

In Fig. 3, the position of a mixer 20 is installed in the lower-stream side of the fuel flux adjustment valve which is a fuel flux control means. Waste liquid can be burned by choosing this point as an injection position of water-soluble waste liquid, especially the liquid which does not have calorific value, without being accompanied by change of air-fuel ratio control equipment.

(Injecting before Quantity Adjustment)

Since the position of the mixed vessel 10 is the upstream side of a fuel flux adjustment valve, the waste oil of injection into this point, such as plant oil, lubricating oil, etc. with calorific value equivalent to fuel, is desirable. However, as mentioned above in the grasp of mixed state, the tolerance over the amount of sludge generating and heat shock after each other is mixed should be examined, and you should choose the injection point.

(Injection among Waste Liquid)

Since the emulsion waste liquid in this example of composition is the O/W type waste liquid containing the surface-active agent of HLB14, it becomes stable type O/W emulsion which the phase transition by the transfer shock cannot generate easily by injecting beforehand and placing into water-soluble waste liquid, like this example of composition.

And according to the same effect with the surface-active agent having been injected into water-soluble waste liquid, emulsification by the mixer also becomes easy and can use a cheap mixer.

[Injection Ratio and Content Ratio]

In addition, due to the characteristic of the above-mentioned injection point, the injection ratio and the content ratio must be distinguished. If you consider the burner front injection, use the injection ratio or hydrolytic ratio to identify mix ratio. When performing injection before quantity adjustment, it is advisable to indicate the content ratio, the mixture ratio, oil mixture ratio, etc.

Content is expressed by (mix ratio)/(fuel flux) to the difference among both being (mix ratio)/(fuel flux+mix ratio) at the injection ratio, and content ratio is 50% in 100% of injection ratio.

[Proportionality Injection Method]

As for the injection method, firstly you should choose as shown in this figure, the proportionality control method according to fuel flux. This method is the method of controlling a flux control means and carrying out proportionality injection of the target waste liquid with the signal from a flux detection means. Since this method can respond flexibly to various kinds of injection control described next, it is advantageous.

In addition, there is a method of injecting in waste liquid by the fuel flux adjustment valve, the fuel rack, and the flux control means linked mechanically etc.

However, the latter method has very little chlorine in waste liquid etc., and should be restricted to the waste liquid in which flammability does not have fuel and concern of generating of dioxin from which it hardly changes, either.

[Injection according to the combustion zone]

In industrial combustion equipment, the amount of combustion also changes according to the object of the load changes. Firstly, great care must be taken to various combustion aggravation factors due to the decrease of combustion.

(Combustion Aggravation Factor Accompanying Decrease of Combustion)

It is required for waste liquid to have the same flammability as fuel, and to stop injection of waste liquid for the following reason except in case where there are few chlorine contents etc, than fuel.

- Aggravation of Spray Characteristic

A combustion means is designed to demonstrate the characteristic by which the amount of combustion can be changed in general the highest in the spray characteristic of 70 to 100% of the amount of rated combustion. The following example describes notes at the time of the low combustion in each burner form.

(1) Steamy spray Type Burner

If the diameter of the caliber becomes too large for the amount of injections of fuel, then the velocity of the injection flow falls and increase of the diameter of a particle are caused.

If the amount of spray steam increases for the fuel, the water content etc in waste liquid decreases the incineration capability.

(2) Rotary Burner and Low-Pressure Air Spray

Since a rotary cup and the diameter of a cup spray is large, and the amount of overflowing fuel decreases, by little distortion and cracks in a cup, oil film will not be equal and the flame will tend to be unstable. Control of the primary air for flame formation becomes difficult, and it becomes easy to generate carbon adhesion.

(3) Back-Pressure Spray

Since the accomplishment power of the direction of an axis of oil droplets becomes weak, a flame turns small and the volume return near the burner becomes intense, a burner nozzle etc. becomes easy to become dirty.

(4) Simple Pressure Spray

Since spray pressure declines, increase of oil droplets diameter and aggravation of a spray pattern occur.

- Fall of Combustion Chamber Temperature

Since it is cooled before combustion is completed, and a burner serves as the degree of low temperature in common in the combination of all industrial combustion equipment and combustion chamber and it becomes impossible to maintain oxidation reaction, thus HC and CO increase. It is easy to cause the generating of white smoke.

- Aggravation of Mixture Nature with Air

Generally, the amount for combustion of air may decrease, the air flow velocity falls, and mixture with oil droplets and air gets worse, and it becomes the cause of generating black smoke.

- Superfluous Air

If you wish to increase the nature of the above-mentioned mixture, it will become superfluous air and the fall of the combustion chamber temperature will be caused.

- Discontinuation of Combustion

With equipment such as a boiler, combustion may stop automatically with the rise of steam pressure. This is not a failure, it is one form of the steam pressure power control by the amount control of combustion, and is the phenomenon which may be daily generated by the employment method. If waste liquid is mixed for this reason, separation of waste liquid and aggravation of ignition nature may be caused at the time of the next re-ignition.

- Conclusion of Combustion Aggravation Factor Accompanying Fall of Combustion

That is, in the low combustion region of industrial combustion equipment, with the method of a setup of low combustion, or the performance of a combustion means, judging which domain forms the combustion flame of an ideal state, in consideration of the characteristic of each combustion equipment, waste liquid composition, etc., it is necessary to judge the injection ratio, and existence of injection

(Caution near Rated Combustion)

- Increase of Spray Capacity, and Increase in Spray Pressure

If a lot of waste liquid is added to fuel at the time of rated combustion when there is almost no quantity of heat in waste liquid, the maximum injection capability of a burner will be exceeded and obstacles, such as a rise of pressure and change in spray form, will occur.

Although the increase in caliber of a burner nozzle etc. may be avoidable with the improvement of combustion equipment, considering being around 1:10 at the maximum, the turn down ratio of the combustion means of industrial combustion equipment does not serve as the cause of combustion aggravation in a low combustion region.

Like in the general industrial boiler, when the equipment has around 70% of the common load band, by controlling the injection ratio of waste liquid to the grade which does not generate those obstacles at the time of rated combustion, correspondence becomes possible without change of combustion equipment.

- Generating of Raw (Unburned) Splashing by Increase of Velocity of Air Flow

In a rated combustion region, the air flow velocity besides the spray speed of the fuel from combustion equipment also increases. Depending on the design of combustion equipment, with the quality of the target fuel oil, which might cause the rapid combustion by quick increase in the mixing speed of fuel and air near the flame band.

In such a case, if moisture etc. is contained a lot in fuel, before completing moisture evaporation to a part of oil droplets and lighting it, some passes a flame band, and this will become as raw (unburned) splashing and will transfer into a combustion chamber or an exhaust gas.

If chlorine etc. is contained in raw (unburned) splashing oil, since oxidization decomposition will occur receiving heat dry distillation by the combustion chamber, the heating surface etc., generating of dioxin is a concern.

Therefore, it is important to control the additive ratio which a raw (unburned) splashing does not generate over the time of a test run in a rated combustion region from a mid combustion region, or to carry out combustion adjustment of strengthening of a flame maintenance function etc.

[Discontinuation of Injection by Unusual Combustion]

If abnormalities are observed based on the monitoring of the combustion flame of the above-mentioned ideal state, or the state of exhaust gas composition, in the case of the waste liquid containing chlorine, it is necessary to take the disposal of discontinuation of waste liquid injection etc. for prevention of generating of dioxin.

[Adjustment of Mixing Method of Waste Liquid]

A mixing method, static type, and nozzle type, a shearing type, an ultrasonic type

You also have to choose various application of the equipment generally called mixer depending on injection point, etc. of waste liquid.

[Machine Mixing Method]

It is the mixer which functions shearing, distribution, etc. mechanically with power, such as a motor. Well known type is the screw mixer with a shuttlecock like a screw, this type of mixer is used within a tank, and thus only the tank blending method is used.

Although in principle in the present invention, it can be mixed in an in line and the moreover stabilized mixed performance can be expected against the change of flux amount. It manufactures the fuel and the emulsion fuel of water which [pipeline continuation emulsification machine of Japanese Patent No. 1220654] etc is suitable, other than that, a gelled-solid etc, can also use the mill type mixer figure 4 grade which can be crushed and mixed.

[High Pressure Injection Method]

- High-Pressure Injection Method

After fuel oil and waste liquid is primarily mixed, the mixed-solution by passing the detailed orifice with high pressure, using the cavitation and shearing by passing by high pressure, and is used for homogenized milk etc.

If pressure is raised to about 10 MPa and a detailed orifice is passed, since there are little a primary mixture mixer's being required although there is nothing and very homogeneous emulsion can be made with regards to the viscosity, and vertical mixture nature, it is weak also to flux change and energy efficiency is also low, it will be used for the use asked for the homogeneity of emulsion.

[Static Mixing Method]

(Revolution Guidance Shuttlecock System)

Although the very strict degree management of viscosity and the flow velocity management are required in case 2 liquid is mixed and emulsion is manufactured by the turbulent flow produced in case the fluid which prepared the guidance shuttlecock which had the revolution angle of 90 degrees in the pipeline, and acquired revolution power by the guidance shuttlecock joins, like oil or water, there is no operation part, and since structure is also simple, it is suitable for mixture which does not need shearing power.

(Injector Type)

Since the principle of injector is applied, and it mixes waste liquid by sucking in to low-pressure part of the high-speed stream of fuel and the throat (diffuser) will be in a state of turbulent flow after mixture even in a comparatively low flux, and this is excellent in the dispersibility of liquid 2, such as the above-mentioned high-pressure injection mixer, and suitable for primary mixture of oil or water (refer to Fig. 5).

[Ultrasonic System]

Although it is intended to measure a detail of an emulsion particle, when the vibrator called horn which carries out ultrasonic vibration contacts the mixed-solution, since it is difficult to design the horn which tells ultrasonic energy efficiently to the mixed-solution, also there is no primary dispersing capability, in many cases, it is used by combining with the mechanical mixing method.

[Required Performance for Mixing Method]

(Dispersibility Ability)

This performance is required for a pre mixer etc. and this performance can be expected by changing a liquid into a state of turbulent flow. Like mixture of A heavy oil and kerosene, if this performance can maintain in all load regions, it can be use it for the solution which carry out dissolution dispersion.

(Emulsification Performance)

In order to distribute the liquids which will not be mixed with each other like fuel and water, in general, it cannot be distributed if the energy according to each other's surface tension is not added. An emulsification performance is a means to give this energy to the fluid, and if this performance cannot be maintained in all load regions, it is difficult to use it for in-line proportionality control of the present invention.

(Vertical Mixture Nature)

This vertical mixture nature compensates mechanically the minute time lag of a pump with pulsation, the fuel which cannot be rectified in control, and waste liquid flux. With vertical mixture, while mixing, by a part circulating, there is an action which equalizes the mixed state of liquid 2. Since it becomes impossible to expect vertical mixture nature when the flow velocity generally becomes faster, it is necessary to consider together with the proportionality pouring method etc.

(Crush Function)

By applying shearing with stronger energy to the liquid, it is possible to also make solid substances distribute into water. For example, like flesh of juice or tofu which most of it is water substance, it can liquefy in many cases by this crush function. And there are also some which can to shear mechanically in principle of mortar like the mixer of the mill type and high energy ultrasonic wave type which crushes the sludge in fuel.

[Adjustment of Air-Fuel Ratio Control Method of Combustion Equipment by Waste Liquid Ingredient]

[Waste Liquid without Calorific Value]

Although selection of the above [Injection Point] also described, in case of either the waste liquid without calorific value or the waste liquid with very low calorific value, by injecting into the position of the mixer 20 in Fig. 3, and waste liquid flux will join the fuel flux which the fuel flux adjustment valve 4 determined, the amount of injections in a burner 9 increases, but calorific value will not change and also there are no change in the amount of theoretical air, an air-fuel ratio is stabilized. However, if the quantity of waste liquid is increased or decreased rapidly, or if the waste liquid is not carried out correctly with fuel flux it will become the cause of emitting smoke or white smoke generating under a transitional situation, and it becomes the generating factor of dioxin.
If this transitional situation is controllable by injection control of waste liquid, in this case, it can respond with a former type air-fuel ratio control device.

[Waste Liquid with Calorific Value Equal to Fuel]

(Waste Liquid with Stable Quality after Mixing)

As stated above in case of the state of mixed liquid is stable [Grasp of Mixed State of Waste Liquid and Liquid Fuel], and also it has equal calorific value to fuel oil, waste liquid can be injected in to the position of the mixed vessel 10 of Fig. 3. In this case, although the fuel which passes the fuel flux adjustment valve 4 serves as waste liquid and the amount of sum totals of fuel, since the calorific value of waste liquid is equal to fuel and the calorific value of the fuel which has burned by the burner 9 does not change, it can respond with a former type air-fuel ratio control device.
However, care must be taken here whether the calorific value of waste liquid and fuel oil is compared by per volume or compared by weight. That is, with a fuel flux adjustment valve, it controls volume, and when the calorific value per volume changes, however, even if the amount of fuel which bums by the burner is the same calorific value, calorific value changes and the air-fuel ratio is unstable.
Moreover, cautions are required also for the viscosity. Viscosity responds usually to the ratio of mixture, logarithm is caused proportionally. That is, when the fuel and waste oil of 200cst and 2cst are mixed at the same temperature at 50:50, the viscosity after mixture will be 20cst. Since a fuel flux adjustment valve produces the flux change by the viscosity, it is desirable to also grasp the predicted viscosity after mixture, to predict disorder of a air-fuel ratio, and to take required measures.
Generally, in many cases this is avoidable by having the feedback control which makes regularity mass flux by the mass flux meter carried out by a fuel flux control means.

(Waste liquid with Unstable Quality after Mixing)

In this case, above mentioned method which is stable cannot be taken, but it is necessary to make n injection point into the position of mixer in Fig. 3, since the fuel controlled with the fuel flux adjustment valve burns with a burner in the form where the waste liquid which has calorific value is added, and with the usual air-fuel ratio control method there are many combustion equipment with very little injection ratio.

Since the measure is the same as that of the following [Waste Liquid with Calorific Value Unequal to Fuel], it is indicated there.

[Waste Liquid with Calorific Value Unequal to Fuel]

In case of waste liquid with calorific value, but it is not equal to fuel, whichever it is injected either in the mixer part or the mixing part of Fig. 3, change of a air-fuel ratio can not be avoided.

Although there is especially no problem in the case of gas turbine equipment and a diesel engine with the thin concept of air-fuel ratio control, if the amount of injection is made to increase in the combustion equipment currently employed by the low superfluous air ratio like a boiler, it will become the causes of emitting smoke, efficiency fall with superfluous air, and a NOx rise.

For example, when calorific value is the half of fuel, if it injects the same amount in two injection points, as a result, it will be offset with each other and the calorific value in the burner will not change, there will also be no disorder of a air-fuel ratio but the system becomes complicated, and when the waste liquid quality after mixture is unstable, it cannot be applied.

Therefore, Fig. 6 explains the form about the method of air-fuel ratio control in case where the quality after mixture is unstable or the calorific value is about half of fuel.

Fig. 6 shows the fuel by which pressurized the fuel of a fuel tank 1 with the fuel pump 2, which flux control was carried out in the fuel flux adjustment valve 4 and passes a mixer 20 and fuel flux meter 5 and the fuel system of the boiler 38 burns by the burner 9, and PID operation of the steam pressure power signal which the pressure dispatch machine 43 detected is carried out with the pressure adjustment machine 44. It outputs to the fuel flux control PID operation machine 230 and the damper divergence control PID operation machine which carried out the cascade, and it has the air-fuel ratio control mechanism in which steam pressure power control is performed, adjusting fuel flux and the damper divergence, and keeping a air-fuel ratio proper.

In the waste liquid tank 11, alcoholic type waste liquid of 5000 KCal/L is stored, it is pressurized with the waste liquid pump 12, flux control is carried out by the waste liquid flux adjustment valve 14, a calorie is injected into fuel by the mixer 20, and it is emulsionized and combustion disposal is carried out by the burner 9.

Although fuel flux meter 5 signals are sent to the waste liquid proportionality controller 65, according to the pre-set ratio of target mixture, the divergence adjustment of a waste liquid flux adjustment valve constitutes them. If the operation is explained from immediately after an injection start it is as follows.

In performing the adjustment of divergence to which a waste liquid proportionality controller becomes 20% of ratio of mixture, though the value of mixed ratio which is pre-set to 20%, do not start from that point but for example, start injecting from about 1% of injection ratio. A waste liquid proportionality controller sends the calorific value and waste liquid flux of the waste liquid injected in to a fuel flux control PID operation machine.

When it is assumed that in fuel flux control PID operation machine, the target flux for present flow is 500 L/h, by the signal from a waste liquid proportionality controller the calculation ((target flux + waste liquid flux - waste liquid flux x (waste liquid calorific value / fuel calorific value)) is performed, according to the target flux at present amount of waste liquid injection, and a fuel flux adjustment valve is controlled. The new target flux under these conditions is 502.5 L/h.

A waste liquid proportionality controller is making the injection ratio of waste liquid increase gradually by the integration value of the passage flux of fuel, or time control. Target flux is also rectified gradually and, finally control of the target flux of 550 L/h can realize it safely at 20% of waste liquid injection ratio.

Apart from the method raised with this example of composition, by increasing the amount of injection of waste liquid gradually, fuel flux is rectified, if the method of performing the right air-fuel ratio control can be taken, a method will not be a problem, and when damper divergence compensation or fan VVVF is being conversely used, it is satisfactory also by the method of maintaining a target air-fuel ratio, by performing rotation speed compensation.

In principle, although some danger follows at the time of failure of theO2 meter, rectifying by the O2 trimming method is also an effective method. However, when carrying out this method, while lessening the amount of injection as much as possible, when the O2 meter breaks down, it is necessary to also take the safety measures to stop injecting the waste liquid immediately.

In addition, if the O2 trimming method is combined with the change method of the above-mentioned target flux, since the difference of the calorific value of some of waste liquid is absorbable, it can a very effective means, and even in the situation where the O2 meter breaks down, if it is pre-set to maximum calorific value expected, then burning trouble such as emitting smoke, generating dioxin can be prevented. Moreover, the compensation by the O2 trimming method is effective also for damper compensation or the fan rotation speed compensation method.

Although grasp of calorific value needs to be performed prior to detailed analysis fundamentally and it is necessary to pre-set it. Since near calorific value is calculable with the specific gravity difference of water and alcohol in the case of alcoholic solution when specific gravity measurement also uses waste liquid flux measurer 15 as a possible mass flux meter, since the calorific value signal sent to a fuel flux control PID operation machine by programming this operation formula to a waste liquid proportionality controller becomes close to actual calorific value, it can respond also to change of concentration level of alcohol somewhat flexibly.

[Adjustment of Combustion Equipment by Waste Liquid Ingredient]

[Selection of Burner Type]

Selection of the burner type by the waste liquid ingredient firstly has the large factor of the amount of moisture contained in waste liquid. That is, if the moisture contained in waste liquid is large, according to the amount of processed fuel increase, it means that the increase of the injected mixed fuel from the burner.

The most advantageous burner type to increase of fuel is a rotary type. This is because, the burner comes with a large burner cup, and droplets mouth opening of fuel oil is also comparatively generous to excessive flux. Of course, if excessive fuel is injected which has calorific value, although it will become causes, such as shortage of wind amount and unusual combustion, as for uniting with the calorific value at the time of rated combustion, and making only injection amount increase, difficulty is not accompanied so much by the experience or by principle.

Next is the advantageous type which is an internal mixture type steam injection burner. By the internal mixture type burner, in order that the caliber of the nozzle tip 37 which injects outside may spray steam and the aerosol after mixture, the increase in some liquid does not lead to pressure increase. However, since pressure increases with the increase in liquid flux, the large diameter of the oil hole of mixer 33 has to be selected, when making a mixed ratio increase at the time of rated combustion. However, although the injection characteristic at the time of low combustion gets a little worse, from the start the injection characteristic itself is a burner with a big turn down ratio, therefore it is hard to become an adverse element.

The most difficult type is the back-pressure injection type. Since the back-pressure injection type has the turn down ratio to rated capability as small as about 1:5, if the caliber of a nozzle hole is enlarged, and increase the fuel flux to the maximum combustion ratio, in connection with this, the controllable amount of the minimum combustion will increase. For this reason, this type of burner should be selected as much as possible for the waste liquid which the calorific value is as close as to the fuel and which does not require the increase of injection.

(Easily Burnable Waste liquid)

For example, in the case of the waste liquid which contains sucrose etc. in large quantities, if combustion discontinuation etc. receives the radiant heat in a furnace, it will burn, and it is easy to become an obstacle to a burner nozzle. In principle, although injection of waste liquid is stopped before a combustion is stopped, if it is steam spray burner type (especially internal mixture) in case of such waste liquid, there are hardly any obstacle generated by bum etc. and is advantageous.

On the other hand, if it is heated after sugar has adhered to the sheet side of an injection valve nozzle, since it will adhere in the form of caramel and will become the cause of a combustion trouble, cautions are required of diesel engine and a gas turbine with injection valve structure.

[Selection of Flame Maintenance Type]

(Waste Liquid Containing Water)

Care must be taken when mixing the waste liquid containing moisture to fuel and burn, the reason for the injected oil droplets to be alight is that it is after the moisture contained in waste liquid evaporates. Generally, this evaporation is called fine explosion phenomenon in W/O emulsion fuel, the fuel of the emulsion particle surface is re-distributed by the energy of evaporation, and it is known as technology of reducing smoke dust amount sharply, according to the combustion promotion effect by detailed oil droplets diameter.

However, as for time until it lights oil droplets which mixed fuel was injected from the combustion means, and this fine explosion arose, and turned minutely, it is common to become long generally compared with the case where that is not right. As mentioned above [notes on close to rated combustion], it is necessary for this reason, to secure flame maintenance nature and to take the longer time staying at the flame maintenance band.

In water emulsion fuel system, by fine explosion effect, originally the situations is such that the flame turning into a short flame, however, the length of the flame does not become short, or the situation which it becomes long etc is because in many cases, the flame maintenance function does not match the combustion characteristic of the fuel of water emulsion type.

Fig. 7 measures the length of the flame at the time of burning water and various waste liquid by the burner with the flame maintenance function in consideration of this point, and water-cooled wall furnace which can perform flame monitoring. Each sign (1) A heavy oil independent, (2) tap water, (3) tannin system medicine boiler blow water, (4) tea extraction waste liquid, (5) juice waste liquid, (6) alcoholic system waste liquid, and (7) Amin system solvent waste liquid are shown. (1) Except emulsion 20% of various samples in fuel, and performs flame length measurement.

If it is the burner which cared about the measure against flame maintenance, there is no capable difference in the length of a flame as mentioned above, and good combustion can be maintained.

(High Volatile Waste Liquid)

Generally the fuel oil which is mixed with high volatile waste liquid has high inflammability (the flash point is low), and a combustion reaction tends to progress at once. As indicated in Fig. 7, the burner used as a sample is an air spray type, so that the mixed fuel of the Amin system solvent waste liquid in (7) although it is not evident, the flame length is clearly shortened.

From the perfect combustion point of view, it is completely satisfactory for the flame length to become shortened, however when the flame length is short this means that combustion is performed near flame maintenance band and caution is required because it may damage burner nozzle or the flame maintenance function itself.

(Conclusion of Flame Maintenance Function)

That is, when the target combustion equipment performs waste liquid disposal, in principle although the injection ratio should be determined by the flame length which is burned with the fuel oil concerned is within the range which does not change sharply, in consideration of the above principal items, by optimizing a flame maintenance function, it is possible to also increase the amount of object waste liquid.

[Air Register]

(Waste Liquid with High Ash Concentration)

When mixing waste liquid with high ash concentration to fuel oil and performing waste liquid disposal, care must be taken to ash ingredient which melted contacts heating surface, forming lava-like substance which is called clinker.

If it is in the combustion equipment using good fuel oil, for the improvement of thermal efficiency, a flame is made as close to water-cooled wall etc. as possible, and combustion adjustment which raises absorption of radiant heat is performed in many cases.

However, in this combustion state, when waste liquid with high ash concentration is mixed to fuel oil, since a flame is in the temperature region around about 1400 degrees C, the ash which fusion below this temperature, before carrying out cooling solidification to contact heating surface and solidify with such combustion form it is easy to form clinker.

For this reason, when mixing waste liquid with high ash concentration, flame form in which a flame does not approach a direct water-cooled wall should be chosen, and it is also influenced by the nozzle angle etc., if an air register is the type of combustion means with variable structure, in many cases, it is also possible to form the flame form which influence of ash cannot come easily by this adjustment

(Waste Mixed Liquid with Water)

Although there is less influence than the portions of the above and a flame maintenance function, in water emulsion, the movement power turned in all the directions will increase by fine explosion phenomenon, and there is a tendency for the thickness of a flame to change thickly. That is, this tendency is a factor which increases the contact surface of fuel and air, and is one important proof which shows the combustion improvement effect of water emulsion.

However, when the formed flame form by the air register is approaching the extremely close position to a water-cooled wall, by the water emulsion effect of waste liquid, there is a tendency for approach of a flame to become stronger which can causes a carbon adhesion obstacle or the sudden cooling is carried out with a water-cooled wall, and there is a concern that it may become the cause of generation of unburned substances.

Since non-flammable and carbon become the generating factor of dioxin, when anxious about such signs, they need to adjust an air register and need to correct the fault by the water emulsion effect of waste liquid.

In addition, the same is said of the waste liquid ingredient which causes the same phenomenon by the same fine explosion action as water in this case.

[Selection of Nozzle Angle or Number of Holes]

By adjustment of the above-mentioned air register, when it is difficult to maintain the suitable flame form, in the situation where the adjustment of air register is not possible or if it has no combustion means of the structure to carry this out, it can be achieved by correction of a nozzle angle or adjustment of the number of holes for the suitable flame form for mixed combustion of the target waste liquid

[Selection of Nozzle Caliber]

For the waste liquid with low calorific value, since the waste liquid which it is going to be processed is added to the fuel, at the time of the rated combustion, the rise of sprayed oil pressure, obstacles, such as abnormalities of the flame form by and the rise of injection speed, will be derived. When the rated combustion time in combustion equipment is short, in such case by decreasing the amount of injection of waste liquid, although it is possible to prevent such obstacle, such as improving a nozzle caliber in diesel engine and gas turbine engine which mostly performs rated combustion, and by means of adjusting to suitable nozzle caliber, in order to process the target waste liquid.

[Corrosion-Resistant Selection]

In the common burner, since the combustion chamber is in a hot oxidization state, in terms of the burner top end, in many cases corrosion resistance material is used. For this reason, in many cases, special consideration is unnecessary in the tip part etc, in many examples the steel materials are used for the passage to the tip, and change is required to use the suitable quality material for corrosive of waste liquid or pH.

In addition, when the correspondence by the combustion equipment side is difficult, it may be able to correspond by adding the anticorrosive which consisted of ingredients which will not become an obstacle for fuel or waste liquid at combustion.

[Adjustment of Low NOx Means by Waste Liquid Ingredient]

By addition of waste liquid, it is influenced also with various low NOx means in a combustion means. Although it is necessary to consider these and to examine a low NOx means, if a subject is arranged first, the waste liquid which NOx reduces, and the waste liquid with which NOx increases exist, and it is necessary to advance examination about each.

[Waste Liquid with Reducing NOx]

(With Calorific Value and No Amount of Nitrogen)

You may consider that such waste liquid is almost the same as kerosene, although there is no reduction effect of NOx in mixing in to kerosene, as for fuel with other nitrogen substances it becomes the cause of decreasing NOx. For example, in case of the fuel which contains a part about 2000 ppm of nitrogen like C heavy oil, fuel NOx generated is said to be about 80 to 100 ppm in the exhaust gas, and about 4 to 5 ppm per 100 ppm of nitrogen in fuel are said to influence an exhaust gas NOx.

If the waste liquid is mixed with C heavy oil which the calorific value is equivalent and there is no nitrogen substance, the amount of nitrogen in the fuel of 50% ratios of mixture falls to 1000 ppm, and it can expect the NOx reduction effect to about 40 to 50 ppm.

(Too Much Water Content)

- Boiler, Incinerator, Gas Turbine, etc.

The waste liquid with too much water content causes NOx reduction especially to kerosene and A heavy oil. If it specifies that it is purely water, the reduction effect of NOx as shown in Fig. 1 is expected.

If it is in C-heavy-oil fuel, in a boiler or an incinerator, there is too much water content which does not change with the direct NOx reduction effect. However, it is possible to reduce oxygen concentration, and since the amount of NOx generating decreases as a result, the reduction effect of NOx is expectable, since the amount of particles of soot falls sharply.

- Diesel Engine

In a diesel engine, since the value of thermal NOx occupied in a NOx value is very high no matter what fuel it may be, and if there are too much water content the effect of NOx value reduction can be expected. Fig. 8 is the measurement example of NOx and smoke concentration in the diesel engine currently employed with C heavy oil. Moreover, although the NOx reduction effect expectable to a diesel engine is shown in Fig. 1, even if it conquers some difficulties, a result considered to be social benefit which performs water emulsion combustion.

[Waste liquid with Increasing NOx]

The waste liquid containing parts of nitrogen, such as Amin, ammonia, or protein, ammonia, becomes the factor added into an exhaust gas as waste liquid NOx. However, when watery, the thermal NOx reduction by water emulsification in (5) food system waste liquid in Fig. 9 there may be some cases which may not change the amount of NOx. Each sign in Fig. 9 shows (1) A heavy oil independence, (2) tap water, (3) tannin system medicine boiler blow water, (4) tea extraction waste liquid, (5) juice waste liquid, (6) alcoholic system waste liquid, and (7) Amin system solvent waste liquid.

In any case, by analyzing the waste liquid, it will be clear of the nitrogen ingredient and obtain the expected amount of NOx (since the NOx conversion differs according to the composition of nitrogen contents, however, with regard to complicated compounds, such as protein and amino acid, it is necessary to fid out by survey at an experiment furnace etc) a mixable ratio should be determined or it should cope with strengthening a low NOx means etc., and the amount of discharge of NOx should be controlled.

[Examination of Low NOx Means]

As mentioned above, when water exists in a waste liquid ingredient, in principle depending on the amount water content the NOx reduction effect is expectable, but within the low NOx means, water spray, steam spray, etc. since it competes with the water contained in the waste liquid concerned, caution is required because it may become the cause of inflammable aggravation.

(Selection of Two-Step Combustion System)

Therefore, especially it is desirable not to depend on such a means but to take the method of a low NOx burner etc., a multi-stage air blowing burner is the most desirable, when water exists in waste liquid. Namely, in the case of a multi-stage air blowing burner, the air flow velocity is slow and, as for the combustion region of the range from which the water particle distributed in the shape of emulsion starts micro explosion, a flame cannot get cold easily. Therefore, existence of a certain amount of water not only can be a cause for raw (unburned) splashing, but controls the temperature in this combustion region by going up, and by fine explosion effect at the time of the secondary or the third air blow, the emitting smoke prevention effect is very large.

Therefore, as a combustion mechanism for using this patent for the maximum effect, this combustion system is the very congenial low NOx method that the synergistic effect to each other is expectable. In addition, although the purposes differ, also in the multi-stage air blowing method of a gas turbine, and a diesel engine, it is a sub-combustion chamber system, and the combustion form by the system with which an ignition region (combustion region where emulsion lights after fine explosion oil droplets) is not cooled by air can gather the injection ratio, when water content is included in waste liquid.

(Selection of Split Frame)

Conversely, if not careful, the low NOx method which flame temperature is positively reduced by absorption of air and radiant heat, and is made like split frame, burner does not change. In this low NOx method, it is for the ignition delay of process in which emulsion starts fine explosion tending to lead to increase of direct flame length, and easy to generate phenomena, such as raw (unburned) splashing by un-lighting of oil droplets.

(Selection of Water Spray and Steamy Spray)

Application in case of water spray, steam spray, and waste liquid including water, require care. That is, it is for the NOx reduction by the radical control action by water to have a fixed limit for every combustion equipment, for too much application will cause HC or CO increase conversely, and for the generating risk of dioxin to increase. When these are all used together, by using together with the means of adjusting spray amount under waste liquid processing, the control of increase of HC or CO should be taken.

(Selection of Exhaust Gas Denitration Equipment)

In the latest mainstream which is the ammonia reduction formula exhaust gas denitration equipment, it cannot be said from the temperature conditions or action mechanism that the re-composition risk of dioxin is low. At present, there is no knowledge and it needs to investigate a generating risk in application by means, such as measuring the amount of dioxin before and after denitration equipment. Depending on the result, it may be necessary to consider the possibility of the denitration equipment which allows to denitration in an environment of 200 degrees C or less.

(NOx Reduction of C Heavy Oil)

In the case of the fuel which contains a part of nitrogen in fuel like C heavy oil, in the industrial combustion equipment with few amounts of NOx generating of a boiler etc., there is a risk that the NOx value exceeds the regulation value by the change in ingredient ratio. It is difficult to reduce the nitrogen contents within the fuel like C heavy oil, in order to control this, when the forced low NOx means or low oxygen operation are performed the risk of generating particles of soot will increases.

Although the fuel NOx reduction effect can be expected to waste liquid excluding a part for nitrogen when there is much calorific value when using it for waste liquid processing, but if this is not the case, it is important to mix oil fuel which is low in nitrogen for example a fuel like A heavy oil, and not to depend on an impossible low NOx means.

Although it is necessary to prepare for the unexpected situation by giving a margin a little to oxygen concentration unless the heat calorie is very stable in the case of the waste liquid which has especially unstable calorific value, it is because application of waste liquid processing becomes difficult by the boiler which narrowed down oxygen concentration to bring it as close to the limit of emitting smoke for NOx reduction.

[Conclusion of Adjustment of Low NOx Means]

As mentioned above, while determining the injection ratio of waste liquid, by taking into consideration the NOx reduction effect or a rise factor accompanying waste liquid injection etc., determine the injection ratio in the range which a low NOx means has neither waste liquid injection, competition nor a bad influence, or changing a low NOx means etc. to correspond it is necessary. The in-line proportion control type mixed oil method of A heavy oil especially in C-heavy-oil combustion has the merit which can make this processing method and equipment serve a double purpose, and also there is a large combined merit, it can respond also to the change for nitrogen of C heavy oil flexibly.

[Existence and Type of Additive Agent]

The additive agent stated to this patent points out what uses waste liquid in the stage injected into fuel, and what is needed in the pretreatment stage of waste liquid is not included. Although the purposes using an additive agent are the following principal, items in principle, since it becomes a cost increase factor fundamentally, although there is no necessity of using by equipment side correspondence when additive-free can be applied, when the obstacle is expected by not using it, it is necessary to use and these additive ratio, selections, etc. are important technology.

[Lubricative Grant]

When a mixed state is emulsion-like distribution, unless waste liquid has lubricity, the lubricity of the mixed-solution decreases. However, the obstacle may be avoidable if the lubricity of the fuel oil itself is high.

This is in the state where the gear-type capacity pump with its ball bearing lubricated in liquid is operated with kerosene by 1MPa of pressure difference in dispensing. If water 30% is added into it before 30 minutes passes, it is clear that the operation will stop by wear of bearing. However, if the same conditions are applied to C heavy oil, it performs satisfactory for five years or more.

Although lubricity is the very ambiguous index which can be guessed with the combination of various fluid elements and sliding material, for example as mentioned above by adding specific additive agent to the kerosene, if the operation period which lasts for only 30 minutes can operate for five years or more, it is clear that the additive agent effect clearly can be expectable.

By such experiment method, the inventor performs lubricative dynamic evaluation of the fuel in an emulsion state, and is developing the lubricous grant additive agent of various variation which fuel and a waste liquid type, and its combustion equipment require.

Although it is desirable not to use such chemical as much as possible originally, when the measure against equipment like the diesel engine is not sufficient for a lubricous measure, and an obstacle can be prevented by mixing a lubricous grant agent in to the fuel or waste liquid.

[Grant of Corrosive Protection Nature]

As for corrosive protection nature, in principle it is desirable to process by corresponding from the side of equipment. However, for the use of diesel engine etc which has long fuel system after waste liquid is added, also very high pressure fuel system is required, much expense is required also for these improvements.

In the correspondence to corrosive like water, by using the Amin system surface-active agent etc. into fuel, oil film of the Amin system surface-active agent is formed in the steel-materials surface, and corrosion can be prevented. Although Amin becomes the increase element of NOx since it contains a nitrogen substance as mentioned above, since offset or reduction is possible by adding water, it is effective technology.

[Grant of Emulsification Nature]

When waste liquid is water soluble liquid, when burning with combustion means by emulsification distribution, the stability while it is sprayed with a combustion means from the injection point of waste liquid is in the state where combustion is not borne, it is necessary to use an emulsifier. As an emulsifier, in order to stabilize W/O type emulsion, it is desirable to distribute a fuel system beforehand, to place about 3 to 7 oil soluble surface-active agent as HLB, and to inject water-soluble waste liquid into the surface-active agent mixture fuel oil.

However, in the case of waste liquid, when affinity with a surface-active agent differs from the case where water is emulsified, it is expected to carry out the preliminary exam of fuel and waste liquid in advance.

[Prevention of Foreign Substance Generating]

For example, since it is originally dissolution dispersion when mixture of a solvent etc. is anxious about sludge generating in fuel, it is thought that stability may be no problem. However, as mentioned above, for malthene in fuel etc. to melt into a solvent, for the cavitation accompanying the sludge generating risk by asphaltene isolation changes highly, pumping, or flux control to generate radical, and to become a sludge factor. A surface-active agent is used also for such case. When mixing an especially high volatile solvent to fuel, in case it increases pressure with a pump, evaporation takes place by sliding surface and it is easy to produce dry operation, and lubricity also poses a problem. In such case, while there is a function to make the steel-materials surface produce oil film by using the surface-active agent of a polyalcohol fatty acid ester type and decreasing a sludge generating risk, lubricative grant can also be expected and a pump, an injection valve, etc. can be protected.

Moreover, according to radical theory, it is due for the waste liquid containing an oxidization prevention agent with the radical control effect, polyphenol, etc. to be also considered that the generating effect of the foreign substance is expectable, and planned to apply for a patent simultaneously as the sludge control method.

[Prevention of Crystallization]

By adding water-soluble part powder chemical, such as the poly acrylic acid and PVA into waste liquid, crystallization of the calcium or a magnesium ingredient currently mixed as heavy carbonic acid salt etc. can be prevented. Especially like a diesel engine which has a very narrow orifice, and in the pump compressed into high pressure, by heat insulation compression few underwater air bubbles etc. generate heat, and there is a possibility of producing crystallization of the above-mentioned calcium. Since crystallized detailed calcium may also be a possible cause of damaging sliding part of an injection pump or an injection valve, it is desirable to examine such chemical that prevent crystallization of calcium.

[Recycling Based on Properties of Waste Liquid]

However, there are examples as mentioned above that the waste liquid which is discarded still contains useful additive agent ingredient(lubricating oil, anti rust oil, surface-active agent content drainage, vitamin-C, food waste liquid containing vitamin E, etc.), although it has already had knowledge about engine lubricating oil, at the stage when this processing actually becomes the commercially used, it is also possible to expect this effect by reuse of waste without purchasing an additive agent.

[Necessity of Combined Use of Water Emulsion Combustion]

When processing waste liquid with industrial combustion equipment, care must be taken that, unlike the incinerator designed for the dioxin control, the sufficient combustion chamber stay time is not expectable. Especially with the diesel engine or gas turbine etc, which is high temperature high pressure the stay time in the combustion is only expected to be ten to twenty meter pr second. The important point here is the technology which does not produce soot. That is, at the combustion process when the soot (graphite) is generated, the radical chain is intercepted and the risk of generating dioxin by the hydrocarbon which was protected inside becomes high.

Moreover, if low-temperature combustion of this soot is carried out by catalyst combustion etc., there is a concern that the condition most convenient for dioxin generation is created. Therefore, at least when carrying out incineration disposal of the waste liquid, it is important to prevent generating soot from the combustion chamber.

[Waste Liquid Containing No Water with Low Molecular and High Quality Liquid Fuel]

The organic matter disintegration which was excellent in water emulsion combustion has already been stated. If it consists of hydrocarbon of a low molecule with which a benzene ring cannot generate easily in the fuel and waste liquid, there is no merit to be expected other than NOx reduction effect for such waste liquid to apply the water emulsion combustion accompanied by loss of a heat calorie.

[Waste Liquid Containing Water]

Moreover, when it contains water in waste liquid the water emulsion effect can be expected, and if there is a high polymer organic matter, an effect can be expected to decomposition promotion and no need to perform water emulsion. However, if water quantity is limited and the effect of water emulsion is not enough, it is to be considered for demonstrating the water emulsion effect by means of diluting waste liquid with water.

[Combined Use with liquid Fuel, Such as C Heavy Oil]

C heavy oil receives various radical as mentioned above, (this includes the radical given by the earth before extracting crude oil), and contains two or more very stable substances.

If it is said without fearing misapprehension, it is not an overstatement that C heavy oil is the recycled article of the waste in modem society. C heavy oil is the residual substance after producing various products, such as fuel, such as gasoline, light oil, kerosene, and A heavy oil, various lubricating oil and plastic materials, and a solvent, from crude oil. However, when processing this as industrial waste, huge costs including its processing expense will be transferred to the product imputation and led to the rise of social cost and the energy is vainly lost, and probably the discharge amount of the carbon dioxide will increase. That is, not to restrict the use of C heavy oil, but the point is to consider how to burn by reducing the influence on environment, and this is very important reduction of the social cost and the measure against global warming.

However, at present condition, since there are very few consumers who are burning C heavy oil with such a social meaning and that there are many examples adopted only because of cheap fuel cost, therefore, though regrettable by the present condition, it cannot be denied that compared to the number of the consumer using gas fuel, the environmental consciousness is insufficient. The inventor considers that, the consumer with strong social consciousness who would convert into gas fuel, as a country Japan or as globally, under the utmost care this C heavy oil is the residual substance of crude oil, should be concentrated in taking caution whether to carry out heat recovery in eco-friendlily way is the part of an environmental improvement of the whole society

The boiler or diesel engine which can safely burn C heavy oil etc had the capability which can incinerate industrial waste from the start. However, if it is used together with at least the act of performing waste liquid processing, when water is not included in waste liquid, it responds to social needs that the Bosch concentration should be the minimum set ratio of water emulsion of which it consists.

[Waste Liquid Containing Hydrocarbon or Halogenated Carbon of High Polymer]

If water is not included in waste liquid when such waste liquid must be processed, emulsion combustion application should be judged and the water emulsion method should also be adopted if needed. When combustion by boilers, such as vegetable oil, also has a high ratio of mixture, it is the example which should use the water emulsion method together.

[Judgment of Emulsion Combustion Effect and Judgment of Application]

That is, when emulsion is not used and where the result of the Bosch concentration (soot is attached to white filter paper) test is black, the simplest adjustment is by changing the hydrolytic ratio or adjust the water level in the waste liquid which the Bosch concentration becomes the thinnest, and it is presumed that there is a high social risk to process waste liquid in the high Bosch concentration state.

[Existence of Burner Unavailable for Emulsion Combustion]

If water emulsion is also used by the same reason (the NOx reduction effect) as water spray, it is effective to all burner form. However, as mentioned above, if the burner without sufficient flame maintenance function, the burner whose air flow velocity is too fast, and steam type internal mixture burner, if the burner which performs preliminary mixture inside a burner nozzle so that the water particle in emulsion fuel breaks away, the radical effect accompanying fine explosion may not act effectively to a part of flame, but may turn into the radical control effect rather, and may be the generating cause of unburned ingredient. In consideration of this point, water emulsification should be determined in accordance with the characteristic of a combustion means, and if the water in included in waste liquid, if needed, it is necessary to consider improvement of a combustion means etc.

[Pretreatment Means of Waste Liquid]

The pretreatment means of waste liquid is a means for improving in the waste liquid ingredient, physical properties, and the mixed characteristic which can be mixed to industrial combustion equipment by adding an improvement to the ingredient of waste liquid.

[Ingredient Removal]

In the industrial combustion equipment or a combustion means, which is made applicable to processing, it is required to remove the ingredient concerned obstacle beforehand. In a certain way, this technology and with the combination of the present invention, it is the important technology in which almost all the organic matters that can be liquefied can be used for control of the fossil fuel consumption by the thermal recycle.

(Removal of SS Ingredient)

Although this is removing the non-dissolved solid in waste liquid by the means called filtration, and this is common, by the size of the removed particle, the processing methods also differ and if it exists in large quantities, means, such as centrifugal separation, may be effective.

In addition, especially in the case of a diesel engine, it is necessary to remove carefully.

(Removal of Ashe Ingredient)

When dissolving in the form of ion, an organic matter and an ash ingredient can be removed using ion-exchange resin, an ion exchange film, etc.

(Removal of Halogen)

An organic matter and halogen are removable just like removal of an ash ingredient using ion-exchange resin, an ion exchange film, etc.

Although an ash ingredient is also simultaneously removable, since sodium chloride etc. is a very fine molecule compared with an organic matter, of a low performance such as a reverse osmosis membrane (namely, reverse osmosis membrane which allows salt to pass) or a highly efficient extra filtration film (only a low molecule ingredient is passed) which is meaningless even if it is developed, it is thought that concurrent processing corresponding to the purpose of this processing which is the filtering method of ash and halogen is attained.

(Removal of Nitrogen)

When mixed in the organic solvent etc., using a variance in evaporation of temperature, it is possible to separate independently from those containing a nitrogen ingredient and those which do not contain nitrogen.

(Removal of Heavy Metal)

When the heavy metal is dissolved in the form of ion, chelating resin etc. may be possible to remove.

(Conclusion of Ingredient Removal)

At present, since it is the stage which this waste liquid processing method has not been established, many of these removing methods serve as technical application of a fine-chemicals field, such as semiconductor manufacture and medical-supplies manufacture, and it is very expensive and is thought to be unlikely to be reality. However, the feature of this processing method, i.e., the combustion means for incineration treatment or in the industrial combustion equipment, to wait for the appearance of the equipment with which harnesses the feature which is necessary to remove to the grade which is uninfluential, what has the waste liquid which contains parts for salt, such as facilities for providing meals, several% or more, and it is considered not impossible for only an organic matter ingredient can be dispose of by this processing method.

[Neutralization of Oxidization Reduction Potential]

Generally, since pH of waste liquid is limited to the influence on corrosion, wetted surface material, etc., the method of changing the quality of the material is desirable from a viewpoint of waste liquid processing rather than to increase the amount of processings by means, such as neutralization.

However, with regard to oxidization reduction potential, the influence to the fuel oil (solidification or sludge generating) may be large in many cases, and it may be necessary to neutralize and place oxidization reduction potential.

[Concentration]

If the waste liquid amount is more than the amount of the fuel consumption, provided that it is water soluble, by evaporating moisture beforehand this is the pretreatment which enables disposal of the whole quantity by this processing method. When the target combustion equipment is a steam boiler, if the steam for this pretreatment is used during the time when there is little combustion load, it is expected to increase the quantity of processing the waste liquid.

When the amount of organic matters in waste liquid is about 7% in which the calorific value is 600 Kcal/L, the energy loss in this processing method can provide own evaporation heat with its own calorific value, it serves as zero. Since steam is used for the condensing method, although it receives the impression of energy loss, if the amount of organic matters in waste liquid increases by this, it will serve as contribution of thermal efficiency conversely, and it will not be a loss.

And by using the concentration equipment called multiplex, rather than forcefully processing the whole quantity by this processing method, in terms of energy efficiency, it becomes energy saving. In addition, the decompression distilling method for having applied this multiplex utility method is effective, also in the waste liquid containing protein, such as milk which has concern with heat to solidify etc, low-temperature evaporation is possible.

Patent application is due to be performed also with the condensing method or the distilling method for suitable waste liquid process.

[Sterilization]

Although it is slightly different from the concept of a pretreatment, when the obstacle occurs which originates by decomposition by the living thing, fermentation, mold, scum formation, a bad smell, etc during preservation, it is necessary to apply suitable sterilization means or means of bacteria control and prevent an obstacle.

Since these means can carry out to the food preservation method generally used such as heating, cooling, ultraviolet ray, and ozone etc they are possible to be incinerated and disposed, from the hydrocarbon system disinfectant injection methods, such as aldehyde and organic acid, since the there are no concern over environment they are effective methods.

[Solidification Prevention and Enzyme Decomposition / Dissolution Processing]

For example, in case of the waste liquid containing protein, such as milk, restriction is needed for a mixing method or a combustion means with temperature or radiant heat, etc. of fuel oil. However, since it can decompose into amino acid with little concern by using protein decomposition enzyme like pepsin, processing becomes easy.

This is applicable also to decompose sucrose into glucose and fructose or decomposing starch into glucose, and decompose biodegradable plastics into lactic acid such as poly lactic acid etc, and it can be applied to liquefy etc means.

In addition, even if it does not use enzyme, with a reaction with special material, it is possible to extend the application range of this process method to the high viscosity or solidified matter and changing the viscosity of the liquid to the normal level (for example, dissolution by limonene of styrofoam).

Moreover, the following method can be considered to be valuable for examination, using discarded solvent etc., plastics can be dissolved, using the characteristic of easily dissolved in waste alcohol or discarded organic acid solid waste is dissolved, or an ingredient is extracted and burn the dissolution solution etc.

[Rational Pretreatment Means]

A rational pretreatment means is a pretreatment means as mentioned above, which becomes possible by mixing to industrial combustion equipment by giving the pretreatment means to waste liquid, and it points out that it is a rational pretreatment means as compared with the repair expense of the industrial combustion equipment which all costs required for the pretreatment make the other disposal methods and applicable to processing etc. And together with the following [Selection of Applicable Industrial Combustion Equipment], it is confirmed by the person concerned who possess extensive technical knowledge and cognition of the latest technical level that it is rational matter.

[Selection of Applicable Industrial Combustion Equipment]

The industrial combustion equipment which can be processed is determined according to the removable ingredient in waste liquid with the above-mentioned rational pretreatment means, improvable physical properties, and the same improvable mixed characteristic. Except for the portion stated in the above-mentioned [Analysis of Ingredient and Composition of Waste Liquid] item, the composition for the important ingredient of the typical item will be described when selecting the object equipment.

[Chlorine Ingredient]

In principle, the chlorine ingredient contained in the waste liquid like in an incinerator which contain in order several %, should be desalted in advance by all the industrial combustion equipment, since the concentration permitted in an exhaust gas is specified.

However, in determining whether desalination is required or not, for the waste liquid with chlorine concentration is low from the beginning etc, according to the characteristic of each combustion equipment, by applying the equipment which influence cannot surface easily, desalination equipment becomes unnecessary and has a large cost reduction effect. In addition, by absolute 0, there is no numerical value indicated to be zero in the ingredient, and it shows below the detection limit in the present usual analysis technology.

Moreover, in principle, the amount of chlorine contained in the fuel which can be burnt with the combustion equipment, since safety is secured from an actual result, it serves as a big factor, when defining a safe standard.

In addition, if it identifies the generating risk of dioxin, since it will be sufficient quantity to compound at least 0.01 ppm of dioxin of a ppb order which is the usual detection limit of chlorine and the chlorine of waste liquid is zero, no matter what combustion it may perform the view of dioxin is not generated is not reality.

- Gas Turbine

Firstly with gas turbine engine, chlorine ingredient to this equipment is contraindication. That is, chlorine, such as salt contained in waste liquid, although deviation hardly occurs and corrosive does not occur in 300 degrees C or less, if it exceeds 300 degrees C, it becomes isolated chlorine with a powerful oxidizing quality, and it will invade high temperature material, such as heat-resistant alloy and ceramics. Therefore, the waste liquid processed by the gas turbine, the waste liquid concentration of about 10 ppm or less contained in A heavy oil is desirable, when the calorific value of waste liquid is almost zero, and since it grows into the state of the chlorine concentration of A heavy oil + chlorine concentration of the waste liquid, zero is desirable as much as possible.

- Diesel Engine

Although surface temperature of a diesel engine, such as a cylinder and a piston is low, the piston top end, an exhaust valve, etc. are in the temperature domain exceeding 300 degrees C, and the chlorine of high concentration needs to be avoided.

Moreover, unlike other combustion equipment it is intermittent combustion and ignition · fire-extinguishing process is repeated in each cycle, unburned substances can be easily increase. Therefore, the average dioxin concentration of a diesel engine shows a high value of about 10 to 100 times more than other continuous combustion equipment (it is a value lower than the fiducial point of the severest incinerator.) and it is desirable for the amount of chlorine in waste liquid to be as little as possible.

- Boiler etc.

In principle, amongst the combustion equipment, by the combustion equipment with the water-cooled wall structure which is not over 300 degrees C like a super heater or a pipe for thermal oil, if the value of the hydrogen chloride in the exhaust gas is kept below the legally defined restriction concentration, a certain amount of chlorine concentration is permissible. However, since the obstacle by chlorine influences in flame form, combustion chamber form, and also in boiler furnace load, checking those corrosion situations in every form of a boiler or a burner, the method desired is the experimental technique which is to increase the amount of chlorine in the fuel from the safe quantity on the basis of the chlorine concentration.

- Other Equipments

Alkaline-earth metals calcination furnaces, such as lime, can permit quite high-concentration chlorine in the range which does not spoil the quality of a product. In addition, although the furnace for industry etc. is in the chlorine gas tolerance level of an exhaust gas and can be used except for the case where it is contraindication to a product, since there are many high temperature regions of 300 degrees C or more, you should compare and examine the merit accompanying repair expense, such as a fire refractory material, and processing.

[N Factor]

In all industrial combustion equipment, since N factor becomes a NOx rise factor, it tends to be considered that you should restrict it as much as possible. However, in a diesel engine, since far high thermal NOx occurs rather than it originates in fuel as a part of the nitrogen, in Fig. 9 NOx rise value of approximately 250 ppm by (7) Amin system waste liquid, when converted to oxygen concentration 13% of diesel engine is 117 ppm.

By applying emulsion fuel to a diesel engine, according to the emulsion effect in Fig. 8, it is attached to 10% of hydrolytic ratio, and about 120 ppm NOx reduction effect can be expected. Then, if 10% of water supply is performed with the Amin system waste liquid of (7), many waste liquid for N factors can be processed, preventing the rise of NOx of an exhaust gas.

Furthermore, in case of a difficult drainage of processing Amin with the high ratio of conversion to NOx or ammonia containing 3000 ppm by using diesel engine, the processing becomes possible by controlling the rise of a NOx value. Also the Amin system waste liquid as mentioned above, may also be able to expect the corrosion prevention effect of a fuel system, and control effect of the sludge caused by radical and deserves examination.

[Ash Ingredient]

- Gas Turbine

In principle, even if it is ash with high melting point, possibility of wearing turbine blade is high and it should be severely restricted.

- Diesel Engine

While slurry has comparatively high tolerance over an ash ingredient and it is a hard substances, it shortens the life of an injection pump or an injection valve extremely except for a low melting point substance of 600 degrees C or less, by generating a stick there is a fear of ceasing of the mechanism therefore, also needs to remove a substance which is crystallized by mixing SS ingredient, or crystallized by mixture with other ingredients. For example, calcium etc. combines with phosphoric acid and turns into a hard apatite and hard calcium phosphate. If acetic acid calcium solution, phosphoric acid ammonium solution, etc. are mixed, a calcium phosphate crystal will be formed, and cautions are required.

Although especially the ash generated as minute powder is satisfactory, if what adhered in the shape of a scale inside the combustion chamber drops out and bites into a valve sheet or a piston, it becomes the cause of an engine obstacle, depending on the size and hardness. In case of bad inflammable engine with which the waste liquid containing ash reaches a piston head before combustion (if water evaporates after contacting a high temperature part, dissolution salts will be scaled.) In the engine, operation management must be carried out by the ash concentration which an internal scale does not occur, or engine must be adjusted. However, it is difficult to predict these phenomena prior to the application, it is necessary to conclude by the experimental technique after application.

- Boiler etc.

If it is a high melting point substance, although there are many equipment which can allow up to about 500 ppm, the maximum permissible quantity differ by whether it is the equipment which can remove the deposited ash or can be cleaned. In case of a low melting point substance, and more at a high furnace load (1 million Kcal/m3 is exceeded) case, since the interval of a water-cooled wall and a flame becomes narrow and probability becomes higher that the low melting point substance of a fusion state will reach a water-cooled wall, and therefore restrict to the smallest possible value.

In addition, when investigating the fusion temperature of a low melting point substance and exceeding fusion point, in case of steam heating machines, such as super heater, or a heating medium boiler, you may consider to examine it by removing the pretreatment, or combined use of a melting point rise agent etc.

(Low Melting Point Substance)

Low melting point substances, such as phosphoric acid, are permissible to some extent in the equipment for industrial combustion which can permit the calcium which controls substance and magnesium. Although it is safe to restrict it with the combustion means other low melting point substances, using as a target value concentration permitted in the fuel which can burn without an obstacle. It is desirable to make the amount of waste liquid injection increase gradually, restricting, when the ingredient is an ingredient with little concern to environment, such as sodium and potassium, and being cautious of exhaust gas temperature, a draft, etc. with various elements which make combustion equipment, the concentration which an obstacle generates differs.

(High Melting Point Substance)

If it is below permitted quantity of particles of soot except for a gas turbine etc., a high melting point substance is permitted in management of industrial combustion equipment, if there is no influence in a combustion means. However, it should also examine the composition ingredient of these scattered ashes and is absorbed by human bodies, such as calcium, magnesium, and iron, it is harmless, and if there is no bad influence to environment, although it is permissible to some extent, research is required also about examination of the ingredient contained in ashes scattered with this process.

(Ash Common Counts)

Although ash should refer to the value that the amount of ash permissible on the performance specifications is indicated in many cases for each combustion equipment, when there is no mention about it, you must define the outline of maximum value which the amount of ash equivalent to the fuel can be used with the combustion equipment, and when a restriction substance is only ash, the method to find out the maximum concentration for each equipment is to gradually increase the amount of additive can be also effective. This is because there are various factors that cannot be judged by one general item called ash composition, in case of waste liquid or water unlike fuel, as mentioned above, there are substances easy to affect, and there are less influenced substances, or there are substance which can offset a bad influence etc.

[Mixed Distribution Method]

[Adjusting Injection Ratio and Change Rate of Injection Ration for Waste Liquid and Additive Agent, etc]

There is a subject with three kinds of important meanings in adjustment of the injection ratio.

Firstly, injecting waste liquid into the combustion region which does not show the ideal state will not only generate dioxin etc. but stop the combustion and generate Unstable operation, etc and not only causes air pollution, but cause an hindrance for the safe employment of industrial combustion equipment.

Secondly, if it has too high injection ratio even if it injects waste liquid into the combustion region which shows the ideal state, it is clear that the ideal state will be changed. If it injects superfluously to fuel and becomes unstable combustion even if it is pure water leading to neither a combustion chamber nor air pollution, it is clear to generate dioxin by the chlorine contained in fuel, and it is clear that combustion will cease or unstable flame will occur.

Thirdly, the objective is to keep the planned waste liquid concentration. That is as it is or as a result of the pretreatment, after waste liquid injection is in the combustion region which shows the ideal combustion state, and condition that shows the ideal combustion state after injecting the waste liquid, and as mentioned above that the waste liquid concentration permitted was restricted by various substances namely moisture and other substances contained.

Moreover, since an additive agent is used in order to mainly prevent the obstacle of waste liquid, it is common to also change the injection ratio according to the injection ratio of waste liquid.

(Adjustment of Change Rate of Injection Ratio)

Although this is also an item relevant to adjustment of the injection method of waste liquid, especially when injecting waste liquid in the basin after the fuel flux adjustment means of a boiler. That is, a rapid change of the injection ratio will cause the unstable state of the fuel and waste liquid ratio called transitional phenomenon, change rate must be adjusted according to the buffer from an injecting point to a burner nozzle tip.

Moreover, although there is calorific value, the waste liquid which is not equal to fuel, it is necessary to unite with the response of the air-fuel ratio control device (it does not have a problem if the injection ratio is very small quantity.), and to determine the ratio of change of injecting in such a case it may be necessary to control together with air-fuel ratio control.

In addition, since it is applied with superfluous air like the furnace for industry employed by the high oxygen ratio, the diesel engine, and the gas turbine, industrial combustion equipment which does not produce a big problem, especially has the air-fuel ratio change accompanying change of the amount of waste liquid injection, if a rapid change of calorific value is not noticed, the control system of the load is disturbed and influence on safe operation occurs, a variance ratio must be observed.

The technique of high safety is to start these from a low-speed change rate in a test run and grasp the severe control and the response of those equipment in general, and bringing a change rate gradually to the faster speed.

[Preventing Deviation of Oxygen Concentration in Exhaust Gas from Regular Range]

At present situation, these preventive measures mainly being applied to the boiler or low oxygen ratio furnace for industry, and being applied regularly, by combining the technology of [Adjustment of Injection Method of Waste Liquid], and [Air-Fuel Ratio Control Method of Combustion Equipment by Waste Liquid Ingredient], if deviation from the regular range is originated in the obstacle of a combustion means by which deviation of the regular range originates in waste liquid mixture, reexamination is required using all technology.

For example, if it is because the burner was blocked, the reason with which the burner was got blocked is analyzed, and it is necessary to improve a pretreatment or to consider optimization of combustion equipment etc.

[Maintain Ideal Combustion State of Combustion Equipment]

This prevention means is applied to the combustion means of all industrial combustion equipment, and it has all the requirements for composition of the present invention put together, and attained. However, when the ideal state was maintainable in the state where waste liquid is not injected, as mentioned above it could attain uniquely by optimization of the injection ratio.

[Avoiding Obstacle to Combustion Means]

This prevention means is applied to the combustion means of all industrial combustion equipment, it has all the requirements for composition of the present invention put together, and is attained. Especially depending on a combustion means, cautions are required for burn nature and corrosive. If it is continuous combustion like a boiler or a gas turbine, before stopping injection, by making the injection ratio to zero, it may be able to avoid burning and corrosive etc can be prevented by balancing the injection ratio of an additive agent and the injection ratio of waste liquid.

[Avoiding Obstacle to Industrial Combustion Equipment by Residual Substance after Combustion]

This prevention means is applied to the combustion means of all industrial combustion equipment, and is attained by application of the [Examination of Waste Liquid Type], [Composition of Waste Liquid], and [Pretreatment Means of Waste Liquid] of the present invention. Especially, cautions are required for concentration, such as chlorine and ash.

For example, chlorine such as the halogen will degrades the fire refractory material which is high temperature in the combustion chamber, and it is well known that it corrode the steamy pipe which exceeds 300 degrees C. Therefore, if it is in the industrial combustion equipment with the combustion chamber which has such a part, halogen concentration must be managed apart from generating of dioxin. Moreover, whether the part which these obstacles generate can be exchange easily has big influence on a concentration setup. Therefore, although the technical knowledge of the maker who designed the industrial combustion equipment is required for the maximum of the amount of these chlorine, from the safety point of view, you should set the maximum to the recommended maximum amount of permission chlorine contained in the fuel by the maker.

Moreover, if it was in ash, as mentioned above, the influence also vary which it has on industrial combustion equipment by various ingredients counted as ash. Although the technical knowledge of the maker of whom this industrial combustion equipment was designed is required, safety is high if the maximum amount of permission ash contained in the fuel currently recommended like chlorine is determined as a standard.

Therefore, uniquely, these factors are also controllable by control of the injection ratio.

[Controlling Change of Smoke Concentration Accompanying Waste Liquid Composition within Regulated Range]

This prevention means is applied to the combustion means of all industrial combustion equipment, and is attained by application of a [Examination of Waste Liquid Type], [Composition of Waste Liquid], [Adjustment of Combustion Equipment by Waste Liquid Ingredient], [Adjustment of Low NOx Means by Waste Liquid Ingredient], [Pretreatment Means of Waste Liquid], etc. of the present invention.

However, the amount of dioxin by the amount of chlorine, the amount in N factor of NOx, the amount in S ingredient of SOx, etc. are uniquely controllable by control of the injection ratio.

Moreover, about the amount of particles of soot, it may be that moisture reduces the amount of particles of soot, and it is necessary to consider this part and control the amount of particles of soot, and this is also controllable by control of the injection ratio.

[Embodiment of Boiler]

Fig. 3 is an embodiment of a burner with the proportional expression combustion means of single burner structure. Although part of the adjustment of the air-fuel ratio control method has been explained, it will be explained anew.

[Basic Composition]

The fuel currently stored by the fuel tank 1 is C heavy oil, this fuel includes, nitrogen 0.1%, chlorine 200 ppm, sulfur 0.5%, and the viscosity at 80 degrees C are 20cst(s). Fuel is pressurized with a fuel pump 2, is warmed at heater 30, via mixed vessel 10, flux control is carried out with the fuel flux adjustment valve 4, and is measured by fuel flux meter 5, via a mixer 20 , via fuel interception valve 6, and burnt by burner 9.

[Examination of Waste Liquid]

Although waste liquid is stored by the waste liquid tank 11, it is about 10% concentration of ethyl alcohol water solubility liquid, the mixed characteristic is emulsified distribution, and calorific value is 600 Kcal/L. This waste liquid is 6% of the calorific value ratio to fuel and if it injected about 20%, although it will serve as an increase in about 1.2% of calorific value, since the falls of exhaust gas oxygen concentration are few, "there is calorific value, but the waste liquid which is not equal with fuel value " means against the air-fuel ratio control are not taken

[Examination of Sub-waste Liquid]

Sub-waste liquid is vegetable waste oil, nitrogen is 0.01%, sulfur 0.01% or less, chlorine 300 ppm are included and the viscosity at 50 degrees C is 50 degrees C. Since vegetable oil tends to change with the cause of a carbon deposit when it is heated at a line heater, it is warmed by about 50 degrees C of warm water heater beforehand by the sub-waste liquid tank 21.

[Examination of Emulsification Waste Liquid]

Emulsification waste liquid is the waste liquid which is the vegetable oil with O/W type form containing the surface-active agent of HLB14 distributed, it is the discharge liquid of the centrifugal separation machine for decreasing the load to drainage, and with approximately 60% of oil concentration.

[Examination of Burner]

The external mixture type steamy spray burner is used for a burner, and spray steam is adjusted according to the amount of fuel of a combustion point.

[Preliminary Decision of Waste Liquid Injection Zone]

Check beforehand if amount of combustion classifies the combustion region from the minimum state to the amount of rated combustion into ten division, in each combustion load it is "the combustion flame of an ideal state and exhaust gas composition", and preset the multi-point injection ratio determination machine to the level of the combustion region which is possible to inject the waste liquid and the predicted value of outline of the possible amount of injection for each combustion region

(Multi-Point Injection Ratio Determination Machine)

The multi-point injection ratio determination machine is a machine which outputs the injection ratio preset in the target ratio changing time controller 62 or the sub-waste liquid proportionality controller 66, chose the injection ratio of the waste liquid in a specific combustion region (fuel flux), and based on the signals of fuel flux meter 5. Fuel flows in a fuel flux meter with the start of combustion, and the multi-point injection ratio determination machine sends the ratio preset injection ratio to a target ratio changing time controller and a sub-waste liquid proportionality controller.

(Target Ratio Changing Time Controller)

The target ratio changing time controller has recorded the injection ratio before change, to the new injection ratio directions, it is the speed which can avoid the transitional phenomenon explained by the "burner-front in-line proportion system", and sends the signal to the waste liquid proportionality controller 65 which brought the injection ratio close to the new injection ratio gradually from the injection ratio before change.

[Composition of Waste Liquid Proportionality Control]

Waste liquid proportionality controller calculates the amount of waste liquid which must be injected from fuel flux meter to flux signal and injection ratio signal based on the result of the injection ratio signal from a fuel flux meter and makes the decision of divergence of the waste liquid flux control valve 14, it receives the pressure before and behind the waste liquid flux control valve 14 from the pressure dispatch machine 14, and adds the operation which considered this differential pressure. That is, although the spraying out pressure of the waste liquid pump 12 is not concerned with waste liquid flux but is almost fixed, the pressure of a mixer is for changing with the pressure losses resulting from the sum total value of fuel flux or total of fuel flux and waste liquid flux. If prediction control based on this pressure change is not performed, time lag until feedback is carried out by waste liquid flux measurer 15 is large, and it is because a transitional phenomenon is not avoided.

(Prediction Control and Flux Correction of Pressure)

Although various kinds of operation methods are learned in such a case, the method of pressure compensation made the signal from a fuel flux meter the cascade signal (PV) of the main controller in cascade control, set the injection ratio signal to SV, carries out open loop control construction, and considers the direct proportion operation (only P control) output in this portion as a primary output first. According to a difference in pressure difference, it considers as a secondary output based on the compensation data from the differential pressure table which calculated this primary output beforehand, if variance of fuel flux is not large for the time being, the flux correction value from the last waste liquid flux meter is adopted, and when change of fuel flux is large, it outputs to the waste liquid flux control valve 14 as the last output by adopting the last flux correction value in the domain. Then, since the right present flux is inputted from a waste liquid flux meter, based on the value, a flux correction value is calculated anew, and the high injection flux of accuracy is maintained more.

[Temperature Control of Waste Liquid]

Since waste liquid is approximately 20 degrees C in room temperature, if 20% of waste liquid is added as it is, since specific heat of fuel is the half of water, the temperature of the mixed-solution will fall by about 30 degrees C, and the viscosity will rise to 60cst. Although viscosity can be raised to some extent with fine explosion effect of water emulsion, 60cst is the spray limit of a steamy spray burner, and tends to be the cause of a carbon trouble. For the reason, the fall of fuel oil temperature can be prevented by warming waste liquid at heater 30 just before a mixer. Since waste liquid is heated in the un-mixed state of fuel, it cannot easily generate the obstacle by the heat shock etc. either. In addition, when it exceeds 100 degrees C, and when the burner oil pressure falls, temperature management is important when an ingredient with boiling point lower than water is contained in waste liquid since the moisture in waste liquid causes evaporation, it is required to perform temperature management below the boiling point. In addition when boiling point of the ingredient in waste liquid is less than the divergence of C heavy oil, change fuel into fuel which does not require heating, such as A heavy oil, or just before a burner prepare inner pressure maintenance valve etc. and you should be careful to maintain boiling of the low boiling substance until the burner entrance, and that phenomena, such as emitting smoke or flame failure, may not be made to derive[*] In addition, from the experience the boiling within the burner nozzle it consists of straight line in most part and since there is few buffers to the flux, there is especially no necessity of considering, apart from the burner oil pressure falls in low combustion region, the amount of combustion within the burner gun cannot be ignored and become the unstable factor, it needs to be careful not to include the low boiling waste liquid.

[Composition of Sub-Waste Liquid Proportionality Control]

Since the sub-waste liquid has the viscosity of 20cst which is comparatively high viscosity and lubricity are also good, in sub-waste fluid pump 22, gear pump has been used. And since this injection point is a point without the pressure change by change of fuel flux, good control is expectable even if it does not perform pressure compensation. A sub-waste liquid proportionality controller performs the above cascade operations by the open loop, and they are sent to VVVF equipment 68, it changes them into a rotation speed signal, and sub-waste liquid made into a target is injected by controlling the rotation speed of a sub-waste liquid pump. In this control, except for exhaustion of a waste liquid pump or apart from the extreme rise in temperature of sub-waste liquid. Although an open loop also performs reliable control in order to prepare for these unexpected situations, flux correction is performed based on the signal of a sub-waste liquid flux meter.

[Composition of Emulsification Waste Liquid Proportionality Control]

Emulsification waste liquid is emulsion nature and although it is predicted that concentration change is sharp, it is 2% of injection to waste liquid, and there is little influence on an air-fuel ratio. An emulsification waste liquid proportionality controller carries out cascade control, and considers the signal from a waste liquid flux meter as the output of an emulsification waste liquid pump. However, this pump as mentioned before, when the shearing power is applied, the emulsification waste liquid which is easy to start a phase transition is discharged for this reason this pump is a diaphragm type pump and since very little is added, it is pulse feed type, an emulsification waste liquid proportionality controller outputs the pulse sequence according to the control output to the pump concerned.

In principle, within the pressure control region, the pump with which the discharge error is limited to control pressure within the limits since influence is not produced in combustion even if discharge amount changes, the signal of an emulsification waste liquid flux meter is used to check if it is discharged and compensation operation is not performed, but maintaining periodically if it is not a problem on employment,

[Use of Burner Nozzle Inclusion Type Water Injection Nozzle]

Fig. 10 is a conceptual diagram of the water spray type burner using the concept of a middle-mixing type burner. The water line 39 is formed in the injector part 33 of the middle-mixing type burner of Fig. 11, and fuel oil and water can be injected simultaneously.

Using this water line, waste liquid processing is performed by injecting in drainage which does not mainly have calorific value. As for the substances with calorific value which is not equally to fuel, it needs to decrease the amount of fuel using the same method as air-fuel ratio control of the waste liquid.

(Merit)

The transitional reduction accompanying water pouring is avoided and correspondence is possible by the comparatively easy water pouring control system. Moreover, in the case of the already incorporated burner, it is effective since fuel and water are the systems which are not mixed fundamentally when foreign substance generating by mixture with fuel is not avoided except that the reconstruction range can consist of limited targets easily.

(Demerit)

Since the effect of water emulsion is not expectable, in the case of fuel oil with a lot of residual carbon of C heavy oil etc., cautions are required. Moreover, since the emulsion effect is not expectable and also water takes steamy injection energy, addition of water acts on the control side of combustion, and the combustion domain which takes the combustion flame of ideal states, such as HC and CO, and exhaust gas composition with the increase in the amount of water pouring tends to become comparatively narrow by water pouring.

[Summary of Application to Boiler]

Fig. 12 shows the harmful substance concentration in the main exhaust gases by this application system. (1) C-heavy-oil (100%) (2) C-heavy-oil (100%) + waste liquid (20%) (3) C-heavy-oil (50%) + secondary waste liquid (50%) (4) C-heavy-oil (50%) + waste liquid (20%) + secondary waste liquid (50%)

In addition, the reason why the ratio sum total of (2) and (4) exceeds 100% is because it is indicated by the injection ratio notation form. Moreover, at the time of C heavy oil and waste liquid injection there is almost no variance, although NOx will not fall as mentioned above if it is originally water emulsion, however, in (2) it is presumed that by the alcohol included within the waste liquid there was a dilution effect of fuel NOx. Although vegetable oil waste oil also has the instability which causes a radical reaction, at the same time hydrogen is insufficient for the unsaturated group with which long straight chain is oxidized and it tends to serve as benzene or condensation benzene compound, and since it also has radical resistance substances, such as glycerin, it cannot burn easily. For this reason since combustion is promoted by the radical effect of water emulsion, a NOx value does not change like C heavy oil.

[Embodiment of Vertical Type Lime Calcination Furnace]

Fig. 16 shows an embodiment of a vertical type lime calcination furnace. Although lime calcination furnace calcinates calcium carbonate and uses it as quicklime, it can make the product corresponding to various particle diameter, reactivity, etc. by the calcination temperature, stay time, etc

In this composition, processing of alkali washing water and acid washing water is realized using the characteristic of not having a bad influence on product quality, even if the absorption nature and calcium of chlorine of lime, and sodium is mixed.

Washing water makes a surface-active agent act while using alkali and the acid characteristic, and generally it is used in order to remove the dirt of the organic matter containing protein or fat completely. Usually, after neutralizing both, the method of separating oil by pressurization surfacing and after this it is processed with activated sludge.

Aalkaline washing liquid is contained in waste liquid tank 11, sub-waste liquid tank 21 contains acid washing liquid is stored, and the waste liquid pump 12 and the sub-waste liquid pump 22 are diaphragm type pumps. Although a pump which does not have pulsation as much as possible is desired when carrying out proportionality injection on a line, pulsation is permissible if it is injected as in this flow before the fuel flux adjustment valve 4, if vertical mixture nature is in a mixer 20, in the range which can permit the vertical mixture nature. A fuel flux adjustment valve, a burner, and piping of the circumference of it are changed into the stainless steel type which is not invaded by acid and alkali.

According to the type of lime to be manufactured, set the ratio of mixture of waste liquid at the target ratio changing time controller 62, also determine which waste liquid it is made with the change vessel 69. A fuel flux adjustment valve by measuring the temperature of a calcinations furnace, controls the amount of combustion of each burner of the upper and lower berth and performs fuel adjustment which manufactures the lime of the quality you wish. Unlike a boiler, since temperature control of the narrower range is important, as shown in this figure, usually, the fuel flux adjustment valve is equipped for every burner.

Since the injection takes place before the fuel flux adjustment valve, even if the amount of injection increases in one hit, there is no fear of the transitional phenomenon, such as emitting smoke and flame failure, by injection of the waste liquid calorific value fall occurs, and this causes the hunching of the temperature control of a calcination furnace it better for a setting value to rise gradually. For this reason, the purposes differ but, as the objective value, set a preset value by a target ratio changing time controller and gradually set the value to flux proportionality controller 61. A flux proportionality controller outputs a proportionality output to exchange machine based on a cascade input, and signals from fuel flux meter 5. The exchange machine while outputting it to the VVVF equipment for waste liquid for a proportionality output signal, by making the target interception valve into open, by rotation speed control, waste liquid is injected into a mixer, and emulsified it, and carries out spray combustion by each burner 9 via each fuel flux adjustment valve 4.

When the process approaches the end, in preparation for the next change of valve change, replace the whole line with the water of a water tank 163 when next time injecting waste liquid in reverse order, scale caused by salt etc. can be prevented.

In addition, if moisture is blown into fuel, since quicklime becomes close to the crystal structure generated from slaked lime and a lime furnace can manufacture a product with the more high degree of activity with the generated steam, thus an effect also in the improvement in quality.

[Embodiment of Gas Turbine]

Although the embodiment to a gas turbine is prediction based on the knowledge of the waste liquid processing by the boiler, a new emulsion theory, and the combustion theory of the gas turbine in a present stage and the actual proof has not accomplished at the time of invention presentation, it is believed that the rightness is confirmed by experiment.

[Use of Usual Emulsion Method and Water Injection Nozzle]

Fig. 14 shows the gas turbine cogeneration equipment a pressure burner type turbine which uses the single pipe type burner using kerosene as fuel.

The fuel stored by the fuel tank 1 is pressurized with a fuel pump 2, and according to the power generation load, fuel adjustment is performed, measured by fuel flux meter 5 and combustion sprayed by the main burner via a mixer 20.

In waste liquid tank 11, the alcoholic type waste liquid of approximately 20% of concentration is stored, by the method of claim 1, and it is pressurized with the waste liquid pump 12, and by cascade control of fuel flux meter 5 signals, as mentioned before which controls the waste liquid flux adjustment valve 14, it is sent to a mixer and after emulsification the main burner is immediately supplied for burning.

(Evasion of Basic Control Method and Transitional Phenomenon)

In this control, it is a method equal to burner-front in-line proportion system method. However, in a gas turbine, there is no severe restriction like a boiler in a portion called an air ratio. Then, like a boiler, a target ratio changing time controller is considered unnecessary. However, in the case of power generation load it is sensitive to a torque control when and the above-mentioned transitional phenomenon occurs, although there are few worries about emitting smoke like a boiler, flame failure, etc. problems derive like rotation speed becomes unstable. Moreover, when the response of proportionality control is bad, it is easy to produce the torque change by the transitional phenomenon, and accurate control is extremely needed like boiler control at high speed.

(Examination of Waste Liquid Mixture Range)

In addition, in a primary combustion region, although it burns in the air ratio of the almost same (that is, it is the same as combustion of a boiler) grade as a theoretical air ratio, conversely, since it is fixed at the time of rated combustion, it tends to serve as a superfluous air ratio at the time of low combustion, on the other hand, generally in many cases the amount of primary air inflow serves as a tendency of lack of oxygen, and a flame tends to be extended. Moreover, unless the larger size of a burner nozzle is applied to perform a waste liquid injection, spray cannot be performed not much superfluously at the time of rated combustion.

(Setup of Waste Liquid Mixture Range)

It is necessary to perform in a rated combustion region just like the boiler, since it is required to adjust the amount of injection to the generally designed standard of 110% tolerance, in case of the low combustion as mentioned before, a boiler a flame becomes unstable and it is likely that neither CO nor HC concentration rises therefore, you must decide whether the injection must be stopped or to consider to continue the extremely small amount that concentration of CO and HC does not increase.

(Effect of Emulsion Fuel)

Thus, the waste liquid mixture fuel which was controlled and was sprayed by the main burner starts fine explosion with the moisture in waste liquid. In fuel such as kerosene which residual carbon is few, although it becomes gas-like simply by the evaporation heat of high temperature air even if it does not depend on fine explosion, since this fine explosion action performs latent heat absorption in a primary combustion region, the flame temperature of a primary combustion region can be reduced. Like kerosene, when a molecular count is few, and with the fuel which can easily be thermally decomposed, as mentioned above that NOx decreased by water emulsion.

Although the water injection to this primary combustion region has mechanical restrictions as mentioned above and is very difficult, however, if it is distributed within emulsion or the water or the water-soluble waste liquid, it is possible to have a very uniform and at the same time it is in the state where it does not have a bad influence on combustion, and can make water act on the highest primary combustion region with the reduction effect of NOx. In general if you consider the NOx reduction effect for water injection of a primary combustion region is 1 then the secondary combustion region is 0.5, and emulsion is best effective on the primary combustion region certainly and uniformly, compared with the water injection to a secondary combustion region, the same NOx reduction effect is expectable by addition of an abbreviation half.

(Adjustment of NOx Reduction by Water Injection)

Pure water or distilled water is stored in the water tank 163. Pressure is added in the water injection pump 268, the quantity usually defined by combustion load is controlled by the water injection control valve 269, and the water injection nozzle 267 sprayed in a secondary combustion region. However, flame temperature falls according to the effect of the water in the waste liquid mixed by fuel oil at this time NOx is also reduced to some extent, there is a possibility that NOx may fall too much, in the condition supposing that there is no waste liquid.

(Prevention of Overcooling by Water Injection)

Generally, it is the fact that the lower the NOx the more desirable it is, when cooling of the flame progresses by the radical control effect by water injection the combustion will not be completed, as mentioned above, it will become the cause of increase of CO or HC. It is clear that by evaporation latent heat absorption effect of water in primary flame belt, and water injection of the same quantity as the time of additive-free is performed where the flame temperature of a secondary combustion region has already descended, there is a high possibility that the fault by over cooling will occur.

(Addition of Waste Liquid to Water Injection Line and Prevention of Overcooling)

In this case, although this is the general technique which controls the amount of injection of water spray and prevents over cooling, in this composition In order to increase the amount of processing of waste liquid and to raise efficiency position, the waste liquid which was pressurized with the waste liquid pump 279 and mixing the waste liquid which was controlled by the waste liquid flux adjustment valve for water injection from the waste liquid tank with the mixed vessel 10 into water injection line, as a result it reduces the amount of water spray, and conversely by secondary combustion of waste liquid measuring increase of a calorie, the flame can be stabilized. In addition, since mixtures here are water and alcoholic solution and they serve as dissolution dispersion, it is sufficient for the simple static type vessel like injector mixer etc. Moreover, injection at this point is desirable for a substance that has high fractionated hydrocarbon system waste liquid which cannot form the benzene environment easily by the thermal decomposition less than C6 and if hydrocarbon etc with a big molecular exists, by the radical control effect by low-temperature steam, the thermal decomposition will not progress and it may be the cause of generating dioxin and it must be noted for care.

(Summary of General Emulsification Method)

Naturally, it is necessary to control by the speed in which the load flattery speed of a gas turbine is not lost, these composition is easy by the development of the electric device for example the sequencer which makes the start the protocol by PID and fuzzy reasoning combination. Thus, while using the main burner and water spray nozzle in parallel as a result efficiency improves by decreasing sharply the amount of water added maintaining ideal combustion to using together, it is also the outstanding example of application that can use the thermal energy of waste liquid effectively, which is impossible task for the boiler which is low-pressure combustion and an excellent example in which for 1 amount of fuel, it is possible to exceed 1 amount of processed waste liquid. Moreover, if a water spray nozzle is used, it can be applied also in the gas turbine engine which has adopted gas combustion, and the application range will spread.

[Division Mixing Method]

(Rich-Lean Combustion Theoretical Burner)

Fig. 15 shows by the rich-lean combustion theory or thin combustion theory, in order to aim NOx reduction the air ratio (before or after a theoretical this quantity ratio) which is the generating peak of NOx is avoided and it is an example of application to a gas turbine without the water injection NOx reduction means. In this type of burner, it has two or more auxiliary burners besides the main burner, and while maintaining the fuel ratio of the main burner and each auxiliary burner, to maintain the oxygen concentration of the primary flame belt below this quantity ratio with which existing NOx has a tendency to increase which exists in the lower part of the main burner and controlling the amount of NOx generated and the flame of an auxiliary burner controls the rise of flame temperature by thin combustion.

(Addition of Waste Liquid Combustion Burner for Water Injection Line)

Especially the burner that takes this combustion form if water exists in an auxiliary burner flame, there is a tendency to provide obstacle to thin combustion, and the mixture to this burner has heat calories equivalent to fuel, such as an organic solvent, and it is convenient to have waste liquid of high (the flash point is low.) volatility. Namely, burner which burns in diffusion combustion theory, and there is hardly any point in adding water further in some case, evaporation of liquid fuel is controlled and may be the cause of a fault. Although this changes also with combustion load regions generally, in a thin combustion region, while the temperature conditions and air ratio generally have severe restriction oxidation reaction (intense radical) is caused, which controls the rise of flame temperature since it is the technology to aim at reduction of NOx, like water, if the effect of radical control has occurred in an ignition domain, there is a high possibility of incomplete combustion. Moreover, this theory is not the diffusion combustion form of general liquid fuel, since it is based on premised on the pre-mixed combustion form being the same as combustion of gas, volatility is low and unsuitable for processing of the lubricating oil which has a tendency of containing residual carbon.

(Addition of Waste liquid to Main Burner)

Since it is the usual combustion theory, there is no problem with the fuel containing water, although it must be controlled to the level that there is no problem for a source of ignition of thin combustion and control the quantity which is not a problem for maintaining the flame. Moreover, for middle to low combustion region, air-fuel ratio in the ignition region rises, therefore if less than 50% load, it is better to control the irrigation to the main burner, in order to prevent incomplete combustion. Further, if the amount of air near the main burner can be adjusted according to the combustion load there is nothing to limit.

(Embodiment of Rich-Lean Combustion Burner)

Fig. 15 shows an example of application in the gas turbine which does not have water spray nozzle which lowers NOx by such the rich-lean combustion. In fuel tank 1 heavy oil is stored, this is pressurized by the fuel pump 2, and the fuel flux adjustment valve 4 is performing fuel flux control so that a dynamo output may be made to follow load. The function of distribution valve 195 is complicated, firstly, fuel supply is performed only to the auxiliary burner 263, and a lighter will light it and performs diffusion combustion in an ignition region. If load goes up a little, fuel supply will be performed to the main burner 22, and all burners will perform diffusion combustion. If the load is just over or just below 50%, initially apply fuel supply only to a main burner after extinguishing an auxiliary burner, reduce the ratio of the main burner while injecting fuel again, a pre-mixed combustion flame is formed in the circumference of the main burner flame belt, and overly thin combustion can be realized.

Therefore, a waste liquid injection control device must realize this process, and must carry out injection operation of waste liquid exactly and correctly.

(Examination of Waste Liquid)

In the waste liquid tank 11 isopropyl alcohol solution is stored. In the sub-waste liquid tank 21 the mixed solution of ethyl acetate, toluene, and methyl ethyl ketone is stored. Although both of these are the waste liquid which collected the organic solvents diffused in the atmosphere by the activated carbon adsorbing method, and carried out steamy extraction like the printing process, they use that isopropyl alcohol dissolves in distilled water, and divide it into water-soluble waste liquid and solvent system waste liquid. Since solvent system waste liquid hardly contains moisture, there are little ratio change of each substances it is certain that there is no problem for this combustion system. With the main waste liquid, since the amount of moisture may change with change of temperature, or the states of steamy condensation equipment, by specific gravity measurement etc although the concentration should be made to fix concentration if water is contained, since thermal decomposition will progress by radical action it should be possible to process, even if impurities with much carbon mix.

(Examination of Waste Liquid Injection Load)

In principle, to inject the above-mentioned waste liquid it is desirable to realize it after overly thin combustion. That is, in ignition process according to the situation of a combustion state fuel flux changes quickly, that is because it is not the regular flame state but the flame stability is bad.

Although the control means which injects proportionality of the waste liquid of each fuel line of the main burner and an auxiliary burner is not described in a figure, it is common knowledge to use a target ratio changing time controller, or a cascade formula proportionality operation machine, etc.

[Application to Gas Combustion]

When the burner in a gas turbine is a gas burner, as a low NOx means if it has water injection equipment, waste liquid disposal is possible by waste liquid pouring to a water spray line. However, because the fuel joins a secondary combustion region it is desirable to control the amount of waste liquid injection by taking care of the increase of NOx and it is desirable for a water injection control valve to also carry out feedback control from a continuation NOx meter. Moreover the spray type in the second half of the combustion, it becomes impossible to have sufficient thermal decomposition reaction, and it is desirable not to use the hydrocarbon beyond C which by heat condensation there is a higher risk for benzene ring to generate.

[Embodiment of Diesel Engine]

[Water Emulsion + Vegetable Oil + Lubricating Oil]

Although Fig. 16 has adopted water emulsion fuel as a measure against NOx reduction for a medium size diesel engine with a Bosch type injection form of A heavy oil operation, in order to raise lubricity and cetane number, vegetable oil is added and they are corrosive protection and the embodiment which is using the waste oil of lubricating oil as an emulsifier.

A heavy oil of these days is demanded mainly for uses for burners, such as a boiler, and thermal efficiency is raised, or since the request of low sulfurization is also strong, desulfurization has been progressed, and fuel oil with many aromatic series type ingredients is increasing. For this reason, when seen from the cetane number, it could not necessarily be called good fuel, but when used with a low NOx means to reduce the cetane number, like especially water emulsion combustion, by the factor, like premixed time becomes long, it was easy to cause the smoke color improvement effect, decline in efficiency, etc.

When vegetable oil is mixed in this emulsion combustion system, although vegetable oil has the straight chain structure of the unsaturated system around 16 to C 18, it is close to cetane C 17, and since an unsaturated group tends to serve as a free radical, moreover, it has the effect which raises the ignition nature of a diesel engine. For this reason there is also an effect in smoke color improvement, measuring lowered NOx by high hydrolytic ratio operation by emulsion combustion.

(Synergistic Effect of Water Emulsion and Vegetable Oil)

Water emulsion can never ignite oil droplets, if water does not evaporate. Although emulsion fuel injected in engine is carried out atomization by the high temperature of an engine room by fine explosion of water, and it will reduce the temperature on the surface of oil droplets, and will control the radical chain reaction of hydrocarbon. For the reason, in the case of A heavy oil of low cetane number, increasingly ignition will be overdue, and decline in efficiency is invited due to the time retard effect. By vegetable oil, there is an improvement and ignition delay decreases.

However, since vegetable oil contains many unsaturated fatty acid and it has comparatively big molecule structure about C17, the value of H to C is insufficient and tends to generate particles of soot. However, since the emulsion fuel after kindling coal is made by ignition, as explained already, it demonstrates the excellent low particles of soot nature, it can lessen the obstacle by addition of vegetable oil.

Furthermore, vegetable oil has an unsaturated group in the middle of molecule structure, and since it has glycerin and a water-soluble factor there is a function to stick to a surface of metal, and to raise lubricity. Therefore, the shortage of lubricity is covered by high hydrolytic ratio and this can be supplemented with the lubricity of vegetable oil.

(Synergistic Effect with Lubricating Oil)

Waste lubricating oil is generated with the engine itself. When engine lubricating oil is used for a fixed period a pure ingredient, the degree of oxidization, etc. in lubricating oil will increase, it must be exchanged periodically since it stops bearing lubricious for engine, generally these also serve as waste. However, on the level of waste lubricating oil which is all under very strict management, it is not the level which cannot be used at all, and usually it is discarded with a remarkable margin.

For this reason, in lubricating oil, the pure distribution ingredient, anti corrosion ingredient, and the oily improvement ingredient are fully contained. If this lubricating oil is added to the above vegetable oil water emulsion fuel, while distributing the sludge which originates in mixture of vegetable oil and is generated, the corrosion of the steel materials by the peroxide produced by oxidization of vegetable oil can be prevented, and the corrosion by water, and oily nature decreases, and the action of emulsification of water can be given. Although many of the lubricating oil used with low sulfas A heavy oil has low ash from the beginning, in order to use in this, to use the lubricating oil with low ash contents and low chlorine is desired.

In addition, when lubricating oil runs short, refined waste lubricating oil, such as a privately-owned car may be used, and if employment of the Act of Disposal of Waste Matter becomes flexible by enactment of this patent etc., by removing sludge contents, it will become the reuse method which is not by a mere thermal recycle.

(Embodiment of Vegetable Oil Water Emulsion)

Fuel stored by the fuel tank 1 is pressured with the fuel booster pump 167, and is measured by fuel flux meter 5, via the mixed vessel 10 and a strainer 8. This is the supply line of an engine system. The fuel which passed over the supply line is pressurized with a fuel pump 2 and via a mixer 20, and then sent to the injection pump 218, and pressure adjustment is carried out with the pressure adjustment valve 3, and returns to a fuel pump again and this is the circulation line of an engine system. It is the circulation line of the emulsion fuel with which the injected water particle exists in the circulation line. The injection pump 218 sets the fuel of the circulation line by the timing of the fuel cam 216, and injects it into a cylinder by the injection valve 219.

In case of a diesel engine with the Bosch type injection mechanism, by the mechanism of an injection pump which is filled up with the fuel on more than the maximum discharge amount) in a plunger with the speed adjustment vessel which is called control rack, the function which breathes out fuel to a circulation line in the middle of injection, and interrupts spray since the circulation line is surely required, emulsion is conventionally materialized by the in-line proportionality controlling system. Therefore, even if target ratio changing time control etc. is unnecessary, and even the water is set instantly to 0 or 50%, since a circulation line system serves as a buffer, faults, such as boiler and gas turbine are not caused.

However, in the intense situation of load fluctuation which becomes low combustion rapidly or becomes high combustion, even if it stops water supply it does not mean that emulsion fuel is exhausted immediately, since it progress emulsion fuel of a circulation line is gradually diluted by pure fuel is followed, under such load fluctuation, it is necessary to also examine the propriety of water supply.

- Proportionality injection of water

The water stored by the water tank 163 is distilled water. If soft water is used for additive water, even if it distills the jacket water of a diesel engine in one step, sufficient quantity of distilled water can be obtained. By performing rotation speed control with a vane type pump, flux control is possible for a feed pump 164, it is the cascade control which set the signal of a fuel flux meter as PV and the hydrolytic ratio setting signal to SV, and rotation speed control is carried out. Water supply flux meter 168 is used as a feedback signal control of this cascade control. As this control was mentioned above, it can also respond conventionally like PID type of control which is a bad control of a response. The water by which proportionality control was carried out is supplied to a mixer 20, and is emulsified.

- Proportionality Injection of Vegetable Oil

Vegetable waste oil is stored by waste liquid tank 11. Since vegetable waste oil is weak to the heat shock after mixture as the embodiment of a boiler showed, the temperature rise is set beforehand within a tank to the proper spray viscosity of engine. The waste liquid pump 12 can apply the usual gear pump. However, the vegetable waste oil stored for a long period of time oxidizes to be acidic, it is desirable to use vegetable oil with out long-term storage. And this is also mixed with fuel with the mixed vessel 10, rotation speed control is carried out by the cascade control using the fuel flux meter,

- Proportionality Injection of Lubricating Oil

Lubricating oil waste oil is stored by sub-waste liquid tank 21. Since lubricating oil is required at about 2% to the amount of fuel (sum total of A heavy oil and vegetable oil), a diaphragm type pump is used and this is also by cascade control using the fuel flux meter signal, and a ratio setup is performed by the number control of pulses.

- Function and Procedure for Mixture of Vegetable Oil and Lubricating Oil

With lubricating oil, vegetable oil joins fuel and is filtered through a filter. As mentioned above in lubricating oil, a peroxide or peroxide decomposition agent which protects steel materials from an oxidization prevention agent is contained, which removes the obstacle of the oxidized vegetable oil, and to be prepared for the generated non-free radical products (peroxide which turned harmless) to become sludge, it is desirable to mix before filtering.

- Function and Procedure after Water Injection

The desirable position of a mixer is latter part of the secondary strainer 8 which exists in a circulation line. That is, in the portion like a strainer when there is a possibility that a huge particle may be formed by the precipitation phenomenon in the slow flow velocity, and such a water particle is supplied to an injection pump, it becomes a cause of poor lubricous. The risk of huge particle formation decreases by passing a filter and arranging a mixer just before an injection pump.

The vegetable fuel by which pressurization is repeated with an injection pump although it is easy to carry out radical caused by the oxygen of the very small quantity contained in water etc., a peroxide is removed by the oxidization prevention agent by which these are also contained in lubricating oil, and sludge generating is also controlled by the distributed pure agent in lubricating oil.

(Conclusion of Vegetable Oil Emulsion)

As mentioned above, this combination is the outstanding method with which each strong point and weak point of water, vegetable waste oil, and lubricating oil are supplemented with each other's feature, by measuring low NOx low particles of soot, while collecting the thermal energies of vegetable oil and lubricating oil and since it also improves flammability, while, it can also control generating of dioxin lower than before.

[Use Control of Direct Water Injecting Method]

This is one form of process of the waste liquid for the diesel engine which the inventor predicts based on radical theory, but the actual proof is not carried out.

Fig. 17 is the injection holder which water injection line 266 is added to the injection valve. The fuel supplied to the high-pressure line 294 assumes 50% water added emulsion fuel of C heavy oil. This emulsion fuel, when fuel is lit, excellent nature of low NOx low particles of soot are shown but, there is a tendency for the ignition delay to become bigger and a particles of soot value and the smoke color compared with the best hydrolytic ratio of 20 to 40% there is an little aggravation tendency.

The methyl alcohol waste liquid of about 60% concentration is stored in waste liquid tank 11. Cetane number is very low in methyl alcohol, and it cannot carry out self-ignition easily with the compression heat of a diesel engine. Furthermore, if the water is added to this, with steam radical restraint will create a harder state of condition for self ignition.

The fuel pressurized with the waste liquid pump 12 is measured by the waste liquid flux meter 15 via the mixed vessel 10, and since this flux meter can also perform specific gravity measurement simultaneously with a mass flux meter, by proportionality controlling the feed pump, and making mass regularity making methyl alcohol concentration to 30%. Dilution alcoholic waste liquid is further pressurized with a circulation pump, and is pressurized by the waste liquid pressure adjustment valve 13 to pressure of about 1 MPa. The electromagnetic valve 48 injects the waste liquid through 4 cycle engines inhalation process via only the defined time in water injection line to the combustion chamber. Since the combustion chamber is almost close to natural pressure and a burner can spray waste liquid by slight pressure, the equipment is also light in order that near combustion chamber pressure may act on anti reverse valve 50, at 10 MPa, the equipment is required to be designed to bear it. Especially if spray timing is among an inhalation process there is no problem and also the response delay by the inertia of a valve etc. by the nature of the electromagnetism is not a problem.

Since the methyl alcohol sprayed in the combustion chamber is hydrocarbon of a low molecule, even if it is influenced of 400 to 500-degree C heat, it does not compound dioxin. When the compression process starts, free radical will occur everywhere which the methyl alcohol is evaporated under the influence of heat and will become unstable, however there is no possibility of self-ignition because of the amount of molecular is few and concentration is controlled. That is, even if it receives O radical activated on the conditions of generation of heat and high pressure, it will only form methyl radical of CH3+ and H+, and moreover, H+ will be neutralized by OH.. And with in this temperature and a pressure region, since steam has not turned in to radical, it acts on a control side and a chain reaction is not produced.

When it becomes injection time, although fuel of 50% (water ratio 33%) of hydrolytic ratio will be sprayed and fine explosion occur, the sprayed fuel will become radical but, since the methyl alcohol exists which is already unstable, the chain reaction is easily generated, and ignition delay decreases. Although cautions are required, since it is in the state to which mixture progressed if quantity of methyl alcohol is not controlled, will become like a diesel knock and caution must be taken, since there is enough steam the perfect combustion of fuel oil progresses the NOx reduction effect is large.

If the amount of injection into the cylinder of waste liquid is adjusted and if the amount of injection is controlled which does not carry out self-ignition, it is applicable also to waste liquid with higher cetane number. By this method, by mixing in a fuel system like a diesel engine, the waste liquid which lubricity falls or sludge tends to generate can also be processed.

In addition, if this theory is used, it is clear that it is applicable also to the gas engine which the natural gas etc. is used, and a combustion form will be close to gas engine, it is considered to be the outstanding technology which can also expect the low NOx effect

[Ideal Processing Form]

In future the inventor firstly chooses the energy medium by which the energy generated is used effectively, and to bum the various waste liquid which the energy and the consumer have, by choosing suitable industrial combustion the starting point of the waste processing is to reuse the waste as much as possible for a useful energy.

Also in developing the pretreatment means for it, various developments can be expected based on this patent. Although this patent is not describing, if this pretreatment technology develops, industrial waste liquid will surely be able to be applied also to the materials of the hydrogen for fuel cells said to be the energy source of the next generation.

However, the important thing is as mentioned at the column of C heavy oil, alcohol used as materials from a manufacture stage are not high purity, that can be used for a fuel cell, it is considered that it is necessary to remove various impurities, to use for fuel cell. To support the technology that is always clean, how to dispose the impure material will not be materialized if it is not the technology and the two sides of the same coin. Combustion is to collect the energy from the organic matter which is disposed which is called impurities, and in order to prevent increase of the social cost by impurities, it will surely continue to become important positioning.

That is, it is not the means of package collection of the waste liquid is carried out, and burnt as industrial waste treatment, the careful attention must be paid to the process before abandonment turned to reuse, and the effort made to maximize the means to harness the potential which each waste liquid has, since it mitigates and the burden of liquid-waste-treatment equipment can also cut down the amounts of consumption, such as a coagulant, it does not only stop to exhaust gas purification, but this effect will spread to decreasing the water contamination and cannot be measured and found in the effect of curtailment-etc

Fig. 18 shows the composition of synthetic processing based on such a view.

[Low Concentration Food System Waste Liquid]

In the low concentration food system waste liquid tank 241, salt etc. the salt nature drainage which contains about several 100 ppm BOD, is stored. In the desalination organic matter concentrator 251, from this waste liquid containing salt and organic matter with relatively fast decomposition low molecule, the organic matter of high polymer difficult to process is separated, the organic matter of the high concentration is filtered, By this process boiler 38, while mixing to the C heavy oil and disposing, at the same time heat recovery is carried out. The generated steam is used also for power generation with a steam turbine 163.

[Vegetable Waste Oil]

In the plant oil waste oil tank 242 the waste oil of vegetable oil is stored, and heat recovery is carried out while disposing by the small flow-through boiler 58 which performs A heavy oil combustion which performs little heat stress.

[Dairy Products]

In dairy-product tank 243, besides side product discharged from a manufacture line, the dairy product which has expired is stored. Since a possibility that milk protein may solidify during processing becomes high and mostly it will be the cause of NOx, separation removal is carried out with remove protein processing equipment. Since alcoholic fermentation is possible for separated milk sugar, it is sent to alcoholic fermentation equipment 254.

[Juice]

In the juice tank 244, besides the side product discharged from a manufacture line, the juice which has expired is stored. Since sugar content is high in juice, although it is sent to alcoholic fermentation equipment, it is also effective to perform concentration etc. when the degree of sugar is low.

[Alcoholic System Waste Liquid Tank]

The ethyl alcohol containing impurities is stored by the alcoholic system waste liquid tank 245. Although there is no problem in order to make it burn by the boiler etc., in order to consider as the alcohol for fuel cells 189, it is distilled with the alcoholic still 253. Obviously the steam used in this alcoholic still is generated by the various combustion equipment. In addition to this, the fermentation liquid from alcoholic fermentation equipment is also sent to an alcoholic still, and it separates into the high purity of alcoholic solution and alcoholic solution containing high impurities and remaining liquid of fermentation. The alcohol with high purity is used for power generation by the fuel cell and also although it contains impurities does not contain ash etc. aims at heat recovery by the boiler or the gas turbine. The remaining solution of fermentation is sent to a desalination organic matter concentrator, and is divided into drainage and the waste liquid for boilers.

[Emulsion Nature Waste Liquid]

Emulsion nature waste liquid tank 247 stores the emulsion system waste liquid which does not contain ash which is the compressor drain. Therefore it can be used as 181 stored water for a diesel engine emulsion water. Since especially compressor drain is distilled water, it is convenient that it does not contain the ash resulting from water etc, and also compressor oil will achieve a lubricant and act as oxidization prevention, so it is convenient.

[Amin System Waste Liquid]

The Amin system organic solvent is contained in the Amin system waste liquid tank 248. Although these do not have a problem in flammability and it is used also for combustion, a part carries out thermal decomposition using exhaust heat, and takes out ammonia, and while gas ingredient is burnt in a gas turbine 182 uses ammonia as reduction ammonia for denitration equipment. Since the gas turbine is using the fuel which hardly contains good chlorine since it is mixed gasification combustion under high pressure benzene ring which becomes the generating factor of dioxin is not generated, there is no problem even if the NOx generated performs denitration by the ammonia of the Amin origin with NOx of the Amin origin, dry type denitration method.

[Toluene System Waste Liquid]

The toluene system organic solvent is contained in the toluene system waste liquid tank 249. Since this solvent has higher volatility than kerosene it is most convenient as a burner for thin combustion for gas turbines. Compared with gas combustion, liquid fuel which consumes a lot of energy the gas booster is unnecessary, its recovery energy efficiency is good, and its carbon dioxide curtailment effect is also high.

[Lubricating Oil Waste Liquid]

Lubricating oil waste oil is stored by the lubricating oil waste oil tank 250. By changing these matters into low ash contents as much as possible, it is reusable as an additive agent for diesel engines.

[Conclusion of Ideal Processing Form]

As mentioned above, by supplying waste liquid to the most desirable combustion equipment with a desirable form the use of various forms of waste liquid is shown.

[Flow from Offer of Waste Liquid to Processing]

Fig. 19 shows the flow of processing waste liquid with industrial combustion equipment. For the engineer who has special technical knowledge about each processing or judgment, respectively, they are realizable contents by referring to the item of the present invention.

[Pre-application inspection item] 171

It is the examination of a waste liquid type 72 which should be first accomplished by the waste liquid processing request 71. With regard to this technical knowledge the engineer who has this technical knowledge should examine the subject, the engineer who has the knowledge about the process of the waste liquid which manufactures it, and the technical knowledge which conducts the investigation 73 (knowledge over composition analysis) of those composition, the investigation 74 (knowledge over physical-properties analysis) of physical properties, and investigation 75 (knowledge over mixed characteristic investigation) of the mixed characteristic.

Smooth employment is possible even if there is no knowledge over the present invention who requested it, generally when the receiver of this request as shown in the column of examination of a waste liquid type, creates the questionnaire for indicating the ingredient which should serve as reference of composition or physical properties, requests at this time to the engineer to fill in.

Moreover, cautions are required when the examination is progressed to work together with the engineer who have the knowledge of handling the deadly poison, and the knowledge about handling of a radioactive material if needed, since the investigation of composition, physical properties, and the mixed characteristic itself may become dangerous,.

After each investigation is completed, based on the data selection 77 of the industrial combustion equipment should be performed in the rational pretreatment means 76. After examining the cost and the presumed value of harmful substance concentration, the selection of the most rational pretreatment means is, by having the knowledge over a water processing field, the knowledge over a distillation field, the knowledge of a surface-active agent field, etc. It is necessary to synthesize the knowledge of a boiler field, the knowledge of a gas turbine field, the knowledge of a diesel engine field, the knowledge of various incinerator fields, etc., and to select most rational combustion equipment among the combustion equipment which can be applied.

In addition, cautions are required, if you do not have a certain amount of technical knowledge of the performance expected for each clause of application examination item, when it progresses to the following step, it will become an unsatisfying factor.

And by this examination, a rational pretreatment means shows that a merit is large to the client for example who has the waste liquid processed by this method, which all required costs including the pretreatment means are deducted from the cost, compared with the case where request is made to discard it by the waste liquid processing contractor. And when a rational pretreatment means is not found in an examination stage, it is also important principal items to judge that processing of waste liquid cannot be performed.

[Pre-Application Prerequisite Item] 172

This serves as a precondition with important the industrial target combustion equipment showing the ideal combustion state in the combustion load region of at least one point. That is, in all combustion states, in the combustion equipment which cannot attain an ideal combustion state, as long as there is no expectation that those combustion states improve certainly by pouring in waste liquid, it is because it is dangerous in many cases to pour in waste liquid.

[Application Examination Item] 173

This is an item required for the examination for attaining the above-mentioned two items and for actual application.

(1) Pretreatment Means

In the examination 79 of a pretreatment means, it is necessary for the engineer who has the knowledge of above-mentioned examination, to perform concrete examination so that rational pretreatment may become target composition value and physical-properties value, and the conclusion that a pretreatment is unnecessary is also an important conclusion. The processing under examination of a pretreatment means shows the processing in the case of carrying out as a result of examination. The same is said of each processing shown in the right.

However, including filtration a pretreatment means is the most important technology among these technologies, moreover a rational pretreatment is unrealizable if you do not have various technical knowledge. For example, the waste liquid containing sugar has scorching nature, it showed that it was inapplicable by a gas turbine or a pressure spray type burner with a diesel engine or injection valve form. However, if alcoholic fermentation of this is carried out, it can process as safe waste liquid. However, the method of making alcohol from sugar can be achieved by not only fermentation but the oxidization which used the catalyst etc. and we need to select the pretreatment method that considered being the most rational by these utilization or the research result.

(2) Injection Method

The examination 80 of the injection method, although the engineer who has the knowledge over injection equipment takes the lead and examines the injection method, when there is corrosive concern, the knowledge over the corrosive protection nature of equipment is also required.

(3) Mixing Method

The examination 81 of a mixing method, the engineer who has the knowledge of mixed equipment should examine it and the knowledge over the corrosive protection nature of equipment is also required

(4) Air-Fuel Ratio Control Method

The examination 82 of the air-fuel ratio control method, the engineer who has knowledge of mainly corresponding to waste liquid calorific value and an instrumentation control field and injection equipment needs to examine mutually.

(5) Optimization of Combustion Equipment

The examination 83 of optimization of combustion equipment has the knowledge of a burner field, also mainly required for it in consideration of the scorching nature of waste liquid etc and if necessary, change and improve the combustion equipment etc.

(6) Examination of Low NOx Means

The examination 84 of a low NOx means, the engineer who mainly has the knowledge of a burner field, a fuel field, and a mixed field needs to perform existence of application of a low NOx means, and improvement if needed.

(7) Examination of Additive Agent

The examination 85 of an additive agent when waste liquid and its solvent take emulsion distribution, if needed, examination of the propriety of application of an emulsifier should apply, in order to improve corrosive and the lubricity of waste liquid, if needed these prevention agents[*]are applied,. The engineer who has this knowledge of a surface-active agent field, corrosive protection, and a lubricous field examines.

(8) Examination of Water Emulsion

The examination 86 of water emulsion must be examined by an engineer with the knowledge of mixed equipment, composition analysis, physical-properties analysis, and a burner field who must consider that the purpose changes when it is used for NOx reduction or used for reduction of particles of soot, or the objective may be both, and also consideration must be taken for the amount of water contained in the waste liquid.

[Post-Application Operation Item] 174

The injection ratio adjustment 151 and the change adjustment of injection ratio 152 are very important items when each item of the above-mentioned application examination item is functioning on favorable condition, and waste liquid processing is employed safely and efficiently. By the following adjustments, the oxygen concentration deviation prevention 153, the maintenance of ideal combustion 154, the obstacle prevention to a combustion means 155, the obstacle prevention to combustion equipment 156, control 157 can attain the change of particles of soot concentration within a regulation value, when it cannot be attained, as in the flow, perform the injection ratio adjustment of injection, and ratio-of-change adjustment again and it is required to rectify these for suitable performance.

About each item, the knowledge of injection equipment, mixed equipment an instrumentation control field, and a burner field and a technical field of the industrial combustion equipment set as the other objects together with the knowledge of exhaust gas analysis field etc. is needed.

Moreover, when the means of an application examination item becomes unusual, or each item before the pre-application prerequisite item and the pre-application inspection item is not normal and the obstacle resulting from these can also be prevented by the method of stopping injection using the abnormality interlock information 176.

Care must be taken to the pre-application prerequisite item, for example the abnormalities of the process which discharges waste liquid. Moreover, in an application prerequisite, failure or the abnormalities of failure of the industrial target combustion equipment itself, and application examination items with various equipment or a means which is out of order or abnormal.

Regarding the method of ceasing the injection or the technique of adjusting a stop, it is realizable by the method of receiving the information on the continuation analysis machine which injection equipment receives the unusual signal of each item, for example, it can be supervised comparatively easily by physics, such as specific gravity, pressure, vibration, temperature, viscosity, pH, oxidization reduction potential, electrical conductivity, the degree of muddiness, the degree of color, and color, and the chemical technique.

Moreover, not only the abnormalities about waste liquid but also abnormalities about combustion means, the abnormalities of air-fuel ratio control, etc., should be take into consideration, about risk authorization of unusual occurrence, the engineer who has the technical knowledge about each item needs to determine the processing method (should you stop injection of waste liquid or in what quantity should control) based on a risk.

And the result obtained by this appearance is employment 87, and it can be presumed that the employment result obtained by this appearance is, fundamentally even if it does not perform the following post-application check item that from which the processing result expected by the post-application check item is obtained.

[Post-Application Check Item] 175

Specifically being carried out if there are the dioxin measurement 158, NOx-SOx and particles of soot measurement 159, the measurement of heavy metals 160, and in addition concern of discharge of a detrimental ingredient peculiar to the waste liquid processed, and the measurement result being recognized socially or legally and also the possibility of inhaling the exhaust gas ingredient from the chimney being the range which protects the health of an employee and neighborhood residents.

[Danger of Partly Diverting Technology]

For example, when application of waste vegetable only by saying waste vegetable oil, and various investigations to start of with composition analysis is not made, if only application of a mixing method was diverted and composition of waste vegetable oil is suitable for application coincidently, it can apply without a problem. However, when it is going to process waste vegetable oil which contained salt etc. in such employment, it is clear that when applied, it becomes the generating factor of dioxin.

Moreover, in a manufacturing process, usually, although neither a toxic substance nor heavy metals should not be discharged as waste liquid, in a process with a certain trouble of manufacture line possibility of flowing, even if there is neither toxicity nor a heavy metal in an analysis means, when those evasion means are not provided, an operator and neighboring residents may be exposed to danger.

Therefore, in the present condition, in the waste liquid incineration method in the industrial combustion equipment which seems to be successful it becomes the outstanding technology which can avoid social various risks by applying on the right knowledge based on the present invention.

According to the above-describe embodiments, following advantages can be obtained.

(1) By examining the pre-application inspection item 171, the pre-application prerequisite item 172, and the application examination item 173, and performing the post-application operation item 174 and the post-application check item 175 since the environment which dioxin generates is eliminated, it can carry out as the incineration treatment method of waste liquid of having used the industrial combustion equipment which prevents generating of dioxin.

Incidentally, the scope of the present invention is not restricted to the above specific embodiment, but includes modifications and improvements as long as an object of the present invention can be attained.

[Experiment Data in an Examination Furnace]

If the above technology is employed exactly, in principle, an object of the value in which the dioxin concentration which the industrial combustion equipment which changes is expected is maintained, and a NOx value and the amount of particles of soot required of the industrial combustion equipment concerned is kept.

[Outline of Examination Furnace]

Examination furnaces are manufactured as boiler furnace load 300,000 Kcal/h and a combustion chamber capacity 700mmx2500mm round shape furnace, and in general by imitating the combustion chamber of an overhead fire tube boiler. In order to cool the combustion chamber exterior by the cooling water around 30 degrees C, Compared with a boiler it is cooled too much, according to the water-cooled wall of steam pressure power of about 1 MPa the thermal insulation made from ceramic fiber is lined, and furnace temperature has secured 900 to 1000 degrees C. the amount of combustion at the time of an experiment is 30 L/h, and the boiler furnace load which the was calculated was about 140,000 Kcal/h, was equivalent to 23% of rated boiler furnace load 600,000 Kcal/h (except for a small flowing-through type boiler) of the usual boiler, and became considerably an experiment in a low combustion domain. It was experimented in the burner which was an internal hybrid model air spray type burner, it is amount of spray air 440m3/h air pressure power 0.04MPa, and air temperature in normal temperature and the pressure in a furnace by about 40 mmH(s)2O.

As shown in Fig. 9, the amount of generating of NOx shows the general value as a burner which does not lower NOx so that the NOx value of the Amin system waste liquid of (7) is an exceptional value as nitrogen part concentration also shows. By the unchanged nitrogen factor of other A heavy oil and the test sample the NOx value is decreasing according to the radical control effect of water emulsion .

Fig. 20 measures the oxygen concentration under experiment, and the total amount of chlorine in CO and HCl, and fuel. Each sign in Fig. 20 shows (1) A heavy oil independent, (2) tap water, (3) tannin system medicine boiler blow water, (4) tea extraction waste liquid, (5) juice waste liquid, and (6) alcoholic system waste liquid. The amount of chlorine of A heavy oil was 5.5 ppm. About the tap water (2), during the 5 hours experiment mysterious phenomenon occurred about for 40-minute. Although the vertical axis of this figure is showing %, ppm, and the value in which a unit differs from twice, respectively, it is to show the correlation of these values. Moreover, the straight line is drawn to express correlation in Fig. 20. This straight line is based on the data except (2).

Moreover, since O2 and CO are the average value of measurement time over 5 hours, if various disturbance elements are taken into consideration, it is believed that producing some error in a final value does not have sense of incongruity especially in a person concerned.

[Change of Inexplicable Oxygen Concentration]

At first oxygen concentration rose by unknown cause, and went abruptly up to 12% of oxygen concentration. Although noticing abnormality, and was going to correct oxygen concentration to proper value, a combustion state is bad and CO concentration rose to a maximum of 1300 ppm. Since this unusual phenomenon continued for about 30 minutes, and after that oxygen concentration fell rapidly and produced emitting smoke, although a dioxin sampling and measurement of CO and O2 were stopped, 10 minutes after that, it returned normal, and measurement was continued.

(Passage of Typhoon)

Although it is normal in fuel flux or a combustion monitoring item, a cause has not been specified, it was confirmed from subsequent data that around 2001/09/11 11:00 to 11:40 where the experiment took place, typhoon had passed in the sky in Chiba, and air pressure for combustion and that the resistance in a furnace is also low turned out that the pressure inside the furnace fell and a combustion state got worse conjointly. For this reason, the result of the examination shows that CO is the highest value, originally the tap water should be equivalent to A heavy oil or blow water.

[Dioxin Toxicity Equivalence and Its Evaluation]

Fig.21 shows the plotted correlation of toxicity with the chlorine concentration in fuel. Each sign in Fig. 21 shows (1) A heavy oil independent, (2) tap water, (3) tannin system medicine boiler blow water, (4) tea extraction waste liquid, (5) juice waste liquid, and (6) alcoholic system waste liquid. Any data shows the value of 1/50 to 1/200 of the standard point of an incinerator, and is shown that this processing method is the safe processing method. If the result of the tap water of (2) is removed, it is also characteristic to become the chlorine concentration in fuel and a beautiful straight line relation. Although the result of tap water will be given next in detailed description, an idea colander is not obtained as the unusual combustion by the influence of a typhoon. Moreover, with (6) alcoholic type waste liquid, there is also characterizes (1) A heavy oil independent has low equivalent toxicity equivalence and it shows that if the chlorine amount is low, it can attain by controlling the amount of generating by rationalization of the buring method

In addition, the curves which connect each plot value of this figure are to show the above-mentioned facilities for the influence of typhoon. Although the approximation line which represents the straight line of the middle part of variation in the value is generally added by such plotting method, the data of (2) intentionally added such curve to this data in order to recognize the value which should be disregarded.

(Toxicity Equivalent Feature of Heavy Oil, Tap Water, and Blow Water Sample)

Fig. 22 plots toxicity value of the whole ingredient of (1) A heavy oil, (2) tap water, and (3) blow water. About coplanar PCBs, all are upward slants to the right in the turn of (1), (2), and (3). Biphenyl. Structurally biphenyl is the origin of coplanar PCBs does not have oxygen in combination of a benzene ring, and it is thought that it is easy to generate near a oxygen quantity ratio. In this examination since combustion management was carried out for the purpose of 4% of oxygen concentration, compared with a common incinerator, the over-air ratio is very low.

Since this examination was carried out under strict combustion management except for the influence by the above-mentioned typhoon, and the amount of generating of biphenyl which do not have chlorine coordination is presumed to have few changes in combustion of all test samples in this examination, it becomes with the pure experimental situation which measures in a relation with the increase in the amount of chlorine, is considered to have brought the experiment result, hard to suspect the correlation nature of chlorine and the amount of dioxin generating.

Moreover, this thing could be evaluated also as a factor in a boiler which usually showed the predominance of the waste liquid processing in low oxygen concentration combustion of a region at the time of combustion, and considered that the oxygen concentration becomes higher around the low combustion region which is shown that an equivalent toxicity risk tends to become high.

(Difference in Ingredient Distribution among Heavy Oil, Tap Water, and Blow Water Sample)

Fig. 23 shows the generating distribution of all (the reference value below a fixed quantity minimum is also included) the dioxin more than a detection minimum. When comparing (1) heavy oil with (2) tap water and (3) blow water, dibenzodioxins and dibenzofurans of (2) clearly differs from(1) and (3). Differences are the abnormalities for about 30 minutes in 5 hours, and although it is never a high value as a toxic equivalent level, the result showed unexpectedly the dioxin generating risk by incomplete combustion (a substance with high equivalent toxicity concentration is easy to be generated.) is considered.

[Correlation value of Chlorine and Equivalent Toxicity and Upper Limit of Control Concentration]

The tap water as an exception in Fig. 21 (2), it becomes possible for the remaining plot values approximation function toxic equivalent (pg/Nm3) =0.x chlorine ppm to apply moreover, it is a value with the high degree of straight line which will be 1700 ppm or less in concentration, if proper operation management is performed, it will become possible to operate in the severest concentration standard in a waste liquid incinerator of / 0.1 ng(s)/Nm3.

[Conclusion of Embodiment]

All waste liquid used for the test in the present embodiment is from an actual consumer, and at present it is processed with industrial waste or liquid-waste-treatment equipment. In future the expectation of a consumer is due to be met by the outstanding energy-saving nature and outstanding low-pollution nature, controlling generating of dioxin by the right disposing method based on this processing method.

## Industrial Availability

The present invention can be used as the incineration treatment method for waste liquid and the mixed solution in the industrial combustion equipment which carries out the processing of waste liquid produced along side the production equipment in factories, etc., and the industrial activities of medical and research institutions, etc.

## Claims

1. An incineration treatment method of a waste liquid using industrial combustion equipment, the method comprising the steps of:

   when using the industrial combustion equipment having a combustion means for combusting a liquid fuel and performing an incineration treatment by carrying out mixed dispersion of the waste liquid into the fuel, performing in advance an examination of a waste liquid type of the waste liquid to which the incineration treatment is performed as well as an examination of composition, physical properties, and mixed characteristics;
   examining a pre-application inspection item that selects an applicable industrial combustion equipment in a rational pre-treatment means, an pre-application prerequisite item that checks the state of a combustion flame of the combustion equipment and composition of an exhaust gas is within a combustion limit showing an ideal state in the equipment, and an application examination item that totally adjusts the pre-treatment means of the waste liquid, an injection method of the waste liquid, a mixing method of the waste liquid, an air-fuel ratio control method of the combustion equipment, combustion device optimization, a low NOx means, existence and kind of an additive, and necessity of combined use with a water emulsion combustion;
   adjusting an injection ratio of the waste liquid and the additive as well as a rate of change of the injection ratio;
   preventing deviation from a regular range of oxygen concentration in the exhaust gas;
   maintaining an ideal combustion state without a phenomenon which suspects the ideal combustion state;
   preventing obstacles to the combustion means;
   preventing obstacles of the industrial combustion equipment by residual substance ingredients after combustion;
   controlling a change of smoke concentration accompanying with the composition of the waste liquid within a regulation value;
   when the pre-application inspection item, the pre-application prerequisite item, and the application examination item deviate from a normal range, stopping the injection or performing a post-application operation item that adjusts to the injection ratio which can rectify the deviation; and
   performing a post-application check item that checks, in a case that there is no dioxin control means by a post-treatment or alternatively before such means, restriction of the dioxin concentration in the exhaust gas to a concentration level expected when the target fuel oil is combusted by the industrial combustion equipment, and also checks capability of operation management of NOx, an amount of smoke dust generated, halogen and heavy metals resulting from the combustion of the waste liquid within a limit permitted for the industrial combustion equipment.

2. An incineration treatment method of a waste liquid using an industrial combustion equipment, the method comprising the steps of:

   using the industrial combustion equipment that has a combustion means for combusting a liquid fuel, a gas fuel or the both at the same time, the industrial combustion equipment including a water injection equipment that has NOx reduction effect by spraying water;
   in the state where water injection is carried out, and when an amount of dioxin generated is at a concentration level expected by the industrial combustion equipment, or is set at a concentration level expected by the water injection by waste liquid mixture, performing in advance an examination of a waste liquid type of the waste liquid to which the incineration treatment is performed as well as an examination of composition, physical properties, and mixed characteristics;
   examining a pre-application inspection item that selects an applicable industrial combustion equipment in a rational pre-treatment means, an pre-application prerequisite item that checks the state of a combustion flame of the combustion equipment and composition of an exhaust gas is within a combustion limit showing an ideal state in the equipment, and an application examination item that totally adjusts the pre-treatment means of the waste liquid, an injection method of the waste liquid, a mixing method of the waste liquid, an air-fuel ratio control method of the combustion equipment, combustion device optimization, a low NOx means, existence and kind of an additive, and necessity of combined use with a water emulsion combustion;

adjusting an injection ratio of the waste liquid and the additive as well as a rate of change of the injection ratio;

preventing deviation from a regular range of oxygen concentration in the exhaust gas;

maintaining an ideal combustion state without a phenomenon which suspects the ideal combustion state;

preventing obstacles to the combustion means;

preventing obstacles of the industrial combustion equipment by residual substance ingredients after combustion;

controlling a change of smoke concentration accompanying with the composition of the waste liquid within a regulation value;

when the pre-application inspection item, the pre-application prerequisite item, and the application examination item deviate from a normal range, stopping the injection or performing a post-application operation item that adjusts to the injection ratio which can rectify the deviation;

performing a post-application check item that checks, in a case that there is no dioxin control means by a post-treatment or alternatively before such means, restriction of the dioxin concentration in the exhaust gas to a concentration level expected when the target fuel oil is combusted by the industrial combustion equipment, and also checks capability of operation management of NOx, an amount of smoke dust generated, halogen and heavy metals resulting from the combustion of the waste liquid within a limit permitted for the industrial combustion equipment; and

injecting a water solution or an emulsion that satisfies the post-application check item.

3. A mixed fluid, comprising:

the waste liquid processed by the incineration treatment method of the waste liquid using the industrial combustion equipment according to claim 1 or 2,

wherein, in the combustion means of the industrial combustion equipment with the combustion means for combusting the liquid fuel or in the industrial combustion equipment, the mixed fluid is manufactured by applying more than one knowledge among the pre-application inspection item, the pre-application prerequisite item, the application examination item, and the post-application operation item to a water injection means having NOx reduction effect by spraying water, and

wherein the mixed fluid so adjusted that:

an average content concentration of an entire spray fluid sprayed to a combustion chamber is in a range not exceeding a limit where a lethal toxic gas ingredient and lethal radioactivity intensity are generally permitted;

a chlorine is in a range of 85000 ppm or less when a total amount of combustion in heavy oil conversion is less than 2000 kg/h, 17000 ppm or less when it is between 2000 kg/h and 4000 kg/h, or less than 1700 ppm when it is 4000 kg/h or more;

an N ingredient is in a range not exceeding a regulation value of NOx of each combustion equipment;

an S ingredient is in a range not exceeding a regulation value of SOx of each combustion equipment;

a heavy metal is in a range not exceeding a regulation value of heavy metals of each combustion equipment;

in the combustion means, an amount of moisture is in a range of 0 to 60%;

in the water spray means, an amount of moisture is less than 100%; and

an ash is in a range not exceeding an amount of ash permitted in the fuel substantially applicable to the combustion equipment, or in a range in which safety has been checked by performing the post-application operation item.

4. The mixed fluid according to claim 3, wherein the mixed fluid includes an emulsion-use water to perform emulsification.

FIG.1

EP 1 482 243 A1

# FIG.2

EP 1 482 243 A1

# F I G . 3

# FIG.4

EP 1 482 243 A1

# FIG.5

203

203

204

EP 1 482 243 A1

# FIG.6

# FIG.7

# FIG.8

# FIG.9

EP 1 482 243 A1

FIG.10

FIG.11

# FIG.12

CLASSIFICATION OF TREATMENT METHOD

Legend:
- NOx
- SMOKE DUST
- EQUIVALENT TOXICITY CONCENTRATION

CHANGE RATE (%)

EP 1 482 243 A1

# FIG.13

# FIG.14

# FIG.15

# FIG.16

# FIG.17

# FIG.18

# FIG.19

# FIG.20

EP 1 482 243 A1

# FIG.21

EP 1 482 243 A1

# FIG.22

DETAILED INFORMATION OF DIOXINS

# FIG.23

EP 1 482 243 A1

# FIG.24

FIG.25

FIG.26

EP 1 482 243 A1

# FIG.27

EP 1 482 243 A1

# FIG.28

EP 1 482 243 A1

FIG.29

# FIG.30

FIG.31

EP 1 482 243 A1

# FIG.32

31    36    37

EP 1 482 243 A1

# FIG.33

FIG.34

FIG.35

# FIG.36

# FIG.37

FIG.38

EP 1 482 243 A1

# FIG.39

## INTERNATIONAL SEARCH REPORT

| International application No. |
| --- |
| PCT/JP03/01321 |

| A. CLASSIFICATION OF SUBJECT MATTER |
| --- |
| Int.Cl$^7$ F23G7/04, F23G5/02, F23G5/50, C02F1/02 |
| |
| According to International Patent Classification (IPC) or to both national classification and IPC |

| B. FIELDS SEARCHED |
| --- |
| Minimum documentation searched (classification system followed by classification symbols)<br>   Int.Cl$^7$ F23G7/04, F23G5/02, F23G5/50, C02F1/02 |
| Documentation searched other than minimum documentation to the extent that such documents are included in the fields searched<br>   Jitsuyo Shinan Koho      1940–1996   Toroku Jitsuyo Shinan Koho   1994–2003<br>   Kokai Jitsuyo Shinan Koho   1971–2003   Jitsuyo Shinan Toroku Koho   1996–2003 |
| Electronic data base consulted during the international search (name of data base and, where practicable, search terms used) |

### C. DOCUMENTS CONSIDERED TO BE RELEVANT

| Category* | Citation of document, with indication, where appropriate, of the relevant passages | Relevant to claim No. |
| --- | --- | --- |
| Y | JP 50-156280 A (Asahi Chemical Industry Co., Ltd.),<br>17 December, 1975 (17.12.75),<br>Full text; Fig. 1<br>(Family: none) | 1-4 |
| Y | JP 57-55312 A (Babcock-Hitachi Kabushiki Kaisha),<br>02 April, 1982 (02.04.82),<br>Full text; Figs. 1 to 4<br>(Family: none) | 1-4 |
| Y | JP 54-152361 A (Babcock-Hitachi Kabushiki Kaisha),<br>30 November, 1979 (30.11.79),<br>Full text; Figs. 1 to 4<br>(Family: none) | 1-4 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>   16 May, 2003 (16.05.03) | Date of mailing of the international search report<br>   03 June, 2003 (03.06.03) |
| --- | --- |
| Name and mailing address of the ISA/<br>   Japanese Patent Office | Authorized officer |
| Facsimile No. | Telephone No. |

Form PCT/ISA/210 (second sheet) (July 1998)

## INTERNATIONAL SEARCH REPORT

| International application No. |
| --- |
| PCT/JP03/01321 |

C (Continuation).  DOCUMENTS CONSIDERED TO BE RELEVANT

| Category* | Citation of document, with indication, where appropriate, of the relevant passages | Relevant to claim No. |
| --- | --- | --- |
| Y | JP 51-109170 A  (Mitsubishi Motors Corp.),<br>27 September, 1976 (27.09.76),<br>Full text; Figs. 1 to 2<br>(Family: none) | 1-4 |
| Y | JP 57-92086 A  (Yakitsu Miru Kyodo Kumiai),<br>08 June, 1982 (08.06.82),<br>Full text; Fig. 1<br>(Family: none) | 1-4 |
| Y | JP 11-325442 A  (Kawaju Reinetsu Kogyo Kabushiki<br>Kaisha),<br>26 November, 1999 (26.11.99),<br>Full text; Fig. 1<br>(Family: none) | 2-4 |
| Y | JP 57-166410 A  (Maruzen Engineering Kabushiki<br>Kaisha),<br>13 October, 1982 (13.10.82),<br>Full text; Figs. 1 to 6<br>(Family: none) | 2-4 |
| Y | JP 57-41518 A  (Yakitsu Miru Kyodo Kumiai),<br>08 March, 1982 (08.03.82),<br>Full text; Fig. 1<br>(Family: none) | 2-4 |
| Y | JP 50-117270 A  (Toyo Tire and Rubber Co., Ltd.),<br>13 September, 1975 (13.09.75),<br>Full text; Figs. 1 to 2<br>(Family: none) | 2-4 |
| A | JP 10-132247 A  (Mitsubishi Heavy Industries,<br>Ltd.),<br>22 May, 1998 (22.05.98),<br>Full text; Figs. 1 to 5<br>(Family: none) | 1-4 |
| A | JP 05-279980 A  (Toshiba Corp.),<br>26 October, 1993 (26.10.93),<br>Full text; Figs. 1 to 12<br>(Family: none) | 1-4 |

Form PCT/ISA/210 (continuation of second sheet) (July 1998)